(19) Europäisches Patentamt
European Patent Office
Office européen des brevets

(11) **EP 2 608 639 A1**

(12) **EUROPEAN PATENT APPLICATION**
published in accordance with Art. 153(4) EPC

(43) Date of publication:
**26.06.2013 Bulletin 2013/26**

(21) Application number: **11818130.4**

(22) Date of filing: **11.08.2011**

(51) Int Cl.:
***H05B 37/02*** (2006.01)

(86) International application number:
**PCT/JP2011/068362**

(87) International publication number:
**WO 2012/023488 (23.02.2012 Gazette 2012/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.08.2010 JP 2010182984**

(71) Applicant: **Sharp Kabushiki Kaisha Osaka-shi, Osaka 545-8522 (JP)**

(72) Inventor: **KAMII, Miwa Osaka 545-8522 (JP)**

(74) Representative: **Treeby, Philip David William et al R.G.C. Jenkins & Co 26 Caxton Street London SW1H 0RJ (GB)**

(54) **ILLUMINATION DEVICE**

(57) An absence timer table for defining turn-on and turn-off operations in an absence timer mode is set (step S90). Then, a current time is checked (step S91). Then, it is determined whether or not the current time is an absence timer control start time (step S92). When it is determined that the current time is the absence timer control start time, absence timer control is started (step S93). Then, in step S94, it is determined whether or not an input instruction has been received after absence timer control is started (step S94). When it is determined in step S94 that the input instruction has been received after absence timer control is started, setting of the absence timer mode is cancelled (step S98). Then, the process ends (return).

FIG.31

**Description**

TECHNICAL FIELD

The present invention relates to a lighting device, and particularly to a lighting device including a light emitting diode (LED) as a light source.

BACKGROUND ART

Conventional lighting devices generally include incandescent lamps or fluorescent lamps, and operations of such devices include turn-on, turn-off, dimming by adjusting output, and turn-on of a night-light (a tiny lamp).
Recently, evolution of light emitting diodes (LEDs) is remarkable, and a high-luminance and high-power LED emitting light of various wavelengths has been put into practical use.
On the other hand, some lighting devices have such a timer function as automatically carrying out turn-on or turn-off in consideration of user's convenience and the like.
For example, Japanese Patent Laying-Open No. 2005-78834 (PTL 1) discloses a case where the function can be used for anticrime measures in such a manner as automatically turning a lighting device on at a preset time as if a user were at home. Specifically, PTL 1 proposes a method of changing a start time and the like periodically or randomly for the purpose of enhancing crime prevention.

CITATION LIST

PATENT LITERATURE

PTL 1: Japanese Patent Laying-Open No. 2005-78834

SUMMARY OF INVENTION

TECHNICAL PROBLEM

On the other hand, it is desirable to terminate the function when the user comes home, however, there is a problem in that the user's convenience becomes poor because troublesome operations are required for terminating the function.
The present invention was made to solve the problem as described above, and an object thereof is to provide a lighting device that enhances user's convenience at the time of termination of a timer function.

SOLUTION TO PROBLEM

A lighting device according to one aspect of the present invention includes an illumination unit, a control unit for controlling the illumination unit, a time keeping unit for keeping time or hours, and an operation portion for accepting an instruction for processing by the control unit. The operation portion includes first instruction means for accepting an instruction about setting/termination of processing for carrying out turn-on and turn-off control of the illumination unit in accordance with the set time by using the time keeping unit and second instruction means for accepting an instruction about different processing for controlling the illumination unit. When the instruction from the second instruction means is accepted after the processing for carrying out turn-on and turn-off control of the illumination unit in accordance with the set time is started based on the instruction about the setting from the first instruction means, the control unit terminates the processing for carrying out turn-on and turn-off control of the illumination unit in accordance with the set time.
Preferably, when the instruction from the second instruction means is accepted after the processing for carrying out turn-on and turn-off control of the illumination unit in accordance with the set time is started, the control unit performs the processing in accordance with the second instruction means.
Preferably, when the instruction from the second instruction means is accepted before the processing for carrying out turn-on and turn-off control of the illumination unit in accordance with the set time is started, the control unit does not terminate the processing for carrying out turn-on and turn-off control of the illumination unit in accordance with the set time.
Particularly, when the instruction from the second instruction means is accepted before the processing for carrying out turn-on and turn-off control of the illumination unit in accordance with the set time is started, the control unit performs the processing in accordance with the second instruction means.
Preferably, the first instruction means accepts the instruction about setting/termination of the processing for carrying out turn-on and turn-off control of the illumination unit in accordance with the time set in a set time zone during a period in which a user is away.

ADVANTAGEOUS EFFECTS OF INVENTION

In the case where the instruction from the second instruction means is accepted after the processing for carrying out turn-on and turn-off control of the illumination unit in accordance with the set time is started based on the instruction about the setting from the first instruction means, the lighting device according to the present invention terminates the processing for carrying out turn-on and turn-off control of the illumination unit in accordance with the set time. Namely, in the case where a user comes home and then performs some operations after timer control is started, the user can cancel the setting of timer control, which enhances user's convenience.

BRIEF DESCRIPTION OF DRAWINGS

Fig. 1 is a diagram showing an exterior configuration of a lighting device 1 according to an embodiment of the present invention.
Fig. 2 is a schematic block diagram illustrating hardware of lighting device 1 according to the embodiment of the present invention.
Fig. 3 is a diagram illustrating configurations of LED modules 31 and 32 according to the embodiment of the present invention.
Fig. 4 is a diagram illustrating one example of a case where LED modules 31 1 and 32 are arranged in lighting device 1.
Fig. 5 is a diagram showing an exterior configuration of a remote controller 50 according to the embodiment of the present invention.
Fig. 6 is a schematic block diagram illustrating hardware of remote controller 50 according to the embodiment of the present invention.
Fig. 7 is a diagram (No. 1) illustrating a main flow in lighting device 1 according to the embodiment of the present invention.
Fig. 8 is a diagram (No. 2) illustrating the main flow in lighting device 1 according to the embodiment of the present invention.
Fig. 9 is a flowchart illustrating processing in a lighting adjustment mode according to the embodiment of the present invention.
Fig. 10 is a diagram illustrating change in color tone according to the embodiment of the present invention.
Fig. 11 is a diagram illustrating a dimming ratio in a light environment control mode according to the embodiment of the present invention.
Fig. 12 shows an operation table illustrating an operation of an illumination unit 30 during each period in the light environment control mode.
Fig. 13 is a diagram illustrating a graph showing a dimming ratio of a daylight color and a dimming ratio of a light color during a period tA according to the embodiment of the present invention.
Fig. 14 is a diagram illustrating a graph showing a dimming ratio of the daylight color and a dimming ratio of the light color during a period tC according to the embodiment of the present invention.
Fig. 15 is a diagram illustrating a graph showing a dimming ratio of the light color during a period tE according to the embodiment of the present invention.
Fig. 16 is a diagram illustrating another graph showing a dimming ratio of the light color during period tE according to the embodiment of the present invention.
Fig. 17 is a diagram illustrating a flow in the light environment control mode according to the embodiment of the present invention.
Fig. 18 is a diagram illustrating times set as a wake-up time, a dinner time, and a bed time in custom setting according to the embodiment of the present invention.
Fig. 19 is a diagram illustrating a custom setting screen on a liquid crystal panel 52 of remote controller 50 according to the embodiment of the present invention.
Fig. 20 is a diagram illustrating a flow of the custom setting according to the embodiment of the present invention.
Fig. 21 is a diagram illustrating a graph showing a dimming ratio in an eco-lighting mode according to the embodiment of the present invention.
Fig. 22 is a flowchart illustrating processing in the eco-lighting mode according to the embodiment of the present invention.
Fig. 23 is a diagram illustrating a subroutine of light emission reduction processing in step S168.

Fig. 24 is a diagram for illustrating setting of an illuminance level.

Fig. 25 is a diagram showing one example of correspondence between a brightness level and a registered brightness.

Fig. 26 is a diagram illustrating a flow in an illuminance sensor mode according to the embodiment of the present invention.

Fig. 27 is a diagram illustrating control at the time of start of the illuminance sensor mode according to the embodiment of the present invention.

Fig. 28 is a diagram illustrating normal control in the illuminance sensor mode according to the embodiment of the present invention.

Fig. 29 is a diagram illustrating a flow in a timer mode according to the embodiment of the present invention.

Fig. 30 is a diagram illustrating an ON timer setting screen and an OFF timer setting screen according to the embodiment of the present invention.

Fig. 31 is a diagram illustrating a flow in an absence timer mode according to the embodiment of the present invention.

Fig. 32 is a diagram illustrating an absence timer table according to the embodiment of the present invention.

Fig. 33 is a diagram illustrating a flow in a brightness turn-up mode according to the embodiment of the present invention.

Fig. 34 is a diagram illustrating generation of a PWM pulse output from a PWM control circuit 23 according to the embodiment of the present invention.

Fig. 35 is a timing chart in a case of adjusting PWM pulses S1 and S2 output from PWM control circuit 23 according to the embodiment of the present invention.

Fig. 36 is a diagram illustrating change in dimming ratio of LED modules 31 and 32 in a case where a duty ratio of the PWM pulse in a turn-on period Ton of a cycle time T is adjusted according to the embodiment of the present invention.

Fig. 37 is a diagram illustrating relation between a dimming ratio and a PWM pulse value each of which is actually measured as to LED module 31 (a daylight color LED) according to the embodiment of the present invention.

Fig. 38 is a diagram illustrating relation between a dimming ratio and a PWM pulse value each of which is actually measured as to LED module 32 (a light color LED) according to the embodiment of the present invention.

Fig. 39 is a diagram illustrating approximate expressions for output characteristic lines of LED modules 31 and 32.

Fig. 40 is a flowchart illustrating PWM pulse output in consideration of variations in output characteristic of LED module 31 according to the embodiment of the present invention.

Fig. 41 is a flowchart illustrating command transmission processing in remote controller 50 according to the embodiment of the present invention.

## DESCRIPTION OF EMBODIMENTS

In the following, embodiments of the present invention will be described with reference to the figures. In the following description, the same components are denoted by the same reference characters. Their names and functions are also the same. Therefore, detailed description thereof will not be repeated.

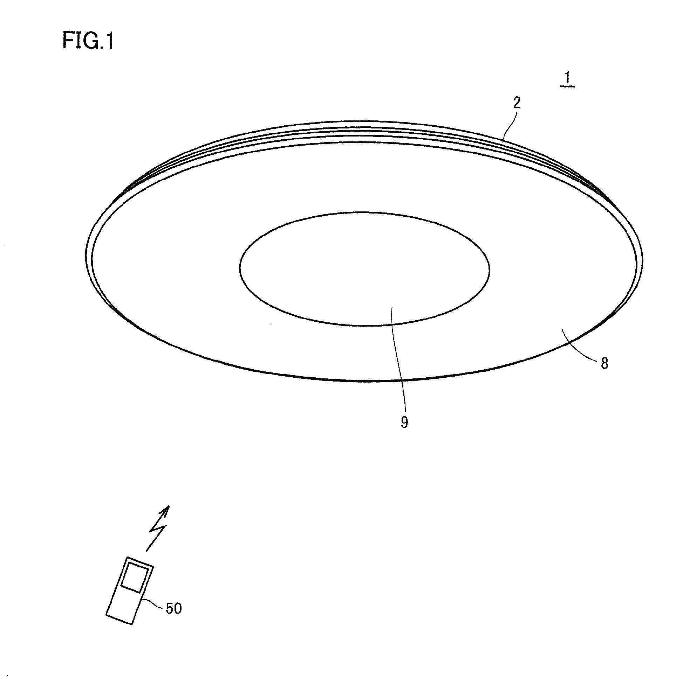

Fig. 1 is a diagram showing an exterior configuration of a lighting device 1 according to an embodiment of the present invention.

Referring to Fig. 1, lighting device 1 according to the embodiment of the present invention is shown to have a chassis 2 for attaching a main body portion and covers 8 and 9 for covering the entire surface of the main body portion together with chassis 2. In the present example, by way of example, it is assumed that chassis 2 of lighting device 1 is attached to a ceiling.

Cover 8 is provided corresponding to an area where LED modules serving as light sources for illumination are arranged. Light is emitted from the area of cover 8.

Another cover 9 provided around the center of cover 8 is provided corresponding to an area where a control device such as a circuit board for controlling the LED modules and the like is arranged. Since no LED module is provided in the area corresponding to cover 9, light is not emitted therefrom.

A portable remote controller 50 is provided for operating lighting device 1. By operating remote controller 50, various operation instructions can be issued to lighting device 1. Details of remote controller 50 will be described later.

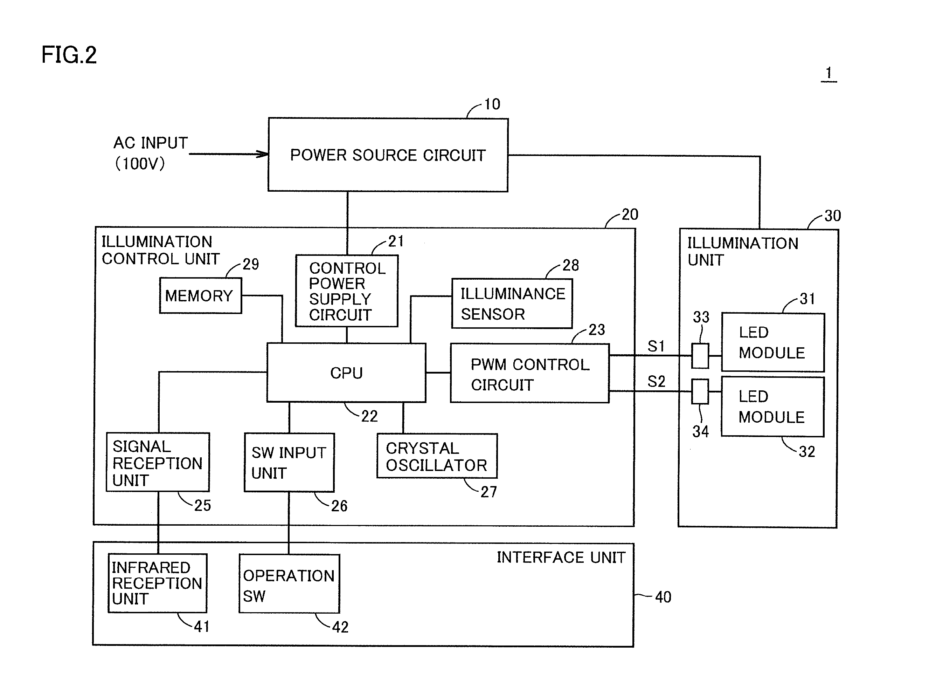

Fig. 2 is a schematic block diagram illustrating hardware of lighting device 1 according to the embodiment of the present invention.

Referring to Fig. 2, lighting device 1 according to the embodiment of the present invention includes a power source circuit 10, an illumination control unit 20, an illumination unit 30, and an interface unit 40.

Power source circuit 10 receives AC power input (AC input) (100 V), converts it to a DC voltage, and supplies the voltage to various portions of the device. Though the voltage is shown to be supplied only to a control power supply circuit 21 and illumination unit 30 by way of example here, it is not particularly limiting as such and a necessary voltage is supplied to other portions as well.

Illumination control unit 20 includes control power supply circuit 21 for adjusting a voltage supplied from power source circuit 10 to be supplied to a CPU 22, CPU (Central Processing Unit) 22 for overall control of lighting device 1, a PWM (Pulse Width Modulation) control circuit 23, a signal reception unit 25, an SW input unit 26, a crystal oscillator 27, an illuminance sensor 28, and a memory 29. CPU 22, memory 29, and PWM control circuit 23 are implemented by a micro-computer by way of example.

CPU 22 is connected to various units and gives instructions for necessary operations to control lighting device 1 as a whole.

PWM control circuit 23 generates a PWM pulse necessary for driving LED modules 31 and 32 in accordance with an instruction from CPU 22.

Signal reception unit 25 is connected to an infrared reception unit 41 included in interface unit 40, and it outputs to CPU 22, an instruction in response to an infrared signal received at infrared reception unit 41.

SW input unit 26 is connected to an operation SW (switch) 42, and outputs an instruction in accordance with an operation of operation SW to CPU 22.

Crystal oscillator 27 generates an oscillation signal in a prescribed cycle and outputs the signal to CPU 22. Receiving the oscillation signal (a clock signal) input from crystal oscillator 27, CPU 22 performs various operations in synchronization with the clock signal. It is assumed that CPU 22 can accurately keep time in accordance with the oscillation signal output from crystal oscillator 27.

Illuminance sensor 28 measures illuminance around lighting device 1 and outputs the illuminance to CPU 22. CPU 22 is capable of controlling a dimming ratio based on measurement results from illuminance sensor 28.

Memory 29 stores various programs and initial values for controlling lighting device 1, and it is also used as a working memory of CPU 22.

Illumination unit 30 includes LED modules 31 and 32 having color temperatures different from each other and FET (Field Effect Transistor) switches 33 and 34 used for driving LED modules 31 and 32, respectively. In the present example, it is assumed that a color temperature of LED module 31 is about 5600K and a color temperature of LED module 32 is about 3000K. In the following, LED module 31 will also be referred to as a daylight color LED (or simply daylight color) and LED module 32 will also be referred to as a light color LED (or simply light color). Here, a set consisting of one LED module 31 and one module 32 is shown as an example, and a plurality of such sets may be provided. Further, FET switches 33 and 34 may be provided in PWM control circuit 23.

Interface unit 40 includes infrared reception unit 41 and operation SW 42. Infrared reception unit 41 receives an infrared signal from remote controller 50, carries out photoelectric conversion of the infrared signal, and outputs the result to signal reception unit 25.

Operation SW 42 includes a power switch and the like, and an instruction in response to a switch operation such as a user's operation of a power switch is output through SW input unit 26 to CPU 22. It is assumed that, when the power switch is ON, necessary power is supplied to lighting device 1, and when the power switch is OFF, the power is not supplied to lighting device 1. Various operations described in the present example are performed when the power switch is ON. In addition, operation SW 42 may also be provided with a switch corresponding to each of various buttons in remote controller 50 which will be described later.

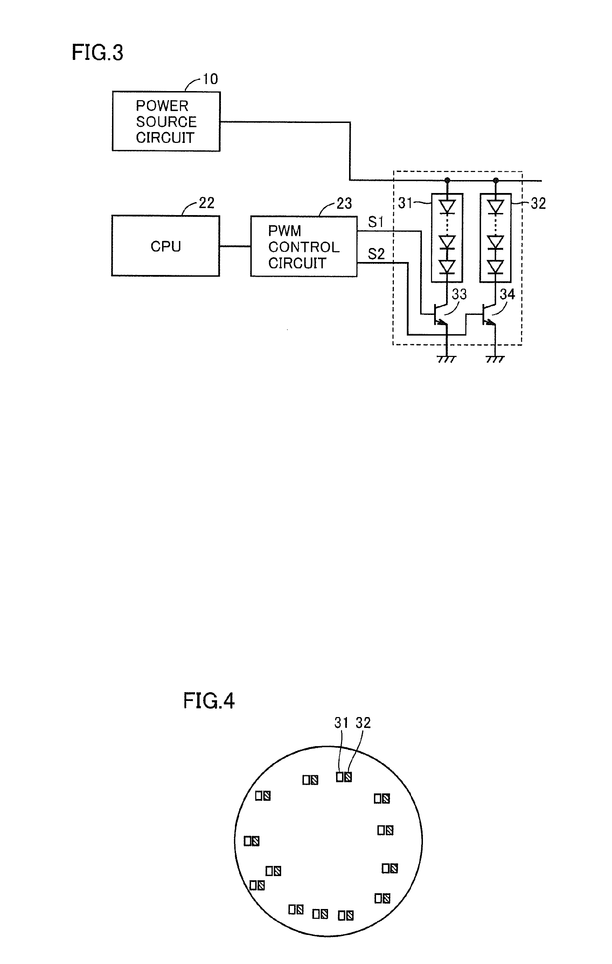

Fig. 3 is a diagram showing configurations of LED modules 31 and 32 according to the embodiment of the present invention.

Referring to Fig. 3, CPU 22 instructs PWM control circuit 23 to generate and output PWM pulses S 1 and S2 for driving at least one of LED modules 31 and 32.

LED modules 31 and 32 receive supply of a necessary voltage from power source circuit 10. Between LED modules 31 and 32 and a ground voltage GND, FET switches 33 and 34 are provided, respectively.

When FET switches 33 and 34 are rendered conductive/non-conductive in response to PWM pulses S 1 and S2, a current is supplied/cut off to LED modules 31 and 32. When a current is supplied to LED modules 31 and 32, LED modules 31 and 32 emit light. Though a configuration for driving LED modules 31 and 32 has been described above, the configuration is similar also in a case where a plurality of other LED modules are additionally provided.

Fig. 4 is a diagram illustrating one example of a case where LED modules 31 1 and 32 are arranged in lighting device 1.

Referring to Fig. 4, LED modules 31 and 32 are arranged next to each other, and a plurality of such sets are arranged and mounted in a circular shape. Since LED modules 31 and 32 different in color temperature from each other are mounted next to each other, it becomes easier to mix light beams emitted from respective LED modules, so that unevenness or variation in color at an illuminating surface can be eliminated.

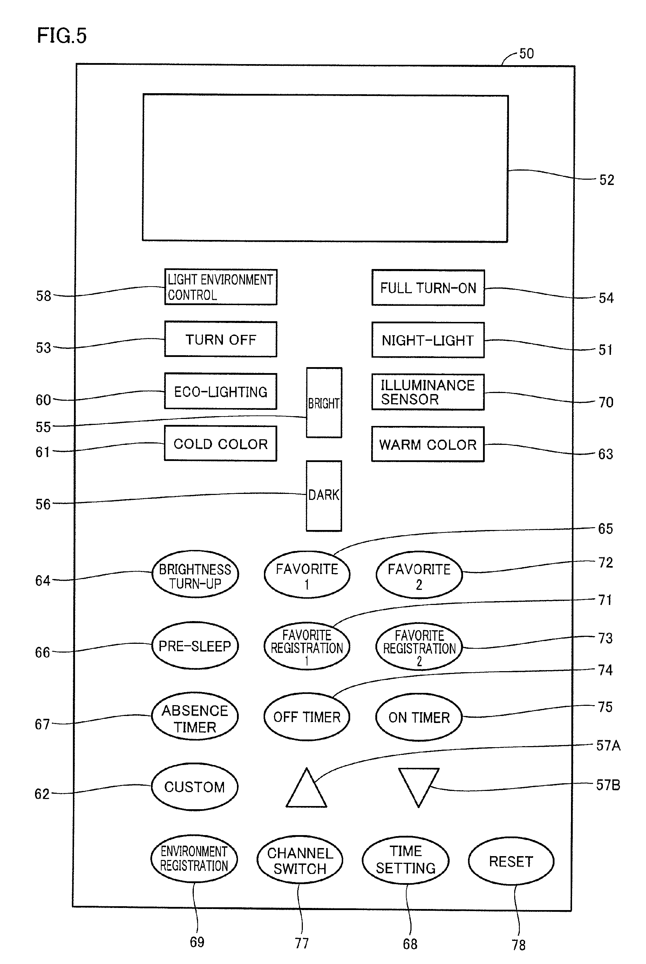

Fig. 5 is a diagram showing an exterior configuration of remote controller 50 according to the embodiment of the present invention.

Referring to Fig. 5, remote controller 50 is provided with a liquid crystal panel 52 and various buttons. A display device other than liquid crystal may be used in place of liquid crystal panel 52.

Moreover, remote controller 50 is provided with a plurality of buttons. Specifically, remote controller 50 is provided with a "full turn-on" button 54, a "light environment control" button 58, a "turn-off' button 53, a "night-light" button 51, an "eco-lighting" button 60, an "illuminance sensor" button 70, a "bright" button 55 and a "dark" button 56 for indicating increase and decrease in dimming ratio, a "cold color" button 61 and a "warm color" button 63 for indicating change in color tone from a "light color" to a "daylight color" or from the "daylight color" to the "light color", a "brightness turn-up" button 64, a "favorite 1" button 65, a "favorite 2" button 72, a "pre-sleep" button 66, a "favorite registration 1" button 71, a "favorite registration 2" button 73, an "absence timer" button 67, an "OFF timer" button 74, an "ON timer" button 75, a "custom" setting button 62, an "UP" button 57A and a "DOWN" button 57B for indicating increment and decrement in numeric value and the like, an "environment registration" button 69, a "channel switch" button 77, a "time setting" button 68, and a "reset" button 78.

Pressing of "full turn-on" button 54 by the user causes remote controller 50 to output an instruction to carry out full turn-on control. CPU 22 of lighting device 1 receives the instruction for full turn-on control from remote controller 50, and then instructs PWM control circuit 23 to start full turn-on control of illumination unit 30. Thus, illumination unit 30 emits light at a dimming ratio of 100% in response to pressing of "full turn-on" button 54, that is, input of the instruction for full turn-on control from remote controller 50.

Pressing of "light environment control" button 58 by the user causes remote controller 50 to output an instruction about a light environment control mode. CPU 22 of lighting device 1 receives the instruction about light environment control from remote controller 50, and then instructs PWM control circuit 23 to start lighting control of illumination unit 30 in the light environment control mode. The light environment control mode will be described later.

Pressing of "turn-off' button 53 by the user while lighting causes remote controller 50 to output an instruction for turn-off control. CPU 22 of lighting device 1 receives the instruction for turn-off control from remote controller 50, and then instructs PWM control circuit 23 to turn illumination unit 30 off. Thus, illumination unit 30 terminates light emission in response to pressing of "turn-off' button 53, that is, input of the instruction for turn-off control from remote controller 50.

Pressing of "night-light" button 51 by the user causes remote controller 50 to output an instruction for night-light control. CPU 22 of lighting device 1 receives the instruction for night-light control from remote controller 50, and then instructs PWM control circuit 23 to start night-light control of illumination unit 30. Thus, some of a plurality of "light color" LEDs which form LED module 32 of illumination unit 30 are turned on as night-lights in response to pressing of "night-light" button 54, that is, input of the instruction for night-light lighting control from remote controller 50. It is noted that, at the time of turn-on of an LED serving as the night-light, a dimming ratio of that LED can be controlled in 10 levels in a range from about 10% to 100%.

Pressing of "eco-lighting" button 60 by the user causes remote controller 50 to output an instruction about an eco-lighting mode. CPU 22 of lighting device 1 receives the instruction about eco-lighting from remote controller 50, and then instructs PWM control circuit 23 to start lighting control of illumination unit 30 in the eco-lighting mode. The eco-lighting mode will be described later.

Pressing of "illuminance sensor" button 70 by the user causes remote controller 50 to output an instruction about an illuminance sensor mode. CPU 22 of lighting device 1 receives the instruction about the illuminance sensor mode from remote controller 50, and then starts lighting control of illumination unit 30 in the illuminance sensor mode. The illuminance sensor mode will be described later.

A dimming ratio of light emitted from illumination unit 30 is adjusted in a stepwise manner from full lighting (the dimming ratio of 100%) to dim lighting (the dimming ratio of 30%) through an operation of "bright" button 55 and "dark" button 56. Specifically, for example, when "dark" button 56 is pressed in such a state that full lighting (the dimming ratio of 100%) is set as a result of pressing of "full turn-on" button 54, half lighting (the dimming ratio of 50%) is set. When "dark" button 56 is pressed in this state, dim lighting (the dimming ratio of 30%) is set. When "bright" button 55 is pressed in this state, half lighting (the dimming ratio of 50%) is set. When "bright" button 55 is pressed in this state, full lighting (the dimming ratio of 100%) is set. It is noted that the current dimming ratio is stored in memory 29. The case where a dimming ratio is adjusted in 3 levels has been described here by way of example, however, the present invention is not particularly limited thereto. A dimming ratio may naturally be adjusted in 3 or more levels. In addition, though the case where a dimming ratio is adjusted to dim lighting (the dimming ratio of 30%) has been described here, the dimming ratio can also naturally be adjusted in a stepwise manner until illumination unit 30 is set to a turned-off state.

Pressing of "cold color" button 61 and "warm color" button 63 by the user causes remote controller 50 to output an instruction to switch a color tone. CPU 22 of lighting device 1 receives the instruction to switch a color tone from remote controller 50, and then instructs PWM control circuit 23 to switch lighting of illumination unit 30. Here, a color tone of light emitted from illumination unit 30 can be adjusted in response to pressing of "cold color" button 61 and "warm color" button 63, that is, input of the instruction to switch a color tone from remote controller 50. Specifically, when "warm color" button 63 is pressed, a color tone is switched in a stepwise manner from the daylight color to the light color while the dimming ratio is maintained. For example, when "warm color" button 63 is pressed in a "daylight color" full lighting state (the dimming ratio of 100%), a color tone is set to a "warm white color" in which the dimming ratio of the daylight color is 70% and the dimming ratio of the light color is 30%, and a shade is changed from the daylight color toward the light color while the dimming ratio is maintained. When "warm color" button 63 is further pressed in this state, the color tone is set to a "neutral color" in which the dimming ratio of the daylight color is 30% and the dimming ratio of the light color is 70%, and a shade is further changed from the daylight color toward the light color while the dimming ratio is maintained. When "warm color" button 63 is further pressed in this state, the color tone is set to the "light color" in which the dimming ratio is 100%, and a shade is further changed toward the light color while the dimming ratio is maintained.

When "cold color" button 61 is pressed, the color tone is set to switch in a stepwise manner from the light color to the daylight color while the dimming ratio is maintained. For example, when "cold color" button 61 is pressed in a "light color" full lighting state (the dimming ratio of 100%), the color tone is set to the "warm white color" in which the dimming ratio of the light color is 70% and the dimming ratio of the daylight color is 30%, and a shade is changed from the light color toward the daylight color while the dimming ratio is maintained. When "cold color" button 61 is further pressed in this state, the color tone is set to the "neutral color" in which the dimming ratio of the light color is 30% and the dimming ratio of the daylight color is 70%, and a shade is further changed from the light color toward the daylight color while the dimming ratio is maintained. When "cold color" button 61 is further pressed in this state, the color tone is set to the "daylight color" in which the dimming ratio is 100%, and a shade is further changed toward the daylight color while the dimming ratio is maintained. It is noted that the current color tone is stored in memory 29. The case where a color tone is changed in 4 levels has been described here by way of example, however, the present invention is not particularly limited thereto and the color tone can also naturally be adjusted in 4 or more levels.

In accordance with such operations, the user operates "bright" button 55 and "dark" button 56 or "cold color" button 61 and "warm color" button 63 so as to achieve his/her preferred dimming ratio and color tone. Thus, it is possible to realize a comfortable light environment for the user.

Pressing of "brightness turn-up" button 64 by the user causes remote controller 50 to output an instruction about a brightness turn-up mode. CPU 22 of lighting device 1 receives the instruction about the brightness turn-up mode from remote controller 50, and then instructs PWM control circuit 23 to start lighting control of illumination unit 30 in the brightness turn-up mode. The brightness turn-up mode will be described later.

Pressing of "pre-sleep" button 66 by the user causes remote controller 50 to output an instruction about pre-sleep. CPU 22 of lighting device 1 receives the instruction about pre-sleep from remote controller 50, and then instructs PWM control circuit 23 to start lighting control of illumination unit 30 in the pre-sleep mode. The pre-sleep mode will be described later.

Pressing of "favorite registration 1" button 71 or "favorite registration 2" button 73 by the user causes remote controller 50 to output an instruction about a favorite registration mode. CPU 22 of lighting device 1 receives the instruction about the favorite registration mode from remote controller 50, and then starts operations in the favorite registration mode. The favorite registration mode will be described later.

Pressing of "favorite 1" button 65 or "favorite 2" button 72 by the user allows setting of a dimming ratio and a color tone each registered in the favorite registration mode, which enhances the user's convenience.

Pressing of "absence timer" button 67 by the user causes remote controller 50 to output an instruction for absence timer control for an absence timer. CPU 22 of lighting device 1 receives the instruction for absence timer control from remote controller 50, and then instructs to start lighting control of illumination unit 30 in an absence timer mode. On the other hand, when CPU 22 of lighting device 1 receives the instruction for absence timer control again from remote controller 50 in the absence timer mode, CPU 22 stops lighting control in the absence timer mode. The absence timer mode will be described later.

Pressing of "OFF timer" button 74 by the user allows start of operations for OFF timer setting in an OFF timer mode which will be described later. In a case where a turn-off time is set, turn-off control is carried out when that time comes. The OFF timer mode will be described later.

Pressing of "ON timer" button 75 by the user allows start of operations for ON timer setting in an ON timer mode which will be described later. In a case where a turn-on time is set, turn-on control is carried out when that time comes. The ON timer mode will be described later.

Pressing of "custom" setting button 62 by the user allows start of operations for custom setting. The custom setting will be described later.

Pressing of "environment registration" button 69 by the user allows setting of a target illuminance for use in the illuminance sensor mode which will be described later. This point will be described later.

Pressing of "channel switch" button 77 by the user allows change in command type in a case of emission of infrared rays. For example, in the case where a plurality of lighting devices 1 different in channel from one another are provided and individual control of the lighting devices is desired, the user presses "channel switch" button 77 of remote controller 50 to tune into a channel corresponding to a lighting device, so that setting for each lighting device can be made. It is noted that, in the present example, the channel of lighting device 1 is set to be equal to the channel of remote controller 50.

Pressing of "time setting" button 68 by the user allows start of operations for time setting. Specifically, pressing of "time setting" button 68 causes liquid crystal panel 52 to display a time setting screen (not shown). In the time setting screen, the user can set a current time by using "UP" button 57A and "DOWN" button 57B. Then, pressing again of "time setting" button 68 causes remote controller 50 to output current time information. CPU 22 of lighting device 1 receives time information from remote controller 50, thereby keeping an accurate time in accordance with an oscillation signal (a clock signal) from crystal oscillator 27 based on the received time information. In the present example, since lighting control in accordance with time is carried out in the light environment control mode, the timer mode, and the like, these modes are not executed unless a time is not set in lighting device 1.

Pressing of "reset" button 78 by the user causes CPU 22 of lighting device 1 to receive an instruction for reset from remote controller 50, so that various types of data registered in memory 29 are reset to default states. For example, a dimming ratio and a color tone registered in the favorite registration mode which will be described later are reset.

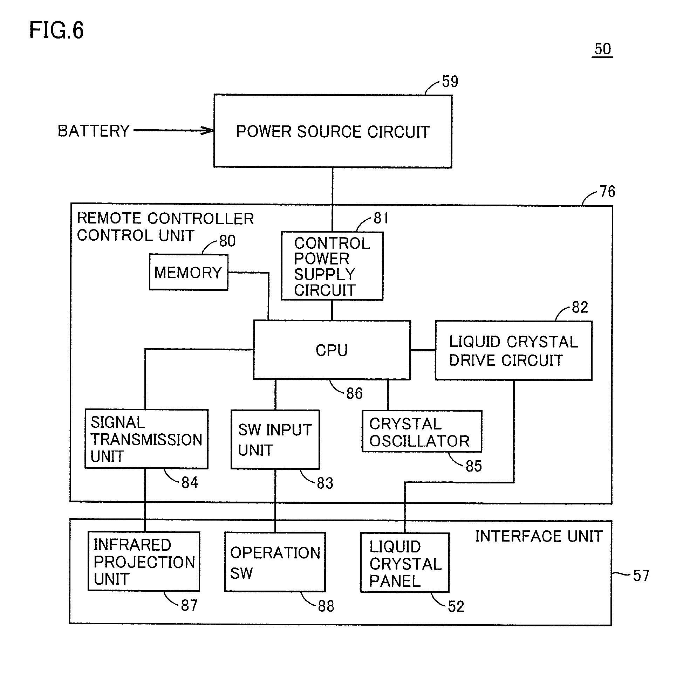

Fig. 6 is a schematic block diagram illustrating hardware of remote controller 50 according to the embodiment of the present invention.

Referring to Fig. 6, remote controller 50 according to the embodiment of the present invention includes a power source circuit 59, a remote controller control unit 76, and an interface unit 57.

Power source circuit 59 receives electric power supplied from a battery such as a secondary battery, and supplies a voltage to various portions and units in the device. Though a voltage is shown by way of example to be supplied only to a control power supply circuit 81 in the present example, it is not particularly limiting as such, and a necessary voltage is supplied to other portions as well.

Remote controller control unit 76 includes control power supply circuit 81 1 adjusting a voltage supplied from power source circuit 59 for supply to a CPU 86, CPU (Central Processing Unit) 86 for overall control of remote controller 50, a liquid crystal drive circuit 82 for driving liquid crystal panel 52, a signal transmission unit 84, an SW input unit 83, a crystal oscillator 85, and a memory 80.

CPU 86 is connected to these units and components, and gives instructions for various operations necessary for controlling remote controller 50 as a whole.

Liquid crystal drive circuit 82 drives liquid crystal panel 52 displaying a desired screen in accordance with an instruction from CPU 86.

Signal transmission unit 84 outputs an instruction from CPU 86 to an infrared projection unit 87 included in interface unit 57.

SW input unit 83 is connected to an operation SW (switch) 88, and outputs to CPU 86 an instruction in response to the operation of the operation SW.

Crystal oscillator 85 generates an oscillation signal in a prescribed cycle and outputs the signal to CPU 86. Receiving the oscillation signal (a clock signal) input from crystal oscillator 85, CPU 86 performs various operations in synchronization with the clock signal. It is assumed that CPU 86 can accurately keep time in accordance with the oscillation signal output from crystal oscillator 85.

Remote controller 50 does not necessarily have to include crystal oscillator 85. In this case, CPU 86 may accept time input based on pressing of "time setting" button 68, "UP" button 57A and "DOWN" button 57B, or the like, and may subsequently keep current time based on the input time.

Memory 80 stores programs, initial values, and the like for controlling remote controller 50, and it is also used as a working memory of CPU 86.

Interface unit 57 includes infrared projection unit 87, operation SW 88, and liquid crystal panel 52.

Infrared projection unit 87 converts a signal output from signal transmission unit 84 to an infrared signal and projects the signal to lighting device 1.

Operation SW 88 consists of various buttons provided on remote controller 50 as described above. Specifically, operation SW includes "full turn-on" button 54, "light environment control" button 58, "turn-off' button 53, "night-light" button 51, "eco-lighting" button 60, "illuminance sensor" button 70, "bright" button 55 and "dark" button 56 for indicating increase and decrease in dimming ratio, "cold color" button 61 1 and "warm color" button 63 for indicating color control from the "light color" to the "daylight color" or from the "daylight color" to the "light color", "brightness turn-up" button 64, "favorite 1 " button 65, "favorite 2" button 72, "pre-sleep" button 66, "favorite registration 1" button 71, "favorite registration 2" button 73, "absence timer" button 67, "OFF timer" button 74, "ON timer" button 75, "custom" setting button 62, "UP" button 57A and "DOWN" button 57B for indicating increment and decrement in numeric value and the like, "environment registration" button 69, "channel switch" button 77, "time setting" button 68, and "reset" button 78.

CPU 86 of remote controller 50 receives an input instruction through each button in operation SW 88 through SW input unit 83, and instructs signal transmission unit 84 to output a transmission signal in accordance with each button. In response to the instruction from CPU 86, signal transmission unit 84 outputs a transmission signal in accordance with each button as an infrared signal to lighting device 1 through infrared projection unit 87. Infrared reception unit 41 of lighting device 1 receives the infrared signal projected from infrared projection unit 87 of remote controller 50. Then, infrared reception unit 41 performs photoelectric conversion of the received infrared signal. Then, signal reception unit 25 outputs to CPU 22, the transmission signal obtained by photoelectric conversion and issued from remote controller 50. As a result of this operation, CPU 22 performs an operation in accordance with the input instruction from remote controller 50.

Specifically, when the user presses "bright" button 55 or "dark" button 56, CPU 22 adjusts a dimming ratio of light emission from LED modules 31 and 32 in illumination unit 30.

By way of example, every time "dark" button 56 is pressed from a full lighting state (the dimming ratio of 100%), a state of lighting is changed from "full lighting" →"halt lighting" →"dim lighting", and every time "bright" button 55 is pressed from this state (the dimming ratio of 30%), a state changes from "dim lighting" → "half lighting" → "full lighting".

Further, as described above, when the user presses "cold color" button 61 or "warm color" button 63, CPU 22 adjusts a color tone of light emission from LED modules 31 and 32 in illumination unit 30. By way of example, every time "warm color" button 63 is pressed from a "daylight color" full lighting state in the daylight color (the dimming ratio of 100%), the color tone changes from the "daylight color" → the "neutral color" → the "warm white color" → the "light color", and every time "cold color" button 61 is pressed from this state, the color tone changes from the "light color" → the "warm white color" → the "neutral color" → the "daylight color".

Though portable remote controller 50 has been described in the present example, it is not particularly limiting and a fixed-type remote controller provided on a wall may be adopted. Alternatively, the remote controller may be provided as a part of interface unit 40 of lighting device 1. In that case, instead of transmission of a signal from the operation SW by using an infrared signal, an instruction signal from the operation SW may directly be transmitted through a signal line. Further, signal transmission and reception is not limited to infrared transmission and reception, and wireless transmission and reception or the like may be employed.

The method of executing various modes in lighting device 1 in accordance with instructions of input through button operations from remote controller 50 has been described in the present example, however, the input method is not limited thereto. For example, other methods such as providing input instructions to lighting device 1 through audio input may be adopted.

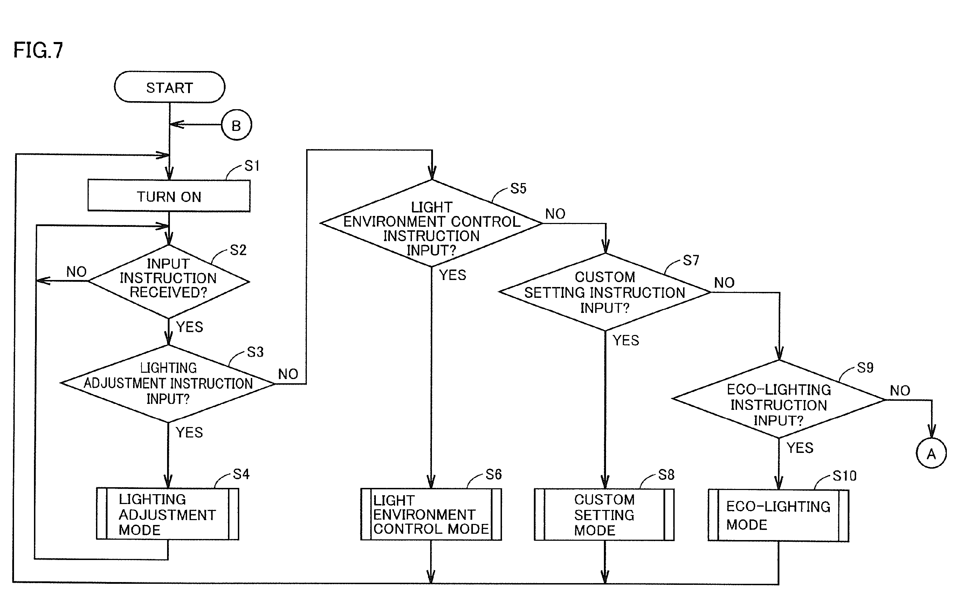

Fig. 7 is a diagram (No. 1) illustrating a main flow in lighting device 1 according to the embodiment of the present invention.

This main flow is started when the power switch is turned on, and it is executed by CPU 22 reading a program stored in memory 29.

When the power switch is turned on and the flow starts, referring to Fig. 7, first, CPU 22 instructs PWM control circuit 23 to carry out turn-on control of illumination unit 30 (step S1). Thus, a room is illuminated with light emitted from illumination unit 30. In step S1, when processing in any of modes described in the following is performed, CPU 22 indicates lighting control with a dimming ratio and a color tone being set in that mode. Otherwise, or when processing in any of the modes is not performed and the present time is immediately after power on or after the end of the light environment control mode as will be described later, usual lighting control is indicated. Specifically, an instruction is given to realize lighting control set in advance for emitting daylight color light at a 100% dimming ratio, by using LED module 31.

Then, CPU 22 determines whether or not an input instruction has been received (step S2). When it is determined in step S2 that an input instruction has been received (YES in step S2), CPU 22 determines whether or not a lighting adjustment instruction has been input (step S3). Specifically, whether or not an instruction of input through "bright" button 55 or "dark" button 56 for adjusting a dimming ratio or an instruction of input through "cold color" button 61 or "warm color" button 63 for adjusting a color tone which are provided on remote controller 50 has been received is determined.

When it is determined that a lighting adjustment instruction has been input (YES in step S3), CPU 22 makes transition to a lighting adjustment mode (step S4). Processing in the lighting adjustment mode will be described later.

When it is determined that no lighting adjustment instruction has been input (NO in step S3), CPU 22 then determines whether or not a light environment control instruction has been input (step S5). Specifically, CPU 22 determines whether or not an instruction of input through "light environment control" button 58 provided on remote controller 50 has been received.

When it is determined that a light environment control instruction has been input (YES in step S5), CPU 22 makes transition to a light environment control mode (step S6). Processing in the light environment control mode will be described later.

On the other hand, when it is determined that no light environment control instruction has been input (NO in step S5), CPU 22 then determines whether or not a custom setting instruction has been input (step S7).

Specifically, CPU 22 determines whether or not an instruction of input through "custom" setting button 62 provided on remote controller 50 has been received.

When it is determined that a custom setting instruction has been input (YES in step S7), CPU 22 makes transition to a custom setting mode (step S8). Processing in the custom setting mode will be described later.

On the other hand, when it is determined that no custom setting instruction has been input (NO in step S7), CPU 22 then determines whether or not an eco-lighting instruction has been input (step S9). Specifically, CPU 22 determines whether or not an instruction of input through "eco-lighting" button 60 provided on remote controller 50 has been received.

When it is determined that an eco-lighting instruction has been input (YES in step S9), CPU 22 makes transition to an eco-lighting mode (step S10). Processing in the eco-lighting mode will be described later.

When it is determined in step S9 that no eco-lighting instruction has been input (NO in step S9), the process proceeds to "A".

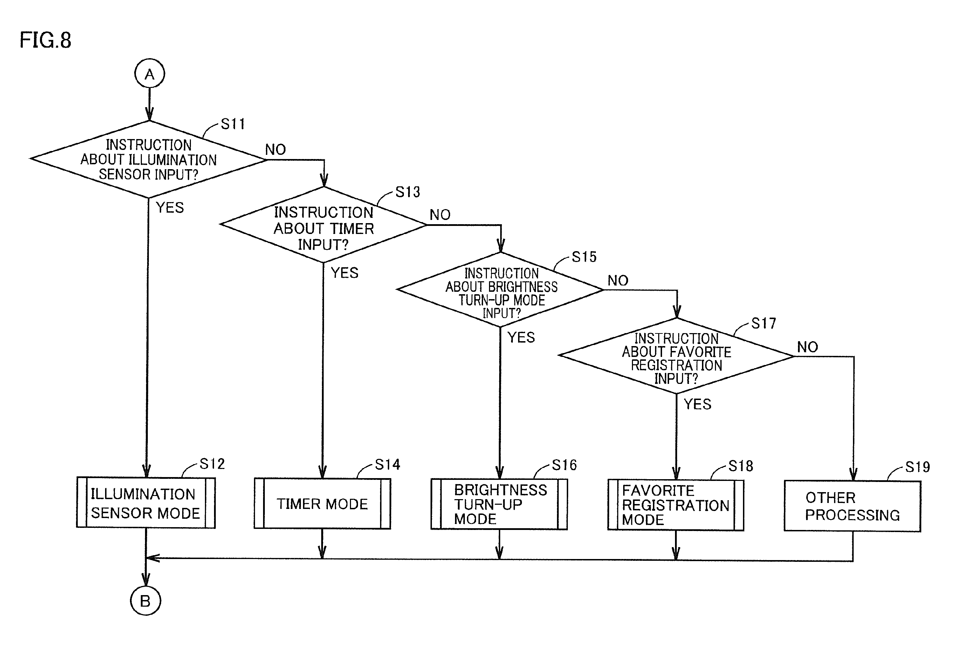

Fig. 8 is a diagram (No. 2) illustrating the main flow in lighting device 1 according to the embodiment of the present invention.

Referring to Fig. 8, when it is determined in step S9 that an eco-lighting instruction has not been input (NO in step S9), it is then determined whether or not an instruction about an illuminance sensor has been input (step S11). Specifically, CPU 22 determines whether or not an instruction of input through "illuminance sensor" button 70 provided in remote controller 50 has been received.

When CPU 22 determines that the instruction about the illuminance sensor has been input (YES in step S11), transition to an illuminance sensor mode is made (step S12). Processing in the illuminance sensor mode will be described later.

On the other hand, when CPU 22 determines that an instruction about the illuminance sensor has not been input (NO in step S11), then, CPU 22 determines whether or not an instruction about a timer has been input (step S 13).

Specifically, CPU 22 determines whether or not information in accordance with an operation of "absence timer" button 67, "OFF timer" button 74, or "ON timer" button 75 in connection with the timer, which is provided in remote controller 50, has been input.

When CPU 22 determines that an instruction about the timer has been input (YES in step S 13), transition to a timer mode is made (step S 14). Processing in the timer mode will be described later.

On the other hand, when CPU 22 determines that an instruction about the timer has not been input (NO in step S13), then, CPU 22 determines whether or not an instruction about a brightness turn-up mode has been input (step S 15). Specifically, CPU 22 determines whether or not an instruction of input through "brightness, turn-up" button 64 provided in remote controller 50 has been received.

When CPU 22 determines that an instruction about the brightness turn-up mode has been input (YES in step S 15), transition to the brightness turn-up mode is made (step S16). Processing in the brightness turn-up mode will be described later.

When CPU 22 determines in step S 15 that an instruction about the brightness turn-up mode has not been input (NO in step S 15), then, CPU 22 determines whether or not an instruction about favorite registration has been input (step S 17).

Specifically, CPU 22 determines whether or not an instruction of input through "favorite registration 1" button 71 or "favorite registration 2" button 73 provided in remote controller 50 has been received.

When CPU 22 determines that an instruction about favorite registration has been input (YES in step S 17), transition to a favorite registration mode is made (step S 18). Processing in the favorite registration mode will be described later.

On the other hand, when CPU 22 determines that an instruction about favorite registration has not been input (NO in step S 17), then, CPU 22 performs other processing (step S19). Then, the process proceeds to "B". Namely, the process returns to step S1 in Fig. 7.

<Lighting Adjustment Mode>

The lighting adjustment mode is a mode for achieving preferred dimming and color control in such a manner as controlling a light emission state of LED modules 31 and 32 in illumination unit 30 in accordance with an instruction through a user's operation of remote controller 50 for dimming and/or color control.

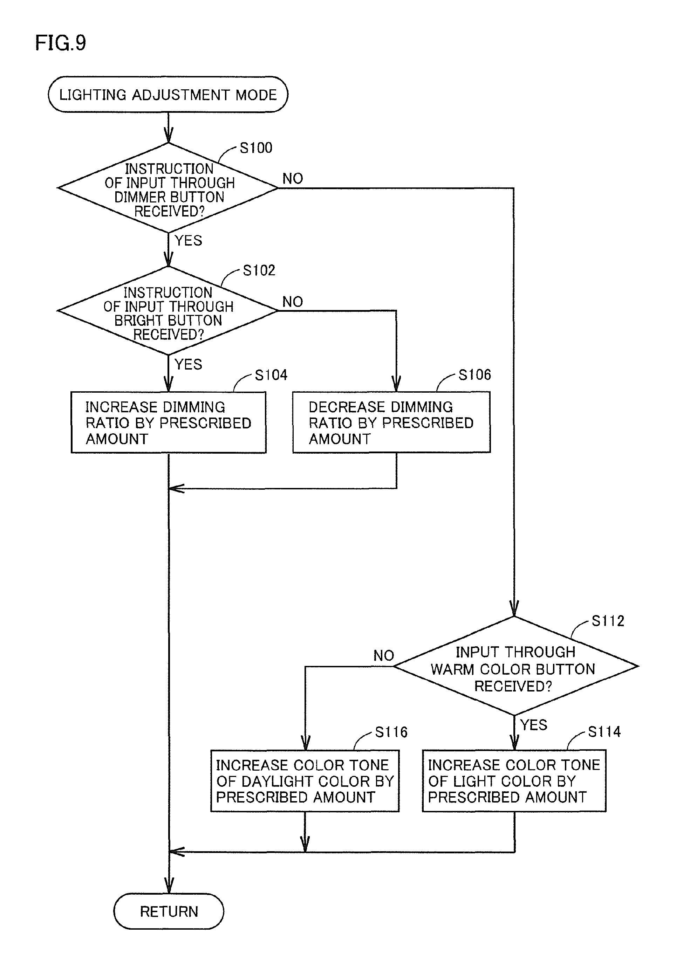

Fig. 9 is a flowchart illustrating the processing in the lighting adjustment mode according to the embodiment of the present invention.

The flow is executed by CPU 22 reading a program stored in memory 29.

Referring to Fig. 9, first, CPU 22 determines whether or not an input instruction is an instruction of input through a dimmer button (step S100). In the present example, dimmer buttons include "bright" button 55 and "dark" button 56. When CPU 22 determines that the input instruction is not the instruction of input through the dimmer button such as "bright" button 55 or "dark" button 56 (NO in step S100), the process proceeds to step S 112.

If the instruction is determined to be an input through "bright" button 55 or "dark" button 56 (YES in step S100), CPU 22 then specifies whether the pressed button is "bright" button 55 or "dark" button 56 (step S102).

When the pressed button is "bright" button 55 (YES in step S102), CPU 22 increases the current dimming ratio by a predefined ratio (step S104). When the pressed button is "dark" button 56 (NO in step S102), CPU 22 decreases the current dimming ratio by a predefined ratio (step S106). Then, the process ends (return). Namely, the process returns to step S2.

Specifically, when the user presses "dark" button 56 in a full lighting state (the dimming ratio of 100%), lighting is set to a half-lighting state (the dimming ratio of 50%). When the user presses "dark" button 56 in the half lighting state (the dimming ratio of 50%), lighting is set to a dim-lighting state (the dimming ratio of 30%). When the user presses "bright" button 55 in the dim-lighting state (the dimming ratio of 30%), lighting is set to the half-lighting state (the dimming ratio of 50%). When the user presses "bright" button 55 in the half-lighting state (the dimming ratio of 50%), lighting is set to the full lighting state (the dimming ratio of 100%).

When it is determined in step S 100 that the instruction is neither the input of "bright" button 55 nor "dark" button 56 (NO in step S100), CPU 22 determines that the instruction is an input through a color control button. In the present example,, by way of example, the color control button include "warm color" button 63 and "cold color" button 61.

When CPU 22 determines that the input instruction is not the instruction of input through the dimmer button, then, CPU 22 specifies whether the pressed button is either "warm color" button 63 or "cold color" button 61 (step S112). When the pressed button is "warm color" button 63 (YES in step S112), CPU 22 increases the dimming ratio of the current color tone on the light color side by a predefined dimming ratio and decreases the dimming ratio on the daylight color side by a predefined dimming ratio while maintaining the dimming ratio (step S 114). When the pressed button is "cold color" button 61 (NO in step S112), CPU 22 decreases the dimming ratio of the current color tone on the light color side by a predefined dimming ratio and increases the dimming ratio on the daylight color side by a predefined dimming ratio while maintaining the dimming ratio (step S116). Then, the process ends (return). Namely, the process returns to step S2 in Fig. 7.

Specifically, when the user presses "warm color" button 63 in a "daylight color" state which means full lighting in the daylight color (the dimming ratio of 100%), the color tone is set to the "neutral color". When the user presses "warm color" button 63 in a "neutral color" state, the color tone is set to the "warm white color." When the user presses "warm color" button 63 in a "warm white color" state, the color tone is set to the "light color". When the user presses "cold color" button 61 in a "light color" state, the color tone is set to the "warm white color." When the user presses "cold color" button 61 in a "warm white color" state, the color tone is set to the "neutral color". When the user presses "cold color" button 61 in the "neutral color" state, the color tone is set to the "daylight color".

The case where the color tone is varied in 4 levels in accordance with the instruction of input through the color control button such as "warm color" button 63 or "cold color" button 61 has been described above, however, the color tone can be adjusted more finely in such a manner that the number of levels is set to 4 or more.

With regard to change in color tone, there is a difference in human visual perception about change in color temperature of light because of levels of color temperatures. Specifically, a human tends to feel change more perceptively as a color temperature becomes low. Accordingly, in the case of change in color tone between the "light color" and the "daylight color", when a color temperature is simply linearly changed, there is a possibility that a human feels abrupt change in color tone particularly at the time when the color tone is changed toward the "light color", because of characteristics of a human eye.

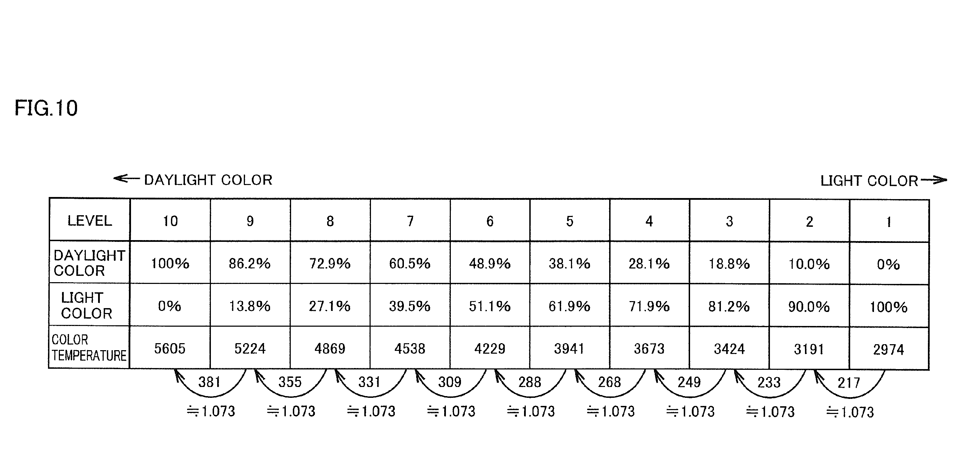

Fig. 10 is a diagram illustrating change in color tone according to the embodiment of the present invention.

Referring to Fig. 10, by way of example, a case where a color tone is changed in 10 levels as transition from the "light color" low in color temperature to the "daylight color" high in color temperature is shown.

Specifically, the color tone is set such that difference in color temperature gradually increases as the color tone makes transition from the light color low in color temperature toward the daylight color high in color temperature.

In the present example, by way of example, in order to have a user feel as if the color tone changed in 10 levels at an even rate between the "light color" having a color temperature of 2974K and the "daylight color" having a color temperature of 5605K, setting is made such that a color temperature is adjusted in a stepwise manner among 10 levels at an even ratio.

In the case where the color temperature of the "light color" is 2974K and the color temperature of the "daylight color" is 5605K, a ratio r in the case where the color tone is varied in a stepwise manner is calculated as follows.

$$2974 \times r^9 = 5605$$
$$r^9 = \frac{5605}{2974}$$
$$r \approx 1.073$$

Then, the dimming ratios of the "daylight color" and the "light color" are adjusted in accordance with the respective color temperatures calculated as described above.

Thus, the dimming ratios of the "daylight color" and the "light color" are set such that difference in color temperature becomes gradually great as the color tone makes transition in a stepwise manner from the light color low in color temperature to the daylight color high in color temperature. As a result, the user can feel as if a rate of change in color tone which is changed in a stepwise manner became even, and can achieve his/her preferred color tone without uncomfortable feeling about change in color tone.

The case where the color temperature between the two levels among the 10 levels is set to change in a stepwise manner at an even ratio (equal ratio) has been described in the present example, however, the present example is not particularly limited thereto, and other methods can also be employed. For example, a color temperature may be set by using an inverse color temperature which is the inverse of a color temperature. Specifically, a value in mired, which is obtained by multiplying the inverse of a value in kelvin (K) by 1000000, is calculated for each of the "daylight color" and the "light color", and setting is made such that an interval among the values becomes equal in transition in a stepwise manner. Then, the value in mired is converted to the value in kelvin (K) again so that the dimming ratios of the "daylight color" and the "light color" can be set. The case where the value multiplied by 1000000 is used has been described, however, it is not particularly limiting, and setting may be made without multiplication by 1000000.

In addition, the case where two types of color tones different in color temperature from each other, that is, the "daylight color" and the "light color", are changed in a stepwise manner has been described in the present example, however, the color tones are not particularly limited to two types, and the color tone may be changed in a stepwise manner by using two or more types of LEDs different in color temperature from one another.

Moreover, the case where the color tone can be changed in 10 levels in accordance with an instruction of input through a color control button such as "warm color" button 63 or "cold color" button 61 has been described here, however, the present invention is not particularly limited to this number of levels, and any number of levels can be set.

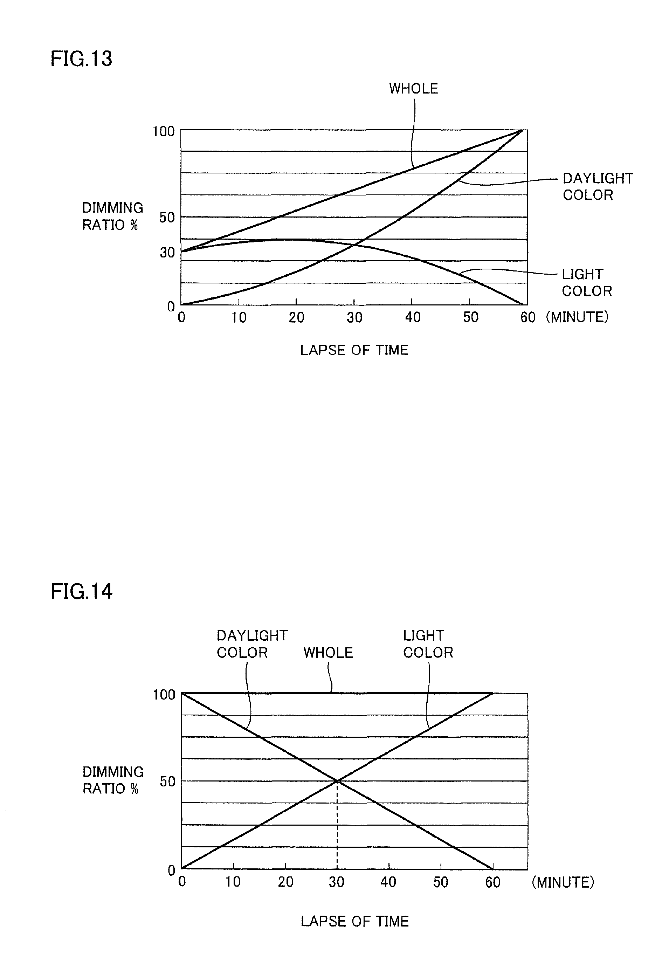

Furthermore, the above method may be adopted instead of a graph in Fig. 14 showing other modes, for example, the light environment control mode which will be described later.

<Light Environment Control Mode>

The light environment control mode according to the embodiment of the present invention will now be described.

The light environment control mode is a mode for automatically setting a dimming ratio and a color tone so as to realize a comfortable light environment conforming to human activity rhythms.

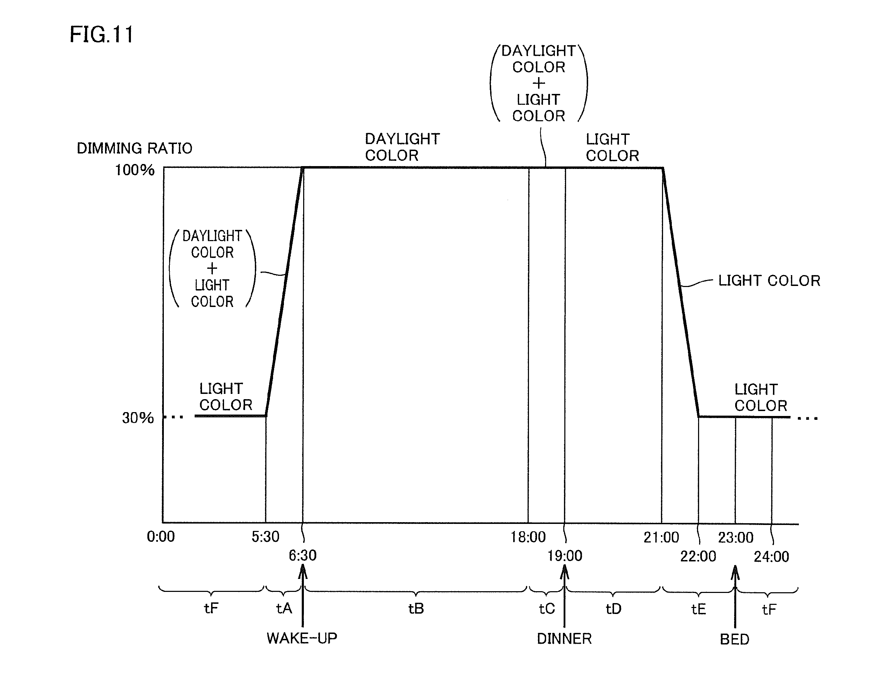

Fig. 11 is a diagram illustrating a dimming ratio in the light environment control mode according to the embodiment of the present invention.

Referring to Fig. 11, here, a case in which dimming ratios of the daylight color and the light color are adjusted based on correlation with human biological rhythms of 24 hours is shown.

Specifically, 24 hours is divided into 6 periods of tA to tF, and a dimming ratio of the daylight color and the light color for each period is set.

Specifically, setting of the periods is as follows: period tA is from 5:30 to 6:30; period tB is from 6:30 to 18:00; period tC is from 18:00 to 19:00; period tD is from 19:00 to 21:00; period tE is from 21:00 to 23:00; and period tF is from 23:00 to 5:30. Here, it is assumed that a wake-up time of 6:30, a dinner time of 19:00 and a bed time of 23:00 are set in advance as default values. As will be described later, the wake-up time of 6:30, the dinner time of 19:00, and the bed time of 23:00 may be changed in custom setting, which will be described later.

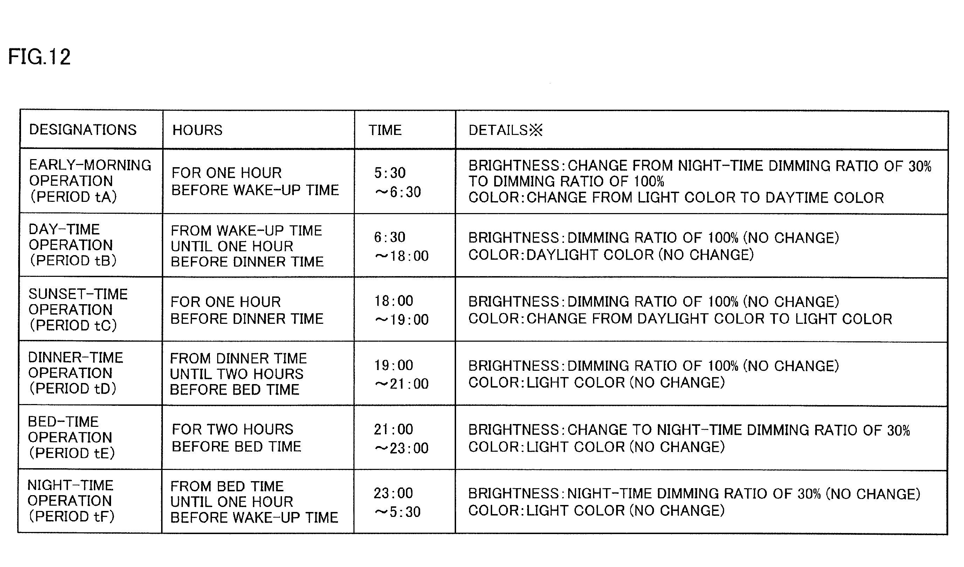

Fig. 12 is a table of operations representing operations of illumination unit 30 during each period in the light environment control mode.

Referring to Fig. 12, an early-morning operation is performed for an hour before the wake-up time, that is, for period tA (the time from 5:30 to 6:30). Specifically, as brightness, a dimming ratio is changed from a night-time dimming ratio of 30% to a dimming ratio of 100%. Further, a color tone is changed from the light color to the daylight color. As will be described later, the night-time dimming ratio can also be changed.

From the wake-up time until one hour before the dinner time, that is, for period tB (6:30 to 18:00), a day-time operation is performed. Specifically, the dimming ratio of 100% is maintained as brightness. Further, the daylight color is maintained as a color tone.

For one hour before the dinner time, that is, for period tC (18:00 to 19:00), a sunset-time operation is performed. Specifically, the dimming ratio of 100% is maintained as brightness. Further, a color tone is changed from the daylight color to the light color.

From the dinner time until two hours before the bed time, that is, for period tD (19:00 to 21:00), a dinner-time operation is performed. Specifically, the dimming ratio of 100% is maintained as brightness. Further, the light color is maintained as a color tone.

For two hours before the bed time, that is, for period tE (21:00 to 23:00), a bedtime operation is performed. Specifically, as brightness, the dimming ratio is changed from the dimming ratio of 100% to the night-time dimming ratio of 30%. Further, the light color is maintained as a color tone.

From the bed time until one hour before the wake-up time, that is, for period tF (23:00 to 5:30), a night-time operation is performed. Specifically, the night-time dimming ratio of 30% is maintained as brightness. Further, the light color is maintained as a color tone.

The operation table described above is merely by way of example, and each time of day and each period set in the operation table can also be changed to a different time of day and a different period. Further, a different operation may be provided. For example, an operation may be changed for each season.

Referring again to Fig. 11, before the wake-up time for period tA, it is possible to gradually adjust a dimming ratio to increase brightness and suppress melatonin secretion and to gradually change a color tone from the light color to the daylight color, so that sleep gradually becomes lighter in a manner coinciding with the wake-up time, and at the wake-up time, the dimming ratio of 100% is attained to promote wake-up with refreshed feeling in the daylight color close to natural light during day time.

During day time, that is, for period tB, the daylight color close to the color tone of natural light is kept, so that a comfortable operation can be promoted during a human activity period.

Before the dinner time, that is, for period tC, the color tone is gradually changed from the daylight color to the light color close to the color tone of natural light in the evening to attain a relaxing effect, and an environment can naturally be changed to a warm, calming atmosphere.

After dinner, that is, for period tD, the light color is maintained so that peaceful, comfortable feeling can be realized in a warm, calming atmosphere during a period of rest.

Before the bed time, that is, for period tE, a dimming ratio is gradually adjusted to lower, so that human wakefulness is gradually weakened and melatonin secretion relating to human biological rhythms is promoted. This helps people to smoothly fall asleep.

During one's sleep, that is, for period tF, the dimming ratio is kept low so as to promote deep sleep, while such a dimming ratio as allowing the user to recognize any object will allow a user's operation during night time.

Therefore, according to the light environment control mode for lighting device 1 described above, a light environment that is automatically adjusted to a color tone and brightness in accordance with human biological rhythms can be realized. Particularly, in the light environment control mode according to the present embodiment, during each period in which a dimming ratio and a color tone are changed, such change takes place in a natural manner without causing any feeling of strangeness or discomfort to a human.

By way of example, for period tA, adjustment is gradually made to change the light color at the dimming ratio 30% to the daylight color at the dimming ratio of 100%.

Fig. 13 is a diagram illustrating a graph of dimming ratios of the daylight color and the light color during period tA according to the embodiment of the present invention.

Referring to Fig. 13, here, change in dimming ratio of the daylight color, dimming ratio of the light color, and overall dimming ratio are shown.

During period tA, in the initial state, the dimming ratio of the light color is 30% and the dimming ratio of the daylight color is 0%. Therefore, a case where the overall dimming ratio is set to 30% is shown.

Equations for calculating the dimming ratios in the graph above will be described.

A case where an overall dimming ratio R is linearly changed from a dimming ratio A in the initial state to a dimming ratio B during a time period T is represented by Equation (1) below, where a variable t represents time.

$$R = A + \frac{(B-A)}{T}t \qquad \ldots (1)$$

Next, general equations of dimming ratios P and Q of the daylight color and the light color are given as Equations (2) and (3) below, respectively.

$$P = R\frac{t}{T} \qquad \ldots (2)$$

$$Q = R - R\frac{t}{T} \qquad \ldots (3)$$

By inputting Equation (1) to Equations (2) and (3), dimming ratios P and Q of the daylight color and the light color are represented by Equations (4) and (5) below, respectively.

$$P = \frac{A}{T}t + \frac{(B-A)}{T^2}t^2 \qquad \dots (4)$$

$$Q = A + \frac{B-2A}{T}t - \frac{B-A}{T^2}t^2 \qquad \dots (5)$$

When time period T = 60, dimming ratio A = 30, and dimming ratio B = 100 are input to Equations (4) and (5), dimming ratios P and Q of the daylight color and the light color are represented by Equations (6) and (7), respectively.

$$P = \frac{30}{60}t + \frac{70}{60 \times 60}t^2 \qquad \dots (6)$$

$$Q = 30 + \frac{40}{60}t - \frac{70}{60 \times 60}t^2 \qquad \dots (7)$$

Based on Equations (6) and (7), dimming ratios P and Q of the daylight color and the light color can be set.

By way of example, 12 minutes after the initial state, that is, when t = 12, daylight color P and light color Q are calculated as in the following equations, respectively.

$$P = \frac{30}{60} \times 12 + \frac{70}{60 \times 60} \times 12 \times 12 = 8.8$$

$$Q = 30 + \frac{40}{60} \times 12 - \frac{70}{60 \times 60} \times 12 \times 12 = 35.2$$

Based on these equations, it is possible to linearly change the overall dimming ratio and to change from the light color to the daylight color in a natural manner. Namely, in change from the light color to the daylight color, the color changes to an intermediate color having the light color and the daylight color mixed, and then eventually to the daylight color. Therefore, the dimming ratio can be changed without causing any feeling of strangeness or discomfort to a human, and a comfortable and natural light environment can be realized.

Further, in the light environment control mode according to the present embodiment, during period tC, gradual adjustment from the daylight color at a 100% dimming ratio to the light color at a 100% dimming ratio takes place.

Fig. 14 is a diagram illustrating a graph of dimming ratios of the daylight color and the light color during period tC according to the embodiment of the present invention.

Referring to Fig. 14, here, change in dimming ratio of the daylight color, dimming ratio of the light color, and overall dimming ratio are shown.

During period tC, in the initial state, the dimming ratio of the light color is 0%, while the dimming ratio of the daylight color is 100%. Therefore, a case where the overall dimming ratio is set to 100% is shown.

By calculation in a manner the same as the above-mentioned, the dimming ratios of the daylight color and the light color are represented by Equations (8) and (9), respectively.

$$P = 100 - \frac{100}{60}t \qquad \dots (8)$$

$$Q = \frac{100}{60} t \qquad\qquad ... (9)$$

It becomes possible to set dimming ratios P and Q of the daylight color and the light color based on Equations (8) and (9), respectively.

Based on these equations, it is possible to change from the light color to the daylight color in a natural manner, while maintaining the overall dimming ratio. Namely, in change from the daylight color to the light color, the color continuously changes to an intermediate color having the light color and the daylight color mixed, and then eventually to the light color. Therefore, the color tone can be changed without causing any feeling of strangeness or discomfort to a human, and a comfortable and natural light environment can be realized.

The case where, in change from the daylight color to the light color during period tC, a color temperature is controlled to change at a certain rate of change with lapse of time has been described in the present example, however, the present example is not limited thereto. Alternatively, the color tone is continuously changed such that change in color temperature is accelerated as the color tone is close to the daylight color high in color temperature and change in color temperature is made slower as the color tone is close to the light color low in color temperature. Thus, the user can feel as if the color tone changed at a regular rate with lapse of time. For example, in the case of change from the daylight color to the light color, a rate of change in color temperature is desirably reduced at an equal ratio with lapse of time in order to reduce a rate of change in color temperature per time.

Further, in the light environment control mode according to the present embodiment, during period tE, the light color at a 100% dimming ratio is gradually adjusted to the light color at a 30% dimming ratio.

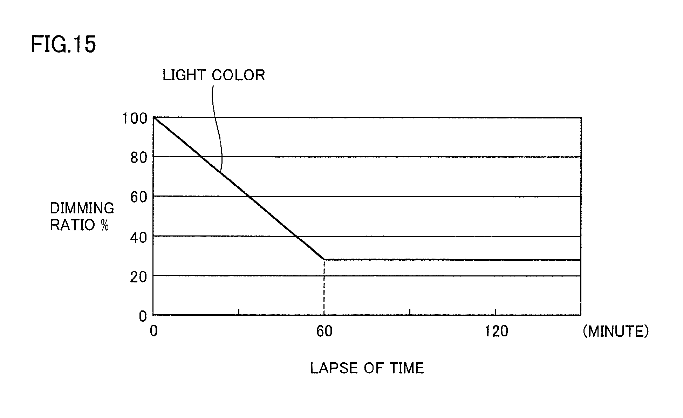

Fig. 15 is a diagram of a graph illustrating a dimming ratio of the light color during period tE according to the embodiment of the present invention.

Referring to Fig. 15, during period tE, in the initial state, the dimming ratio of the light color is set to 100% and the overall dimming ratio is set to 100%.

By calculation in a manner the same as the above-mentioned, the dimming ratio of the light color is represented by Equation (10) below.

$$Q = 100 - \frac{100}{60} t \qquad\qquad ... (10)$$

Based on this equation (10), it is possible to set dimming ratio Q of the light color.

By gradually changing dimming ratio Q of the light color based on this equation, a comfortable light environment can be realized without causing any feeling of strangeness or discomfort to a human.

The method for setting a dimming ratio of the light color is merely an example, and for example, a dimming ratio can also be adjusted at a rate of change as described in the following.

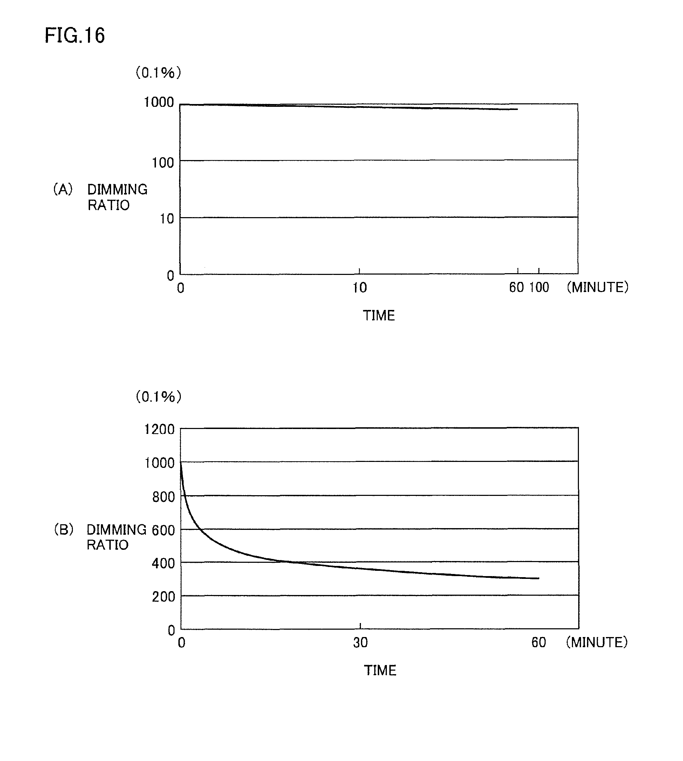

Fig. 16 is a diagram illustrating another graph showing a dimming ratio of the light color during period tE according to the embodiment of the present invention.

Referring to (A) of Fig. 16, in the present example, a graph having a double logarithmic scale is shown, in which both of the ordinate and the abscissa represent logs. The unit represented on the ordinate is 0.1 %. The unit represented on the abscissa is minute.

A case where the double logarithmic graph is set such that a dimming ratio and time have linear relation is shown. Specifically, a case where, in the double logarithmic graph, a dimming ratio of 100% is adjusted to a dimming ratio of 30% in a period of 60 minutes is shown.

Referring to (B) of Fig. 16, a case where the double logarithmic graph in (A) of Fig. 16 is converted to a normal graph is shown.

By adjusting dimming ratio Q of the light color with such a method, it becomes possible to change the dimming ratio without further causing any feeling of strangeness or discomfort to a human, and a comfortable and natural light environment can be realized.

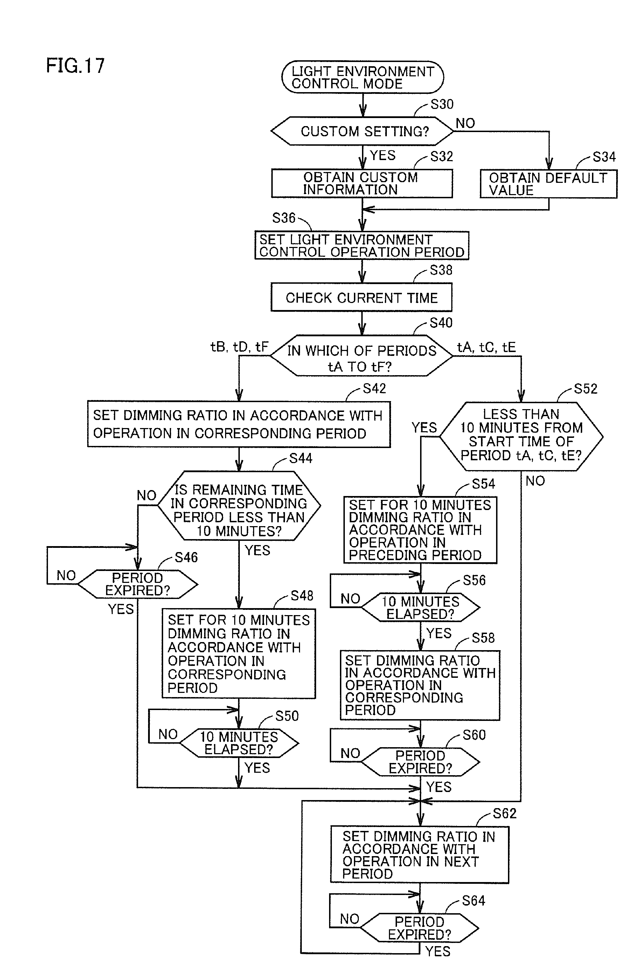

Fig. 17 is a diagram illustrating a flow in the light environment control mode according to the embodiment of the present invention.

The flow is executed by CPU 22 reading a program stored in memory 29.

Referring to Fig. 17, CPU 22 determines whether or not custom setting has been made (step S30).

When it is determined in step S30 that custom setting has been made, CPU 22 obtains custom setting information (step S32). The custom setting information will be described later.

When it is determined in step S30 that no custom setting has been made, CPU 22 obtains a default value (step S34).

Thereafter, CPU 22 sets a light environment control operation period based on the custom setting information or the default value (step S36). Specifically, periods tA to tF are set in accordance with the wake-up time, the dinner time, and the bed time as described above.

Then, CPU 22 checks the current time (step S38).

Next, CPU 22 determines to which of periods tA to tF the current time belongs, based on the current time (step S40).

CPU 22 determines in step S40 to which of periods tA to tF the current time belongs, and when it is in period tB, tD, or tF, the process proceeds to step S42.

On the other hand, CPU 22 determines in step S40 to which of time periods tA to tF the current time belongs, and when it is in period tA, tC, or tE, the process proceeds to step S52.

When the current time is determined to be in period tB, tD, or tF, CPU 22 sets a dimming ratio in accordance with an operation in the corresponding period (step S42).

Then, CPU 22 determines whether or not a remaining time of the corresponding period is shorter than 10 minutes (step S44).

When it is determined in step S44 that the remaining time is shorter than 10 minutes, the dimming ratio in accordance with the operation in the corresponding period is set for 10 minutes (step S48).

Then, whether or not 10 minutes have elapsed is determined (step S50). After the lapse of 10 minutes, the process proceeds to a next step.

Namely, when the current time at which the light environment control mode is started is shortly before the end of the operation in the corresponding period for the light environment control operation, i.e., when less than 10 minutes is left in the present example, the operation in the corresponding period in the light environment control operation period is continued for 10 minutes. With such an approach, abrupt start of an operation in a period following the corresponding period of the light environment control operation period, which leads to the user's feeling of strangeness or discomfort, can be avoided. Though 10 minutes is set as a reference by way of example in the present example, it is not particularly limiting, and a length may be adjusted in accordance with the user's preference.

When it is determined in step S44 that the remaining time of the corresponding period is not shorter than 10 minutes (NO in step S44), CPU 22 determines whether or not the period has expired (step S46).

When it is determined in step S46 that the period has expired, the process proceeds to the next step.

When it is determined again in step S40 that the current time is in period tA, tC, or tE, CPU 22 determines whether or not less than 10 minutes has elapsed since start of period tA, tC, or tE (step S52).

When it is determined in step S52 that this is the case (YES in step S52), a dimming ratio in accordance with an operation in a preceding period is set for 10 minutes (step S54).

Then, whether or not 10 minutes have elapsed is determined (step S56).

When it is determined in step S56 that 10 minutes have elapsed, a dimming ratio in accordance with the operation in the corresponding period is set (step S58).

Then, whether or not the period has expired is determined (step S60). When it is determined that the period has expired, the process proceeds to the next step S62.

Namely, in the case where the current time at which the light environment control mode is started corresponds to a time period in which a dimming ratio and/or a color tone is/are changed among the light environment control operation periods (periods tA, tC, and tE), if less than 10 minutes has elapsed since the start time of the period, the operation is performed without causing user's feeling of strangeness or discomfort.

Specifically, initially, a dimming ratio in accordance with the operation in the preceding period is set for 10 minutes, and after 10 minutes, the operation in the corresponding period for changing the dimming ratio and/or the color tone is started. With such an approach, abrupt start of the operation in the corresponding period in the light environment control operation period for changing the dimming ratio and/or the color tone, which leads to the user's feeling of strangeness or discomfort, can be avoided. Though 10 minutes is set as the reference by way of example in the present example, it is not particularly limiting, and a length may be adjusted in accordance with the user's preference.

On the other hand, when CPU 22 determines in step S52 that less than 10 minutes has not elapsed, the process proceeds to the next step.

Namely, in the case where the current time at which the light environment control mode is started corresponds to a time period in which the dimming ratio and/or the color tone is/are changed among the light environment control operation periods (periods tA, tC, and tE), if 10 minutes or longer have elapsed since the start time of the period, the dimming ratio in accordance with an operation in a next period is set. With such an operation, abrupt start of the operation in the corresponding period for changing the dimming ratio and/or the color tone, which leads to the user's feeling of strangeness or discomfort, can be avoided.

Next, in step S62, the dimming ratio in accordance with the operation in the next period is set (step S62).

Then, whether or not the period has expired is determined (step S64). When it is determined that the period has expired (YES in step S64), the process returns to step S62, and a dimming ratio in accordance with an operation in a still next period is set.

By repeating the processing, by way of example, for example, the operations in periods tA → tB → tC → tD → tE → tF → tA are repeated, and dimming in accordance with a 24-hour life rhythm can be realized.

When the light environment control mode is to be terminated, the user presses "light environment control" button 58 on remote controller 50 again. Then, the light environment control mode is stopped by interrupt processing, so that the process returns to step S 1 in Fig. 7 and ordinary lighting is carried out.

Further, when the user operates the power switch and turns off the power, the light environment control mode also ends, because power supply is stopped. It is assumed that, when the user again turns on the power switch, the process returns to step S 1 in Fig. 7 and ordinary lighting is carried out.

<Custom Setting>

Custom setting will now be described.

The custom setting refers to a mode for setting a wake-up time, a dinner time, and a bed time in the light environment control mode described above to a time in accordance with a user's individual life rhythm.

When the user presses "custom" setting button 62 on remote controller 50, transition to the custom setting mode is made.

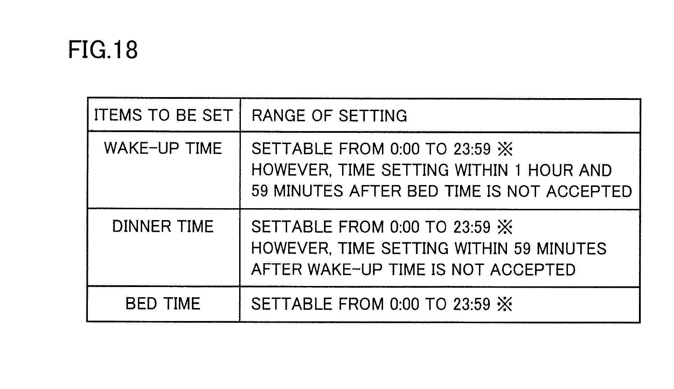

Fig. 18 is a diagram illustrating times set as the wake-up time, the dinner time, and the bed time in accordance with the custom setting according to the embodiment of the present invention.

Referring to Fig. 18, here, a case where it is possible to freely set a wake-up time, a dinner time, and a bed time between 0:00 and 23:59 is shown.

As to the wake-up time, setting within 1 hour and 59 minutes from the bed time is not accepted.

Further, setting of the dinner time within 59 minutes from the wake-up time is not accepted. It is assumed that, when the setting is unacceptable, the time is set to an initial, preset time.

A flow in the custom setting will specifically be described below.

When the user presses "custom" setting button 62 of remote controller 50, a setting screen is displayed on remote controller 50. Specifically, as CPU 86 reads a program stored in memory 80, a setting screen as will be described in the following is displayed on liquid crystal panel 52.

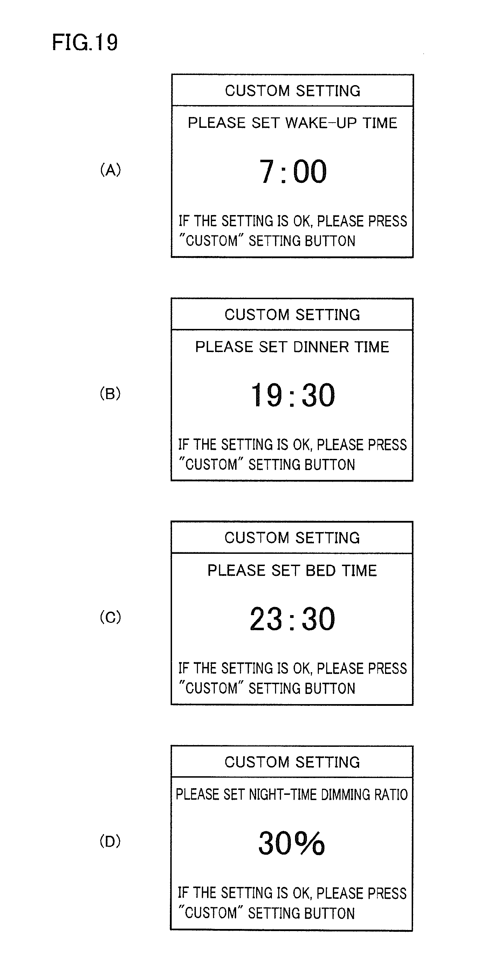

Fig. 19 is a diagram illustrating screens for the custom setting on liquid crystal panel 52 of remote controller 50 according to the embodiment of the present invention.

Referring to (A) of Fig. 19, when "custom" setting button 62 is pressed, first, a screen allowing setting of a wake-up time is displayed on liquid crystal panel 52. The user can set the wake-up time to an arbitrary value by operating "UP" button 57A and/or "DOWN" button 57B. In the present example, by way of example, a case where, together with display of "please set wake-up time," the wake-up time is changed from "6:30" set as the default value for the wake-up time to "7:00" by an operation of "UP" button 57A and/or "DOWN" button 57B is shown. Further, a case where a guide message "if the setting is OK, please press 'custom' setting button" is displayed is shown. When the user presses the "custom" setting button, remote controller 50 outputs wake-up time information displayed on liquid crystal panel 52 (here, 7:00) to lighting device 1. Then, transition to setting of a dinner time is made.

Referring to (B) of Fig. 19, a screen allowing setting of a dinner time is displayed on liquid crystal panel 52. The user can set the dinner time to an arbitrary value by operating "UP" button 57A and/or "DOWN" button 57B. In the present example, by way of example, a case where, together with display of "please set dinner time," the dinner time is changed from "19:00" set as the default value for the dinner time to "19:30" by the operation of "UP" button 57A and/or "DOWN" button 57B is shown. Further, a case where a guide message "if the setting is OK, please press 'custom' setting button" is displayed is shown. When the user presses the "custom" setting button, remote controller 50 outputs dinner time information displayed on liquid crystal panel 52 (here, 19:30) to lighting device 1. Then, transition to setting of a bed time is made.

Referring to (C) of Fig. 19, a screen allowing setting of a bed time is displayed on liquid crystal panel 52. The user can set the bed time to an arbitrary value by operating "UP" button 57A and/or "DOWN" button 57B. In the present example, by way of example, a case where, together with display of "please set bed time," the bed time is changed from "23:00" set as the default value for the bed time to "23:30" by the operation of "UP" button 57A and/or "DOWN" button 57B is shown. Further, a case where a guide message "if the setting is OK, please press 'custom' setting button" is displayed is shown. When the user presses the "custom" setting button, remote controller 50 outputs bed time information displayed on liquid crystal panel 52 (here, 23:30) to lighting device 1. Then, transition to setting of a night-time dimming ratio is made. In the present example, it is possible also to set a night-time dimming ratio for a night-time operation, in addition to the wake-up time, the dinner time, and the bed time in the custom setting.

Referring to (D) of Fig. 19, a screen allowing setting of a night-time dimming ratio is displayed on liquid crystal panel 52. The user can set a numeric value for the night-time dimming ratio to an arbitrary value by operating "UP" button 57A and/or "DOWN" button 57B. At the time of this setting, CPU 22 of lighting device 1 controls PWM control circuit 23 such that a dimming ratio of light emitted from illumination unit 30 is set to the dimming ratio displayed on liquid crystal panel 52. Specifically, first, the dimming ratio of lighting device 1 is set to 30%. Then, in accordance with input through "UP" button 57A and/or "DOWN" button 57B from remote controller 50, an instruction to increase/decrease the dimming ratio is output to lighting device 1. In accordance with the instruction to increase/decrease the dimming ratio, CPU 22 of lighting device 1 causes PWM control circuit 23 to adjust the dimming ratio of light emitted from illumination unit 30.

In the present example, by way of example, together with a message "please set night-time dimming ratio," "30%" set as the default value for the night-time dimming ratio by the operation of "UP" button 57A and/or "DOWN" button 57B is shown on liquid crystal panel 52. Further, a case where a guide message "if the setting is OK, please press 'custom' setting button" is displayed is shown. When the user presses "custom" setting button 62, remote controller 50 outputs night-time dimming ratio information that is eventually displayed on liquid crystal panel 52 (here, 30%) to lighting device 1.

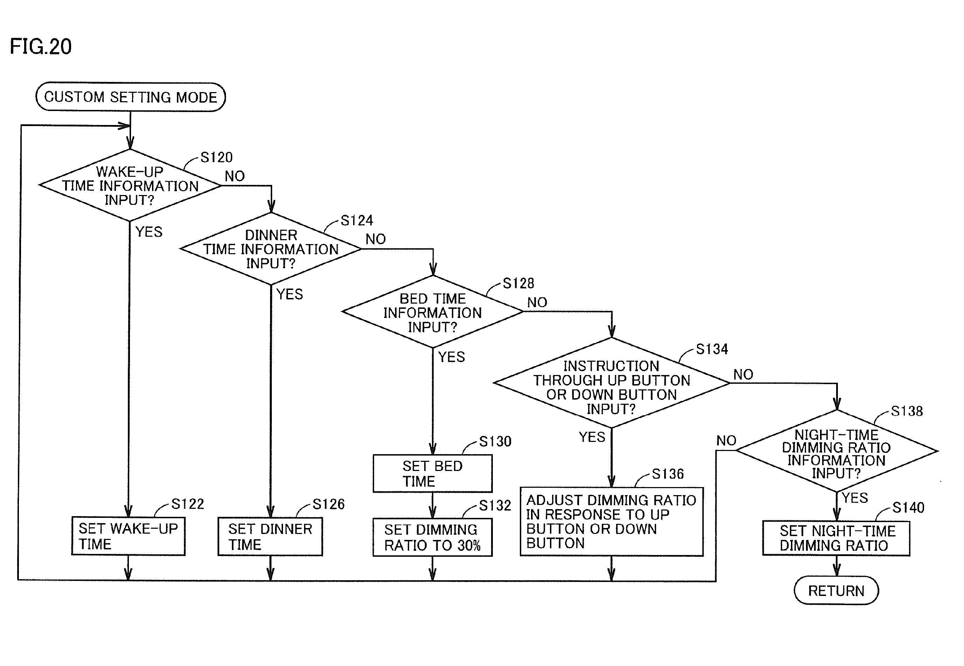

Fig. 20 is a diagram illustrating a flow of the custom setting according to the embodiment of the present invention.

It is assumed that the flow is executed by CPU 22 reading a program stored in memory 29.

Referring to Fig. 20, when transition to the custom setting mode is made, CPU 22 determines whether or not wake-up time information has been input (step S 120). Specifically, the determination is made based on whether or not wake-up time information from remote controller 50 described with reference to Fig. 19 has been received.

When it is determined in step S120 that wake-up time information has been input (YES in step S120), CPU 22 sets a wake-up time in accordance with input contents (step S122). Then, the process returns to step S120.

When it is determined in step S120 that wake-up time information has not been input (NO in step 120), CPU 22 next determines whether or not dinner time information has been input (step S 124). Specifically, the determination is made based on whether or not dinner time information from remote controller 50 described with reference to Fig. 19 has been received.

When it is determined in step S124 that dinner time information has been input (YES in step S 124), CPU 22 sets a dinner time in accordance with input contents (step S 126). Then, the process returns to step S 120.

When it is determined in step S124 that time information has not been input (NO in step S124), CPU 22 next determines whether or not bed time information has been input (step S 128). Specifically, the determination is made based on whether or not bed time information from remote controller 50 described with reference to Fig. 19 has been received.

When it is determined in step S128 that bed time information has been input (YES in step S128), CPU 22 sets a bed time in accordance with input contents (step S130).

Thereafter, CPU 22 sets a dimming ratio to 30% (step S132). Specifically, CPU 22 controls PWM control circuit 23 such that a dimming ratio of light emission from LED module 32 attains to 30%. With this operation, the user can recognize brightness at the night-time dimming ratio of 30%.

Then, the process returns to step S120.

Next, when it is determined in step S128 that bed time information has not been input (NO in step S128), CPU 22 determines whether or not an instruction through "UP" button 57A or "DOWN" button 57B has been input (step S134).

When it is determined in step S134 that an instruction through "UP" button 57A or "DOWN" button 57B has been input (YES in step S134), a dimming ratio is adjusted in accordance with the instruction through "UP" button 57A or "DOWN" button 57B (step S 136).

Then, the process returns to step S 120. With this operation, the user can recognize brightness at the night-time dimming ratio in accordance with adjustment of the diming ratio in accordance with the instruction input through "UP" button 57A or "DOWN" button 57B.

When the user operates "UP" button 57A and/or "DOWN" button 57B as he/she likes, the night-time dimming ratio in accordance with desired brightness can be set.

When it is determined in step S134 that an instruction through "UP" button 57A or "DOWN" button 57B has not been input (NO in step S134), whether or not night-time dimming ratio information has been input is determined (step S138). Specifically, the determination is made based on whether or not night-time dimming ratio information from remote controller 50 described with reference to Fig. 19 has been received.

When it is determined in step S138 that night-time dimming ratio information has been input (YES in step S138), a night-time dimming ratio is set in accordance with input contents (step S 140). Then, the process ends (return). Namely, the process returns to step S1 in Fig. 7.

On the other hand, when it is determined in step S138 that night-time dimming ratio information has not been input (NO in step S 13 8), the process returns to step S120.

With such operations, it becomes possible to set wake-up time information, dinner time information, bed time information, and night-time dimming ratio information as custom information in the light environment control mode. The custom information is stored in memory 29. Then, as the custom information is stored in memory 29, the determination in step S30 in Fig. 17 becomes positive.

In the light environment control mode, in step S36 described with reference to Fig. 17, the light environment control operation periods are set based on the wake-up time, the dinner time, and the bed time in connection with the custom setting, which is the custom information stored in memory 29, so that the light environment control mode in accordance with the custom setting can be executed. Further, the night-time dimming ratio in accordance with the night-time dimming ratio information can be set.

Therefore, it becomes possible to execute dimming and color control in accordance with an individual life rhythm for each human and to realize a comfortable light environment.

Even while the light environment control mode described above is being executed, as the user presses "custom" setting button 62 of remote controller 50, transition to the custom setting mode is made by interrupt processing. When the custom setting mode is terminated, the processing in the light environment control mode in Fig. 17 is again performed. Through such processing, the light environment control mode is executed based on newly set custom information, and a comfortable light environment can be realized.

Though a case where three time points and a night-time dimming ratio are set in the custom setting mode has been described in the present example above, it is not limiting, and it may be possible to allow setting of the periods and the operations shown in Fig. 12 in accordance with the user's preference. In that case, for example, for each period shown in Fig. 12, lighting may be set by using a lighting state registered in favorite registration which will be described later.

<Eco-Lighting Mode>

An eco-lighting mode will now be described.

In the eco-lighting mode, in a prescribed time period from start of lighting, light emission reduction is carried out at a constant rate from luminance at the time of start of lighting (emission output from illumination unit 30). Namely, lighting at set luminance is carried out at the time of start of lighting. Here, "start of lighting" includes also a case where the brightness is changed by a user's operation.

For example, when 10 minutes is set as a certain time period from start of lighting or from the time of change in dimming ratio or color tone and 20% which is an initial dimming value X representing luminance at that time point is set as a certain rate, such light emission reduction that a dimming value attains to 80% of initial dimming value X in 10 minutes from start of lighting is carried out.

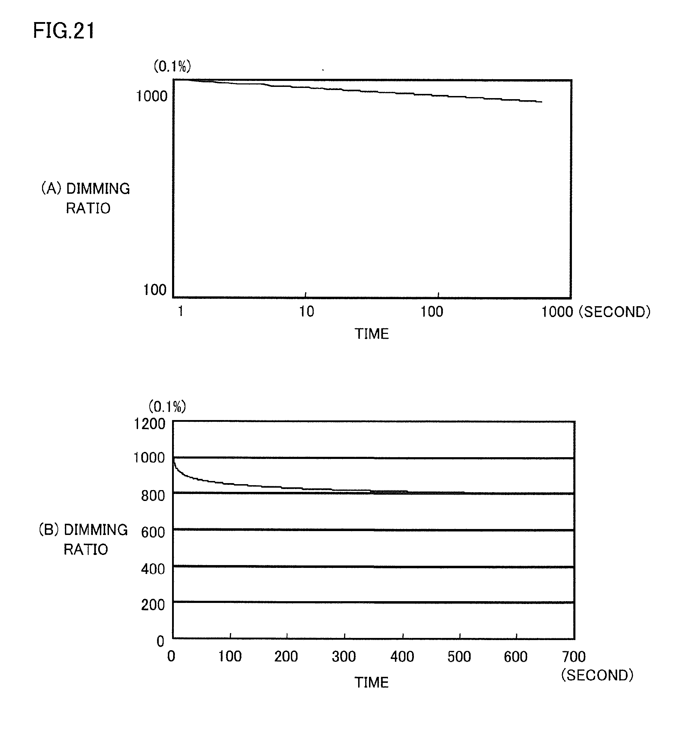

Fig. 21 is a diagram illustrating a graph of a dimming ratio in the eco-lighting mode according to the embodiment of the present invention.

Referring to (A) of Fig. 21, in the present example, a graph of double logarithmic scale is shown, in which both of the ordinate and the abscissa represent logs. The unit represented on the ordinate is 0.1 %. The unit represented on the abscissa is second.

A case where, in the double logarithmic graph, light emission reduction is achieved such that a dimming ratio and a time have linear relation. Specifically, a case where, in the double logarithmic graph, the dimming ratio of 100% is adjusted to a dimming ratio of 80% in a period of 10 minutes (600 seconds) is shown.

Referring to (B) of Fig. 21, a case where the double logarithmic graph in (A) of Fig. 21 is converted to a normal graph is shown.

By light emission reduction through such a method, it becomes possible to achieve light emission reduction without further causing any feeling of strangeness or discomfort to a human, and a comfortable and natural light environment can be realized while energy can be saved.

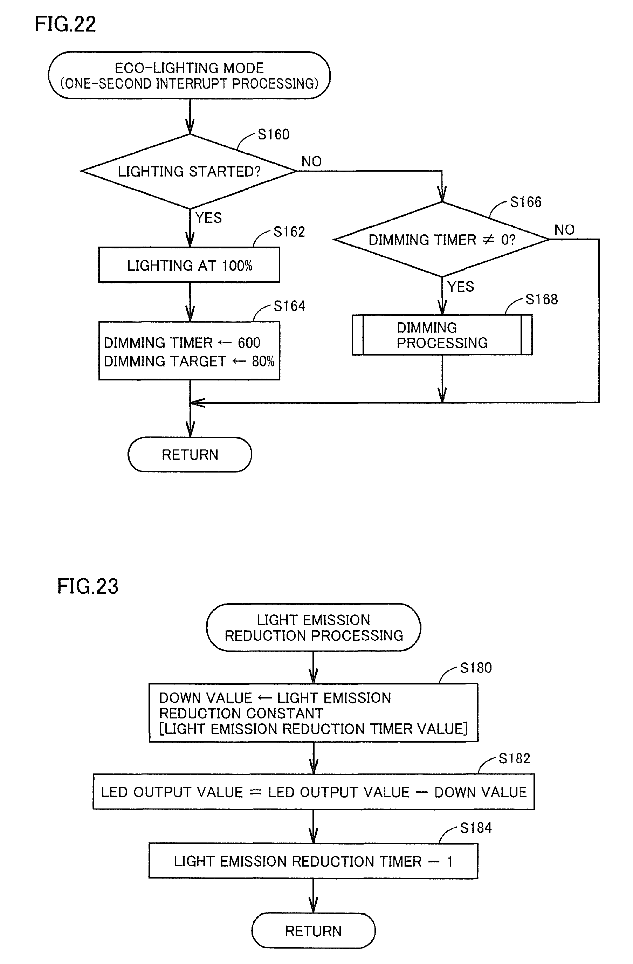

Fig. 22 is a flowchart representing processing in the eco-lighting mode according to the embodiment of the present invention.

A flow is executed by CPU 22 reading a program stored in memory 29.

CPU 22 performs processing shown in Fig. 21 by interrupt processing at a prescribed interval (for example, at an interval of 1 second).

Referring to Fig. 22, first, CPU 22 determines whether or not lighting is to be started (step S 160). When it is determined not to start lighting (NO in step S 160), the process proceeds to step S166.

On the other hand, When it is determined that lighting is to be started (YES in step S160), CPU 22 sets a dimming ratio to 100% (step S162). Specifically, CPU 22 controls PWM control circuit 23 such that a dimming ratio with emission from LED module 31 and/or LED module 32 attains to 100%. Under such control, it is possible for the user to recognize brightness corresponding to the dimming ratio of 100% at the time of start of lighting.

Next, CPU 22 sets a light emission reduction timer for keeping time of light emission reduction to a prescribed time period (to 600 seconds in the present example), determines a dimming ratio which is a light emission reduction target (80% in the present example), and ends the process (return). Namely, the process returns to step S1 in Fig. 7.

On the other hand, when it is determined in step S160 not to start lighting (NO in step S160), CPU 22 determines whether or not the light emission reduction timer is 0 (step S166). When it is determined that the light emission reduction timer has reached 0 (NO in step S166), the process ends (return).

When it is determined that the light emission reduction timer has not reached 0 (YES in step S166), CPU 22 performs dimming processing (step S168).

Fig. 23 is a diagram illustrating a subroutine of the light emission reduction processing in step S168.

Referring to Fig. 23, when the light emission reduction processing starts, CPU 22 inputs the light emission reduction timer at that time point as a variable in a relational expression representing the relation between the dimming ratio and the time shown in Fig. 21, and calculates a value for light emission reduction (a dimming ratio) at that time point as a DOWN value (step S180).

Then, CPU 22 sets a value obtained by subtracting the DOWN value from a current output value (dimming ratio) as the dimming ratio (step S182). Specifically, CPU 22 controls PWM control circuit 23 such that a dimming ratio with emission from LED module 31 and/or LED module 32 attains to the calculated value.

Thereafter, CPU 22 decrements the light emission reduction timer by 1 (step S 184) and ends the dimming processing (return).

Though the example above represents an operation from start of lighting, a similar operation is performed also when a dimming ratio or a color tone is changed.

With such an operation, in the eco-lighting mode, light emission reduction is gradually carried out as shown in Fig. 21 to luminance at a prescribed ratio with respect to luminance at the time of start of lighting or luminance at the time of change in dimming ratio or color tone, in a certain time period from start of lighting. Though the dimming ratio is changed linearly with lapse of time in the graph of double logarithmic scale in which both of the ordinate and the abscissa represent logs as shown in Fig. 21 in the present example, the dimming ratio may be changed linearly with lapse of time. Thus, it becomes possible to change the dimming ratio without causing any feeling of strangeness or discomfort to a human, and a comfortable and natural light environment can be realized while energy can be saved.

In the eco-lighting mode, when the user presses "eco-light" button 60, a lighting control instruction is output from remote controller 50. Receiving the input of the lighting control instruction from remote controller 50, CPU 22 of lighting device 1 instructs PWM control circuit 23 to start lighting control of illumination unit 30. Here, it is assumed that, in response to pressing of "eco-light" button 60. that is, input of the lighting control instruction from remote controller 50, repetition of the "eco-lighting mode" → a "normal mode" → the "eco-lighting mode" → ... is carried out. Namely, when the lighting control instruction is input from remote controller 50 in the eco-lighting mode, CPU 22 of lighting device 1 cancels the eco-lighting mode. Here, CPU 22 controls PWM control circuit 23 such that luminance at the time of start of lighting is attained.

It is noted that the eco-lighting mode can be combined with the light environment control mode. In this case, in lighting control during each of six periods tA to tF in the light environment control mode, CPU 22 causes gradual light emission reduction to luminance at a prescribed ratio with respect to luminance at the time of start in a certain time period from start of the period. Further, a light source according to the present invention is not limited to an LED, and it may be such a light source as a fluorescent lamp, EL (Electro-Luminescence), or the like.

<Illuminance Sensor Mode>

An illuminance sensor mode will now be described.

The illuminance sensor mode refers to a mode for controlling the dimming ratio based on a result of obtainment by illuminance sensor 28 so as to achieve preset illuminance.

Pressing of "illuminance sensor" button 70 of remote controller 50 by the user causes transition to the illuminance sensor mode.

In the illuminance sensor mode, CPU 22 obtains a result of measurement by illuminance sensor 28 defined times at predetermined intervals (for example, 8 times every 0.5 milliseconds). Then, CPU 22 calculates an average value of the results. This average value is defined as a measured value M1 CPU 22 repeatedly calculates measured value M1 for a prescribed period, and stores measured values M1 in a prescribed area of memory 29. Then, CPU 22 calculates a trimmed average value of measured values M1 prescribed times (for example, 10 times). This average value is defined as a measured value M2. CPU 22 obtains the average value every 4 milliseconds by obtaining the result of measurement by illuminance sensor 28 8 times every 0.5 milliseconds to thereby calculate measured value M1, and CPU 22 obtains the average value for 2 seconds by calculating measured value M2 using 10 measured values M1.

Prior to the illuminance sensor mode, a target illuminance is set. Pressing of "environment registration" button 69 of remote controller 50 by the user causes setting of a target illuminance. Namely, when CPU 22 receives a signal generated as a result of pressing of "environment registration" button 69, then, CPU 22 calculates measured value M2 described above, and obtains calculated measured value M2 as a value indicating the illuminance at that time. Then, CPU 22 writes the obtained value as a "target illuminance" into a prescribed area of memory 29.

The target illuminance can be set in such a manner that, in a room in which lighting device 1 is placed and which is shut off from external light, the user adjusts the dimming ratio with remote controller 50 so as to achieve desired brightness and thereafter the user presses "environment registration" button 69, to thereby accurately set desired illuminance as the "target illuminance".

The case where the user himself/herself sets the "target illuminance" by adjusting the dimming ratio so as to achieve desired brightness with the use of remote controller 50 has been described, however, a different "target illuminance" may be registered in advance as a default value in memory 29, so that the user can select a "target illuminance" from among the "target illuminances", to thereby set the "target illuminance".

Further, CPU 22 sets multiple illuminance levels based on the target illuminance in order to allow the user to change the target illuminance. In addition, in order to prevent hunting at each illuminance level, a high level and a low level defining a target illuminance range are set. Here, the target illuminance is set to the high level of illuminance level 1, and a low level of illuminance level 1 which is lower in illuminance than the target illuminance as well as high levels and low levels of illuminance levels 2 and 3 which are higher in illuminance than illuminance level 1 are set.

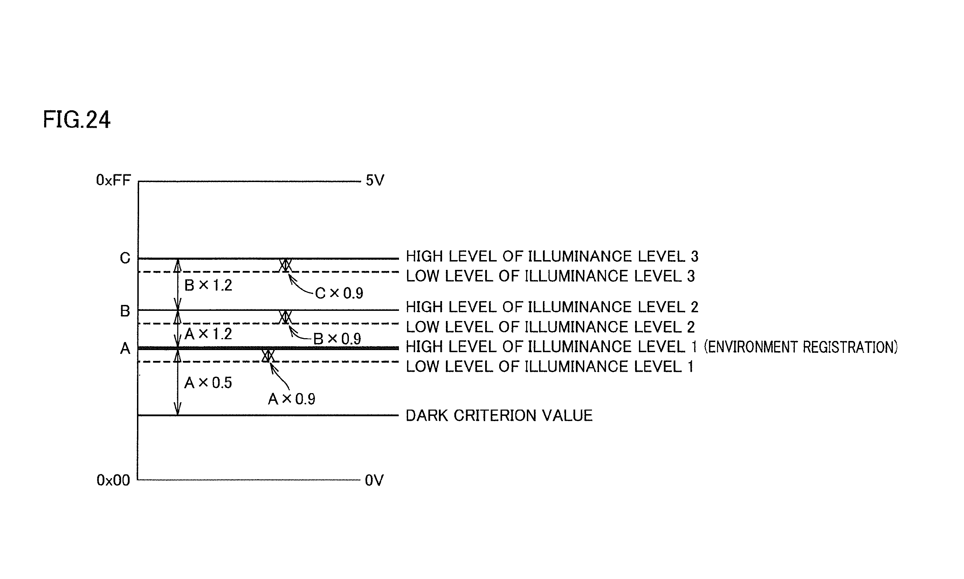

Fig. 24 is a diagram for illustrating the setting of the illuminance levels.

Referring to Fig. 24, by way of example, CPU 22 sets a target illuminance (a value A in the figure) as "the high level of illuminance level 1" sets an illuminance (a value B in the figure) which is 1.2 times as high as the high level of illuminance level 1 as "the high level of illuminance level 2", and sets an illuminance (a value C in the figure) which is 1.2 times as high as the high level of illuminance level 2 as "the high level of illuminance level 3." Further, CPU 22 sets an illuminance which is 0.9 times as high as the illuminance set as the high level, as the low level of each illuminance level. As will be described later, CPU 22 sets an illuminance which is 0.5 times as high as the target illuminance (value A in the figure), as a criterion value used for "dark determination" in order to sense sudden darkening.

CPU 22 registers in advance a "brightness level" in memory 29 for each brightness (illuminance) for the purpose of control in the illuminance sensor mode. It is noted that the unit for brightness is lux (lx).

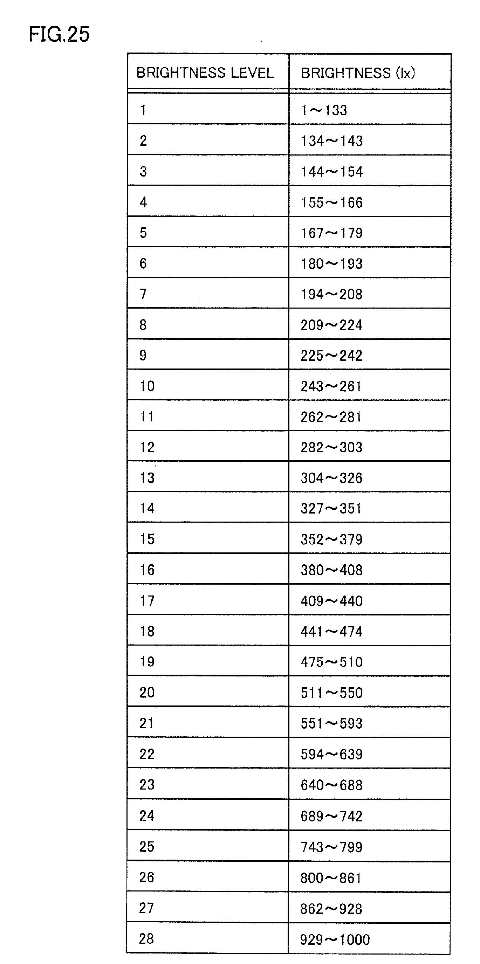

Fig. 25 is a diagram showing one example of correspondence between a brightness level and a registered brightness.

In the example in Fig. 25, a brightness level 28 represents full lighting and a brightness level 1 represents dim lighting. In accordance with the foregoing correspondence, CPU 22 achieves dimming within a range from brightness level 28 (full lighting) to 1 (dim lighting) in the illuminance sensor mode.

Control in the illuminance sensor mode includes two types of control. i.e., control at the time of start and normal control. The control at the time of start is carried out when the illuminance sensor mode is started, and transition to the normal control is made in accordance with a result of determination.

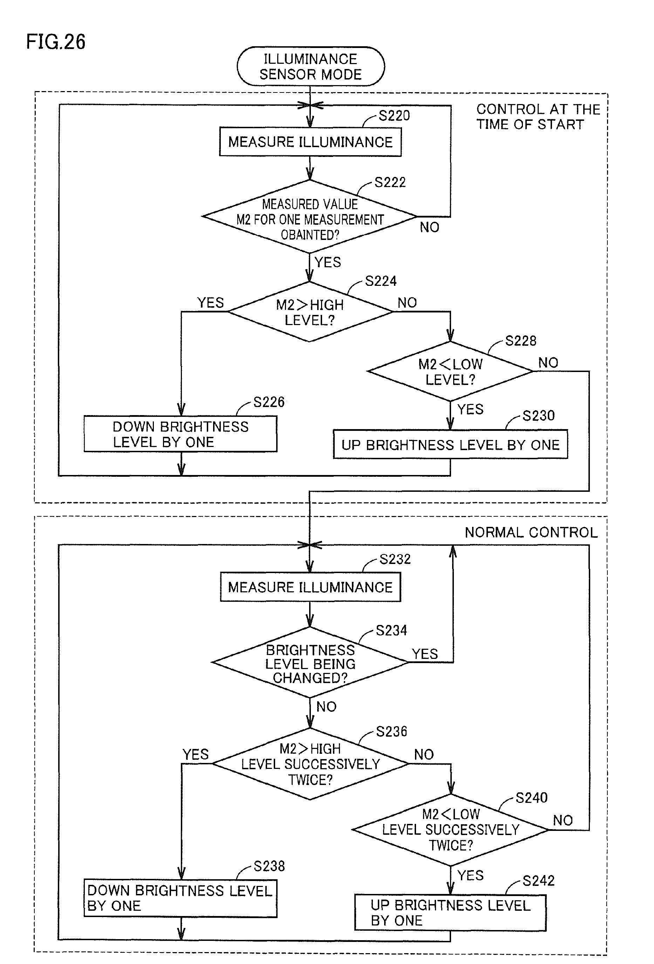

Fig. 26 is a diagram showing a flow in the illuminance sensor mode according to the embodiment of the present invention.

The flow is executed by CPU 22 reading a program stored in memory 29.

Referring to Fig. 26, when transition to the illuminance sensor mode is made, CPU 22 conducts illuminance measurement (step S220). The illuminance measurement here refers to processing for calculating measured value M2 from a result of measurement by illuminance sensor 28 as described above.

Next, when CPU 22 obtains one measured value M2, that is, measured value M2 which is the average value of results of measurement for 2 seconds in the example described above (YES in step S222), CPU 22 performs a determination operation for comparing measured value M2 with set illuminance level 1 which is the target illuminance.

As a result of the determination operation, when measured value M2 indicates an illuminance higher than the high level of illuminance level 1 which is the target illuminance (YES in step S224), CPU 22 changes a dimming ratio so as to decrease the current brightness level by one (step S226).

When measured value M2 indicates an illuminance lower than the low level of illuminance level 1 which is the target illuminance (NO in step S224 and YES in step S228), CPU 22 changes the dimming ratio so as to increase the current brightness level by one (step S230).

When CPU 22 changes the dimming ratio in step S226 or step S230, CPU 22 thereafter returns to the operation in step S220. Then, CPU 22 repeats the foregoing operations until measured value M2 is determined to indicate an illuminance between the low level and the high level of illuminance level 1 which is the target illuminance.

When measured value M2 indicates an illuminance between the low level and the high level of illuminance level 1 which is the target illuminance (NO in step S224 and NO in step S228), CPU 22 does not change the brightness level on the assumption that the current brightness level matches the target illuminance. Then, CPU 22 terminates the control at the time of start, and makes transition to the normal control.

After transition to the normal control is made, CPU 22 conducts illuminance measurement (step S232). As in step S220, the illuminance measurement here refers to processing for calculating measured value M2 from results of measurement by illuminance sensor 28 as described above.

In the normal control, CPU 22 performs a determination operation for comparing measured value M2 with set illuminance level 1 which is the target illuminance twice. When two results of measurement are equal to each other, CPU 22 changes the brightness level. Here, CPU 22 does not use measured value M2 obtained from the result of measurement by illuminance sensor 28 during change in brightness level (YES in step S234).

Namely, when measured value M2 indicates an illuminance higher than the high level of illuminance level 1 which is the target illuminance in each of the two results in the determination operation (YES in step S236), CPU 22 changes the dimming ratio so as to decrease the current brightness level by one (step S238).

When measured value M2 indicates an illuminance which is lower than the low level of illuminance level 1 which is the target illuminance in each of the two results in the determination operation (NO in step S236 and YES in step S240), CPU 22 changes the dimming ratio so as to increase the current brightness level by one (step S242).

When the two results in the determination operation are different from each other or when measured value M2 indicates an illuminance between the low level and the high level of illuminance level 1 which is the target illuminance in each of the two results in the determination operation (NO in step S236 and NO in step S240), CPU 22 does not change the brightness level.

CPU 22 repeats the foregoing normal control during the illuminance sensor mode.

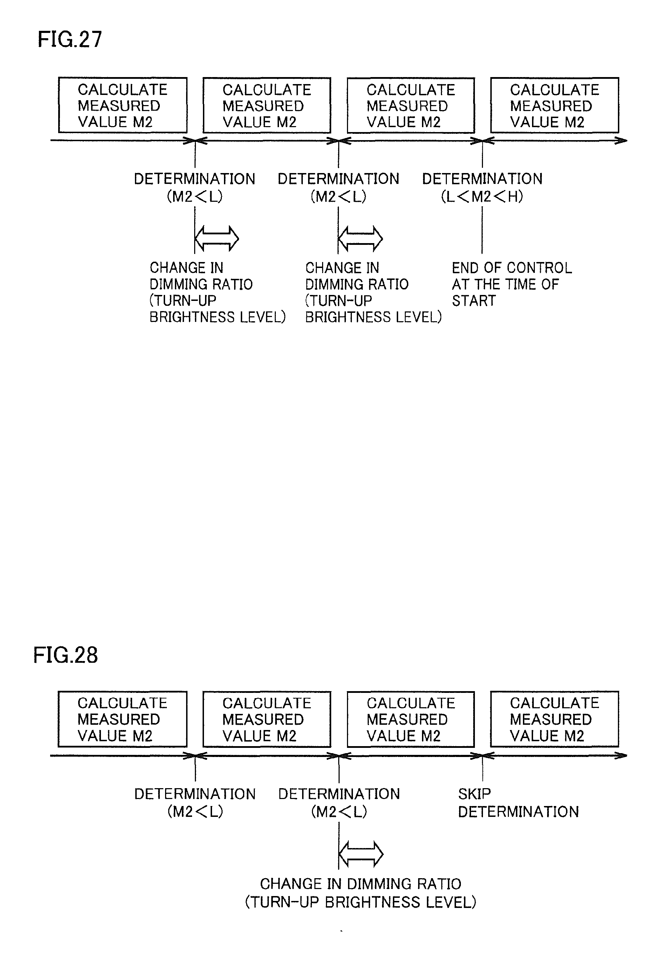

Figs. 27 and 28 are diagrams illustrating the control at the time of start and the normal control, respectively.

When it is assumed that measured value M2 is calculated every 2 seconds as in the example described above, referring to Fig. 27, in the control at the time of start, CPU 22 compares measured value M2 with illuminance level 1 which is the target illuminance every 2 seconds, and changes the brightness level such that the brightness level is closer to illuminance level 1. In the example shown in Fig. 27, when it is determined that measured value M2 is lower than the target illuminance in the determination operation, CPU 22 increases the brightness level by one such that the brightness level is closer to illuminance level 1. When measured value M2 falls within a range of the target illuminance, CPU 22 terminates the control at the time of start. In the control at the time of start, measured value M2 obtained when the brightness level is changed is also used in a next determination operation.

Referring to Fig. 28, in the normal control, CPU 22 compares measured value M2 with illuminance level 1 which is the target illuminance every 2 seconds, however, it changes the brightness level such that the brightness level is closer to illuminance level 1 when the two successive results of determination are equal to each other. In the example shown in Fig. 28, when it is determined that measured value M2 is lower than the target illuminance in the determination operation successively twice, CPU 22 increases the brightness level by one such that the brightness level is closer to illuminance level 1 at the time of second determination. Further, measured value M2 obtained at the time when the brightness level is being changed is not used in the determination operation. By performing at least twice the operation for determining measured value M2 for change in brightness level, a time interval for change in brightness level can be increased as compared with the control at the time of start in which the brightness level is changed in a single determination operation. Moreover, measured value M2 obtained at the time when the brightness level is being changed is not used in the determination operation, so that a time interval for change in brightness level can further be increased.

As shown in Figs. 27 and 28, in the illuminance sensor mode, the brightness level in the control at the time of start until the target illuminance is reached is changed at intervals shorter than those in the normal control. Namely, immediately after the transition to the illuminance sensor mode, the dimming ratio is controlled until the target illuminance is rapidly reached.

For example, in the case of the example described above, a shortest time required for change through 27 levels from full lighting to dim lighting in the control at the time of start is calculated as a determination time period (2 seconds x 27 = 54 seconds) + a final dimming change time period (200 milliseconds) = 54.2 seconds.

Under such control, for example in the case where the target illuminance is set to be low, power consumption can further be suppressed as compared with a case of gently changing the dimming ratio to that illuminance.

On the other hand, in the normal control which is control after the target illuminance is once achieved, a brightness level is changed at an interval longer than that in the case of the control at the time of start. Namely, once the target illuminance is achieved, the dimming ratio is controlled in accordance with change in illuminance at an interval longer than in the control at the time of start, that is, gently.

For example, in the case of the example described above, a shortest time required for change through 27 levels from full lighting to dim lighting in the normal control is calculated as a determination time period and a halfway dimming change time period (a determination time period to be skipped) (6 seconds x 26 = 156 seconds) + a final determination time period (4 seconds) + a final dimming change time period (200 milliseconds) = 160.2 seconds.

Such control can suppress flicker due to change in brightness level at fine intervals after the target illuminance is once achieved, so that feeling of discomfort can be suppressed.

In the present example, the case where a time interval at the time of change in brightness level in the normal control is increased as compared with the control at the time of start with a method of increasing the number of times of determination operations for change in brightness level in the normal control as compared with that in the control at the time of start and a method of avoiding use of the measured value, which is obtained at the time when the brightness level is being changed in the normal control, in the determination operation, has been described. Alternatively, however, a time interval at the time of change in brightness level in the normal control may be controlled to increase as compared with that in the control at the time of start, by using only any one of the methods.

In the illuminance sensor mode, for example, pressing of "illuminance sensor" button 70 of remote controller 50 by the user can change a target illuminance. Specifically, when CPU 22 accepts pressing of "illuminance sensor" button 70 while a target illuminance is set to illuminance level 1, CPU 22 increases an illuminance level for use in the determination operation by one from the current level to illuminance level 2. Further, when CPU 22 accepts pressing of "illuminance sensor" button 70 while a target illuminance is set to illuminance level 2, CPU 22 increases an illumination level by one to illuminance level 3. When CPU 22 accepts pressing of "illuminance sensor" button 70 while a target illuminance is set to illuminance level 3, CPU 22 terminates the illuminance sensor mode. The case where an illuminance level is changed by using "illuminance sensor" button 70 has been described in the present example, however, the illuminance level may be changed by using "bright" button 55 or "dark" button 56.

In the case where the target illuminance is set to a desired brightness level in a room which is shut off from external light as described above, even when dimming is carried out to achieve the target illuminance set in the illuminance sensor mode after external light is allowed to enter, the user sometimes feels dark and feels that the illuminance in the room is low because of difference in illuminance between the inside and the outside of the room. In such a case, since the target illuminance can be increased from initially set illuminance level 1 to illuminance level 2 only by pressing again "illuminance sensor" button 70, dimming can immediately be carried out to change to a higher target illuminance. Accordingly, since it is not necessary to newly set a target illuminance again, user's convenience is enhanced.

Here, preferably, CPU 22 once changes a brightness level to such an extent that a human can recognize change in brightness (for example, six levels) in a direction of change, and thereafter carries out the control at the time of start described above, to thereby change the dimming ratio to the newly set target illuminance.

Specifically, when CPU 22 accepts pressing of "illuminance sensor" button 70 in the illuminance sensor mode, CPU 22 increases an illuminance level for use in the determination operation by one from the current level, and also changes the dimming ratio to increase by six levels from the current brightness level. Thereafter, CPU 22 carries out the control at the time of start to quickly change the dimming ratio such that the dimming ratio falls within a range of the target illuminance. By starting the control at the time of start after the dimming ratio is once increased by multiple levels (six levels in the present example) from the current brightness level at the time when the illuminance level is increased, the user can more readily feel increase in brightness level.

In the normal control described above, preferably, CPU 22 makes "dark determination" for determining whether or not brightness in the surroundings has become extremely low, for example, like change in illuminance in a room at the time when a curtain is closed. Here, a criterion value for "dark determination" described above is used.

Namely, in the case where measured value M2 indicates an illuminance lower than the criterion value for "dark determination" in the determination operation in the normal control, CPU 22 determines that brightness in the surroundings has become extremely low and changes the dimming ratio so as to immediately set the brightness level to brightness level 28 corresponding to full lighting. Thereafter, transition to the control at the time of start is made.

By performing such operations, even when brightness in the surroundings has become extremely low such as when a curtain is closed, a target illuminance can appropriately be achieved.

It is noted that such control can be combined with other control modes. For example, when the control is applied to the light environment control mode in step S6 shown in Fig. 8, the illuminance sensor mode can be set for one hour before each set time. In this case, a color is set only to the daylight color and a brightness level at the time of start of the illuminance sensor mode is set to brightness level 28 corresponding to full lighting.

When transition to the illuminance sensor mode is made in the case where lighting in a color tone registered in the favorite registration mode in step S18 shown in Fig. 8 which will be described later is carried out, only brightness is changed in the illuminance sensor mode while a color tone (color ratio) set as favorite is maintained. Namely, CPU 22 calculates a brightness level from the brightness (the sum of the daylight color and the light color) registered as favorite, and sets a brightness level at the time of start in the illuminance sensor mode to that brightness level.

In addition, in the case of combining the illuminance sensor mode with the eco-lighting mode in step S 10 shown in Fig. 7, CPU 22 carries out dimming within a range from a brightness level 26 (80%) to 1 (dim lighting). It is noted that, when the brightness level is 26 or higher at the time of start of the illuminance sensor mode even in the eco-lighting mode, CPU 22 starts the illuminance sensor mode at that brightness level. Then, once the brightness level becomes lower than brightness level 26, the dimming such that the brightness level does not exceed 26 is carried out.

It is noted that, at the time of start of the illuminance sensor mode, CPU 22 writes the brightness level at that time into a prescribed area of memory 29. Then, in cancelling the illuminance sensor mode, CPU 22 returns the brightness level to the brightness level at the time of start of the illuminance sensor mode.

<Timer Mode>

A timer mode will now be described.

The timer mode refers to a mode for automatically performing turn-on and turn-off operations of lighting device 1 based on time and the like set by the user.

In the present example, for the timer mode, three timer modes can be set in accordance with a user's operation instruction. Specifically, an OFF timer mode, an ON timer mode, and an absence timer mode will be described.

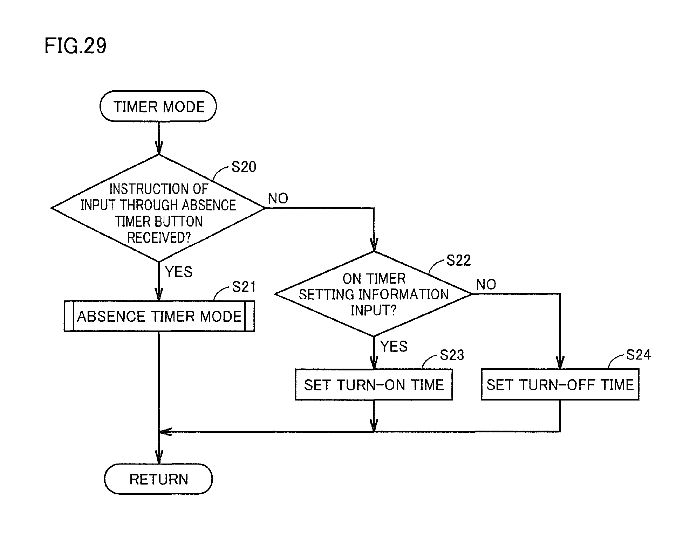

Fig. 29 is a diagram illustrating a flow in the timer mode according to the embodiment of the present invention.

Referring to Fig. 29, first, it is determined which timer mode has been indicated. Specifically, first, CPU 22 determines whether an instruction of input through "absence timer" button 67 has been received (step S20). In step S20, when CPU 22 determines that an instruction for absence timer control output in response to pressing of "absence timer" button 67 provided in remote controller 50 has been input (YES in step S20), transition to the absence timer mode is made (step S21). Details of the absence timer mode will be described later.

On the other hand, when CPU 22 determines in step S20 that an instruction of input through "absence timer" button 67 has not been received (NO in step S20), then, CPU 22 determines whether or not ON timer setting information has been input (step S22).

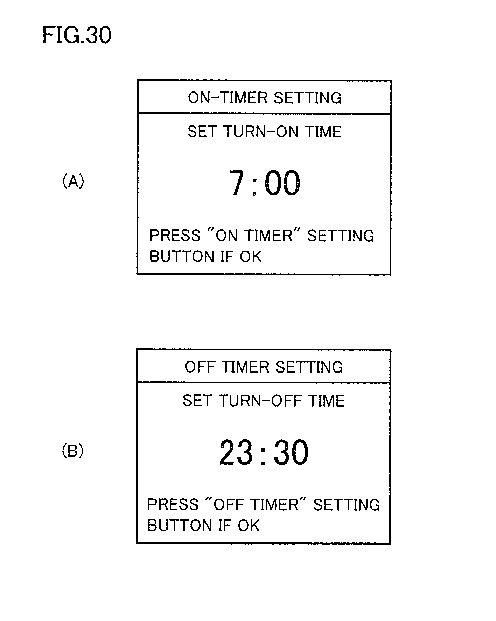

Fig. 30 is a diagram illustrating an ON timer setting screen and an OFF timer setting screen according to the embodiment of the present invention.

Pressing of "ON timer" button 75 by the user causes start of an operation for ON timer setting in the ON timer mode. Specifically, pressing of "ON timer" button 75 causes liquid crystal panel 52 to display an ON timer setting screen (not shown) as shown in (A) of Fig. 30. In the ON timer setting screen, the user can set a turn-on time by using "UP" button 57A and "DOWN" button 57B. Then, pressing again of "ON timer" button 75 causes remote controller 50 to output ON timer setting information. When the ON timer setting information is output from remote controller 50, for example, "ON timer" is displayed on liquid crystal panel 52. Namely, information indicating start of the ON timer mode is stored in memory 80 of remote controller 50. After display, for example, of "ON timer" on liquid crystal panel 52, pressing again of "ON timer" button 75 of remote controller 50 causes remote controller 50 to output an instruction to cancel the ON timer setting. When CPU 22 receives the instruction to cancel the ON timer setting from remote controller 50, CPU 22 cancels the ON timer mode. In the case where the instruction to cancel the ON timer setting is output from remote controller 50, "ON timer" displayed on liquid crystal panel 52 will no longer be displayed. It is noted that combination with other modes can also be made. Moreover, once lighting control in the ON timer mode is started, data may be reset. Alternatively, lighting control may repeatedly be performed while data are held.

Similarly, pressing of "OFF timer" button 74 by the user allows start of an operation for OFF timer setting in the OFF timer mode. Specifically, pressing of "OFF timer" button 74 causes liquid crystal panel 52 to display an OFF timer setting screen as shown in (B) of Fig. 30. In the OFF timer setting screen, the user can set a turn-off time by using "UP" button 57A and "DOWN" button 57B. Then, pressing again of "OFF timer" button 74 causes remote controller 50 to output OFF timer setting information. When the OFF timer setting information is output from remote controller 50, for example, "OFF timer" is displayed on liquid crystal panel 52. Namely, information indicating start of the OFF timer mode is stored in memory 80 of remote controller 50. After display, for example, of "OFF timer" on liquid crystal panel 52, pressing again of "OFF timer" button 74 of remote controller 50 causes remote controller 50 to output an instruction to cancel the OFF timer setting. When the instruction to cancel the OFF timer setting from remote controller 50 is input, CPU 22 cancels the OFF timer mode. In the case where the instruction to cancel the OFF timer setting is output from remote controller 50, "OFF timer" displayed on liquid crystal panel 52 will no longer be displayed. It is noted that combination with other modes can also be made. For example, combination with the ON timer mode can also be made. In the case where the ON timer mode and the OFF timer mode are combined with each other, it is possible that set times do not overlap with each other or they can also be the same. In the case where the same time point is set, any one mode may be prioritized or processing complying with both of the modes may be inactivated. Moreover, once turn-off control in the OFF timer mode is started, data may be reset. Alternatively, turn-off control may be repeatedly performed while data are held.

Referring to Fig. 29 again, when CPU 22 determines in step S22 that ON timer setting information has been input from remote controller 50 (YES in step S22), CPU 22 sets a turn-on time in the ON timer mode. Through the processing, in the case where the turn-on time in the ON timer mode is set, CPU 22 carries out lighting control of illumination unit 30 at the set time. For example, CPU 22 sets full lighting (the dimming ratio of 100%) in the daylight color at the set time. Here, even in the case where a lighting state has already been set at the set time, lighting control in the ON timer mode can be carried out.

Though lighting control is carried out in the state of full lighting in the daylight color at the set time in the ON timer mode in the present example, the present invention is not limited thereto. Alternatively, the dimming ratio and a color tone in the ON timer mode may be set by the user. In such a case, setting may be such that lighting in a lighting state with the dimming ratio and a color tone being registered in the favorite registration mode which will be described later is carried out.

On the other hand, when it is determined in step S22 that ON timer setting information has not been input from remote controller 50, that is, OFF timer setting information has been input from the remote controller (NO in step S22), a turn-off time in the OFF timer mode is set. Through the processing, in the case where a turn-off time in the OFF timer mode is set, CPU 22 carries out turn-off control of illumination unit 30 at the set time. Here, in the case where a turned-off state has already been set at the set time, no operation is particularly performed.

The absence timer mode according to the embodiment of the present invention will now be described.

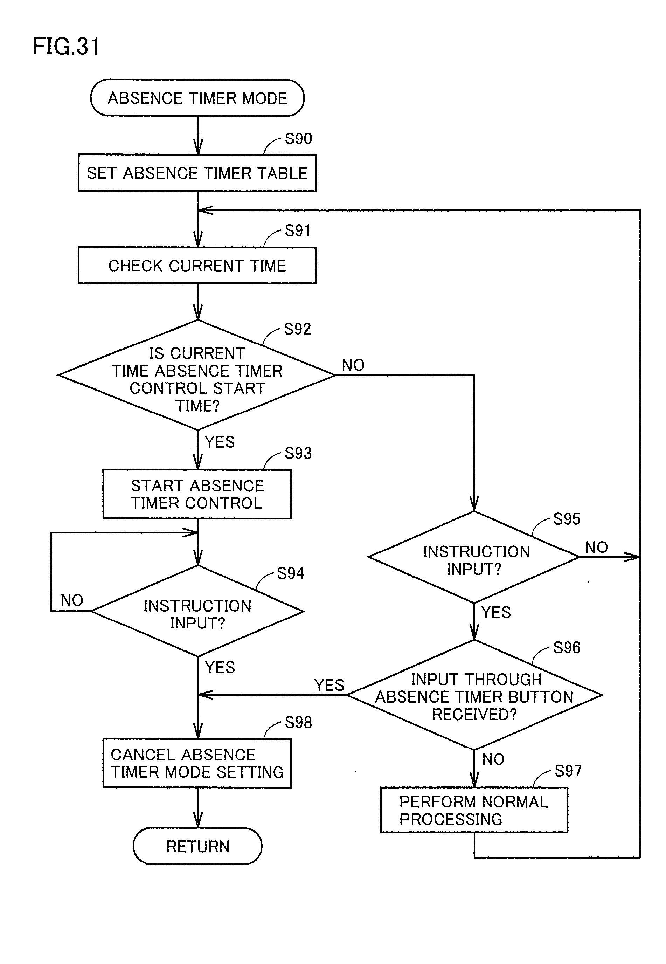

Fig. 31 is a diagram illustrating a flow in the absence timer mode according to the embodiment of the present invention.

Referring to Fig. 31, first, CPU 22 sets an absence timer table for defining turn-on and turn-off operations in the absence timer mode (step S90). Specifically, by way of example, CPU 22 refers to an absence timer table stored in advance in memory 29.

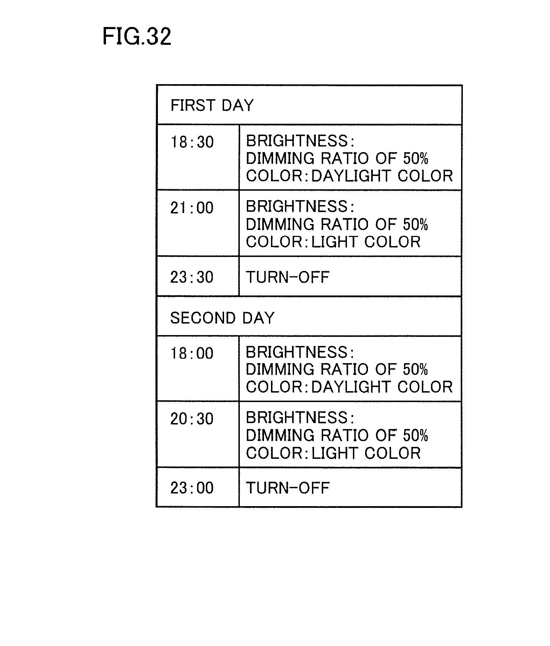

Fig. 32 is a diagram illustrating the absence timer table according to the embodiment of the present invention.

Referring to Fig. 32, the absence timer table according to the embodiment of the present invention defines an operation of illumination unit 30 in a set time zone. Here, two patterns are shown, and a pattern for the first day and a pattern for the second day are provided.

In the pattern for the first day, an absence timer control start time is set to 18:30, brightness is set to the dimming ratio of 50%, and a color tone is set to the daylight color. It is noted that the dimming ratio of the light color is set to 0%. Moreover, a switch time is set to 21:00, brightness is set to the dimming ratio of 50%, and a color tone is set to the light color. It is noted that the dimming ratio of the daylight color is set to 0%. Further, a turn-off state is set at 23:30, which is the turn-off time. Specifically, each of the dimming ratio of the daylight color and the dimming ratio of the light color is set to 0%.

In the pattern for the second day, at 18:00, brightness is set to the dimming ratio of 50% and a color tone is set to the daylight color. It is noted that the dimming ratio of the light color is set to 0%. Moreover, at 20:30, brightness is set to the dimming ratio of 50% and a color tone is set to the light color. It is noted that the dimming ratio of the daylight color is set to 0%. Further, a turn-off state is set at 23:00, which is the turn-off time. Specifically, each of the dimming ratio of the daylight color and the dimming ratio of the light color is set to 0%.

Though only the patterns for two days are shown by way of example, yet another pattern (for example, for a third day) can also additionally be provided. In the present example, for example, the pattern for the first day is used again for the third day.

It is noted that the absence timer table is merely one example and the set time can be set to another time, and a brightness and a color tone may also be set differently.

For example, an absence timer control start time, a switch time, a turn-off time, the dimming ratio, and the like may be settable, for example, by displaying the absence timer setting screen such as the ON timer setting screen or the OFF timer setting screen described above in accordance with an instruction of input through "absence timer" button 67. Alternatively, though the case where a color tone is changed in the absence timer mode is described in the present example, only the dimming ratio may be set to be changed over time. In setting, the case where the time is set by using "UP" button 57A and "DOWN" button 57B has been described in the present example, however, the present invention is not particularly limited thereto. For example, even in the case where these buttons are not provided, the time may be set, for example, in such a manner that a displayed time is incremented in accordance with the number of times that "absence timer" button 67 is pressed. This is also the case for other cases.

In the present example, the daylight color is not simply turned on and off as the pattern for the first day, but the light color which is a different color tone is set at a subsequent prescribed time. Namely, a color tone is changed by adjusting a ratio between the dimming ratios of the daylight color and the light color corresponding to a plurality of light emission units. Therefore, not simply by turning on but by changing a color tone, change in lighting in a room can more readily be recognized even from the outside of the room. For example, a criminal who repeatedly makes a preliminary inspection on a room equipped with lighting device 1 at certain time intervals will recognize change in color tone of lighting in the room from the daylight color to the light color without visual recognition of a moment of color tone change. Thus, camouflage as if a user actually performed an operation to change a color tone of lighting can be made use of, so that crime prevention can further be enhanced by making use of camouflage as if the user were at home.

Moreover, by providing a plurality of patterns in the absence timer table, crime prevention can further be enhanced by using patterns different in operation, instead of continually using the same pattern.

In a house or the like where a pet or the like is kept, even if a user who is a keeper is away, the pet does not have to wait for the user's coming home in the darkness because lighting control is carried out in accordance with the absence timer table. As a result, it is also possible to lessen stress felt by the pet or the like.

Moreover, since the absence timer mode can be set by a one-touch operation of "absence timer" button 67 provided in remote controller 50, troublesome operations for timer setting is not necessary, which also enhances usability.

Referring again to Fig. 31, CPU 22 then checks the current time (step S91).

Then, CPU 22 determines whether or not the current time is the absence timer control start time (step S92). Specifically, for example, it is determined whether or not the current time is 18:30 which is the absence timer control start time in the pattern for the first day.

In step S92, when CPU 22 determines that the current time is the absence timer control start time (YES in step S92), then, CPU 22 starts absence timer control (step S93). For example, based on the absence timer table shown in Fig. 31, CPU 22 initially sets a color tone to the daylight color at the dimming ratio of 50%, and sets brightness at the dimming ratio of 50% and a color tone of the light color at 21:00. Further, the turn-off state is set at 23:30. As for the second day, absence timer control is carried out by using the pattern for the second day.

Then, in step S94, CPU 22 determines whether or not an instruction has been input after absence timer control is started (step S94).

When CPU 22 determines in step S94 that the instruction has been input after absence timer control is started (YES in step S94), CPU 22 cancels the setting of the absence timer mode (step S98). Then, the process ends (return).

On the other hand, when it is determined in step S92 that the current time is not the absence timer control start time (NO in step S92), CPU 22 determines whether or not an instruction has been input (step S95).

When CPU 22 determines in step S95 that the instruction has been input (YES in step S95), then, CPU 22 determines whether or not an instruction of input through the absence timer button has been received (step S96).

When CPU 22 determines in step S96 that the instruction of input is the instruction of input through the absence timer button (YES in step S96), CPU 22 cancels the setting of the absence timer mode (step S98).

On the other hand, when CPU 22 determines in step S96 that the instruction of input is not the instruction of input through the absence timer button (NO in step S96), that is, when CPU 22 determines that the instruction of input is an instruction of input through a button other than that, CPU 22 performs normal processing in accordance with an operation of other different buttons (step S97). In the normal processing, for example, when "full turn-on" button 54 of remote controller 50 is pressed, CPU 22 receives input of an instruction for full turn-on control and instructs PWM control circuit 23 to start full turn-on control of illumination unit 30. This is also the case for an operation of other buttons.

Then, the process returns to step S91. When it is determined in step S95 that the instruction has not been input (NO in step S95), the process returns to step S91 and similar processing is repeated.

Namely, in the absence timer mode according to the embodiment of the present invention, the current time is checked, and when the current time is the absence timer control start time, absence timer control in accordance with the absence timer table can be started.

On the other hand, when CPU 22 determines that some instruction has been input after absence timer control is started, CPU 22 cancels setting of the absence timer mode. For example, when "full turn-on" button 54 of remote controller 50 is pressed after absence timer control is started, the setting of the absence timer mode is canceled. Though only cancellation of the setting of the absence timer mode has been described in the present example, processing in accordance with an operation of the button may be performed together. For example, upon receiving input of the instruction for full turn-on control, CPU 22 may cancel the setting of the absence timer mode and instruct PWM control circuit 23 to start full turn-on control of illumination unit 30. This is also the case for an operation of other buttons. Moreover, this is also the case for an operation of operation SW 42 of lighting device 1 without being limited to an operation of a button of remote controller 50.

Then, when the instruction of input through the absence timer control button is received before the absence timer control start time, the setting of the absence timer mode is canceled. When the instruction of input through a button other than that is received, processing with priority being placed on that button is performed, without canceling the setting of the absence timer mode.

With the processing, for example, in the case where the user comes home and then operates remote controller 50 after absence timer control is started, the fact that the user has come home is grasped. Therefore, the absence timer mode is terminated, and the normal processing can be performed. Here, since the setting of the absence timer mode can be canceled by an operation of other buttons without pressing a button for giving an instruction to set/cancel the absence timer mode, for example, "absence timer" button 67 again, the user's convenience is enhanced. In other words, if the setting of the absence timer mode can be canceled only by pressing again "absence timer" button 67 when the user comes home after absence timer control is started, there is a possibility that a color tone is unexpectedly changed because the user has forgotten cancelling the setting of the absence timer mode (pressing again of "absence timer" button 67) or the turn-off state is unexpectedly set. By relaxing conditions for cancellation such that the setting of the absence timer mode is canceled even with an operation of other buttons, however, the user's convenience is enhanced.

On the other hand, if conditions for cancellation are relaxed such that the setting of the absence timer mode is canceled also with an operation of other buttons before absence timer control is started, there is a high possibility that the absence timer mode is canceled against the user's intention, which results in lowering in user's convenience. Therefore, with the processing in the absence timer mode according to the embodiment of the present invention, even after the absence timer mode is set by pressing "absence timer" button 67, the setting of the absence timer mode is not canceled with an operation of other buttons before absence timer control is started, but the processing in accordance with an operation of other buttons is prioritized, so that the user's convenience is enhanced.

In the present example, though setting of the absence timer mode is canceled when CPU 22 determines that some instruction has been input after absence timer control is started, the absence timer mode may be canceled only when a specific operation enabling cancellation is input after absence timer control is started. Specifically, the absence timer may be cancelled only when an instruction to turn lighting device 1 on, such as "full turn-on" or "favorite registration 1", is input after absence timer control is started. Namely, the absence timer mode does not necessarily have to be cancelled by all instruction inputs through buttons other than "absence timer" button 67, and an instruction input incapable of cancelling the absence timer mode may be provided.

In a case where the time at which the absence timer mode is set is later than the absence timer control start time, for example, in the case where the user presses "absence timer" button 67 at 19:00, absence timer control may be started from the absence timer control start time on a next day, or absence timer control may immediately be carried out in accordance with the absence timer table.

Though the case where the setting of the timer mode is cancelled in accordance with an instruction from remote controller 50 has been described above, for example, the setting of the timer mode may be cancelled also when the power switch included in operation SW 42 in lighting device 1 is turned off. It is noted that the absence timer mode may be combined with other modes such as the eco-lighting mode.

Though the case where "absence timer" button 67 serves for giving an instruction to set and cancel the absence timer mode has been described in the present example, input means for setting the absence timer mode and input means for cancelling the absence timer mode (for example, buttons of the remote controller) may be provided separately, so that cancellation before absence timer control is started is made by the input means dedicated for cancellation of the absence timer mode.

Though the case where the absence timer mode is executed by using the absence timer table stored in advance in memory 29 has been described in the present example, for example, an absence timer table may be prepared by automatic learning and the prepared absence timer table may be used. For example, an absence timer control start time, a switch time, and a turn-off time may automatically be set in such a manner that timing of turn-on and turn-off control of lighting device 1 and the like are stored on a one-week (seven-day) basis and then an average value is calculated. Alternatively, an absence timer control start time, a switch time, and a turn-off time on weekdays as well as an absence timer control start time, a switch time, and a turn-off time on holidays may automatically be set in such a manner that timing of turn-on and turn-off control of lighting device 1 on weekdays and holidays is stored on a one-week (seven-day) basis and then respective average values are calculated.

In the present example, though the time to start absence timer control is set based on time kept by CPU 22 in accordance with an oscillation signal from crystal oscillator 27, the method of setting the absence timer control start time is not limited thereto. Such a keep timer that the user can set the time until start of absence timer control may be provided. Specifically, the time to start absence timer control may be set in such a manner that the user makes setting so as to start absence timer control, for example, 3 hours later, and absence timer control is started 3 hours after the user's input.

<Brightness Turn-up Mode>

A brightness turn-up mode will now be described.

The brightness turn-up mode refers to a mode for setting the dimming ratio at 100% or higher. Turn-on in the brightness turn-up mode is performed with a color tone at the time point of transition to the brightness turn-up mode being set. Namely, in the present example, turn-on in the brightness turn-up mode with each color tone in 10 levels by way of example from the "light color" low in color temperature to the "daylight color" high in color temperature can be performed.

Pressing of "brightness turn-up" button 64 of remote controller 50 by the user causes transition to the brightness turn-up mode.

Specifically, when CPU 22 receives an instruction of input through "brightness turn-up" button 64 provided in remote controller 50 while lighting device 1 is turned on, CPU 22 starts the brightness turn-up mode, for example, with a color tone of the daylight color, and instructs PWM control circuit 23 to adjust PWM pulse S1 such that the dimming ratio of LED module 31 is set to 100% or higher. As will be described later, a margin to some extent is provided for a current supplied to LED module 31 in the case where the dimming ratio is set to 100% such that light can be output at an illuminance further higher than a rated illuminance of LED module 31, and for example, the duty ratio of about 80% is set. Therefore, the dimming ratio at 100% or higher can be set by not providing a margin but by supplying a current to LED module 31 at a duty ratio of 100%. Here, for example, the dimming ratio of 125% can be set.

It is noted that a method of controlling the dimming ratio of LED module 31 in the brightness turn-up mode is not limited to the above, and a method of changing a drive current value of an LED may be adopted. Specifically, a margin may be provided such that a current value not higher than a rated current of LED module 31, for example, about 80% in the case where the dimming ratio is set to 100% is set, and a current having a value close to the rated current of LED module 31 is supplied in the brightness turn-up mode, so that control for lighting at the dimming ratio of 100% or higher is carried out. Alternatively, the dimming ratio may be controlled by changing the number of LED modules to be turned on. Specifically, control may be such that LEDs 31 in number corresponding to 80% of the plurality of LEDs 31 are turned on with the rated current in the case where the dimming ratio is set to 100%, and all LEDs 31 are turned on with the rated current in the brightness turn-up mode.

On the other hand, a current close to the rated current is an overload for LED module 31. Therefore, CPU 22 performs the following operations in the brightness turn-up mode.

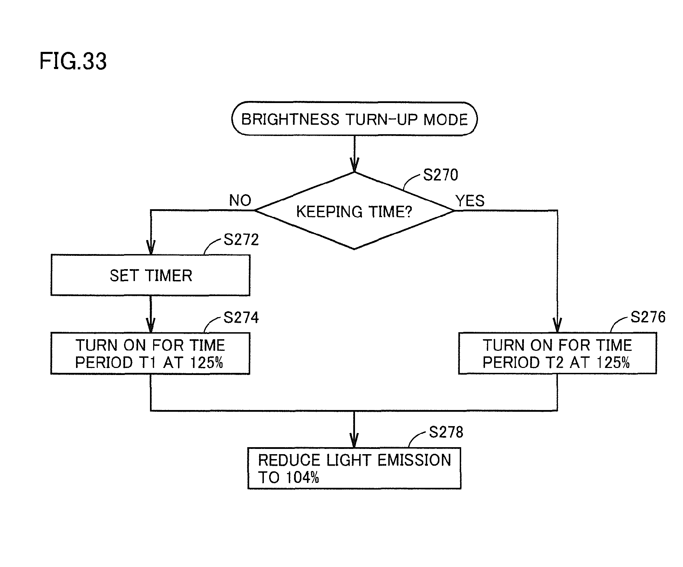

Fig. 33 is a diagram illustrating a flow in the brightness turn-up mode according to the embodiment of the present invention.

The flow is executed by CPU 22 reading a program stored in memory 29.

Referring to Fig. 33, when transition to the brightness turn-up mode is made, CPU 22 determines whether or not lapse of the set time is being kept by a timer in accordance with setting which will be described later. As a result, when lapse of the set time is not being kept, that is, when the set time has elapsed since previous timer setting (NO in step S270), CPU 22 sets a timer for keeping a prescribed time and starts time keeping (step S272). This prescribed time is a time for avoiding an overload on LED module 31, and is set, for example, to 60 minutes. In this case, CPU 22 sets the dimming ratio to 125% and causes turn-on for a time period T1 (for example, 5 minutes) (step S274).

On the other hand, when lapse of the set time is being kept, that is, when the set time (for example, 60 minutes) has not yet elapsed since start of the brightness turn-up mode (YES in step S270), CPU 22 sets the dimming ratio to 125% and causes turn-on for a time period T2 (for example, 1 second) which is shorter than time period T1 (step S276).

Thereafter, CPU 22 reduces light emission until the dimming ratio is set to 104% (step S278). Light emission reduction here may be based on change in dimming ratio shown in the graph in Fig. 15 or may be based on change in dimming ratio shown in the graph in Fig. 16.

With such operations, brightness is maximized by temporarily setting the dimming ratio in the daylight color to 100% or higher, so that it is possible to realize a comfortable light environment with visibility being further improved in accordance with a purpose and it is also possible to suppress a load imposed on LED module 31.

It is noted that the brightness turn-up mode may be combined with the eco-lighting mode in step S10 shown in Fig. 7 or the illuminance sensor mode in step S12 shown in Fig. 8.

<Favorite Registration Mode>

A favorite registration mode will now be described.

The favorite registration mode refers to a mode for registering the dimming ratio and a color tone.

Pressing of "favorite registration 1" button 71 or "favorite registration 2" button 73 of remote controller 50 by the user causes transition to the favorite registration mode.

Specifically, the dimming ratio and a color tone at the current time point are stored in a prescribed area of memory 29. For example, in the lighting adjustment mode, the light environment control mode and the like described above, the dimming ratio and a color tone shown in the graphs and the like in Figs. 13 to 16 are automatically and continuously changed in some cases. In such a case as well, the dimming ratio and the color tone at the current time point are stored in a prescribed area of memory 29.

When CPU 22 accepts an instruction of input through "favorite registration 1" button 71 or "favorite registration 2" button 73 of remote controller 50 in such a state that a dimming ratio and a color tone are automatically and continuously changed, CPU 22 writes the dimming ratio and the color tone at the time point of acceptance of the instruction into a storage area of memory 29 in accordance with the favorite button. Thus, the dimming ratio and a color tone are registered for each of "favorite 1" and "favorite 2".

When CPU 22 writes the dimming ratio and the color tone into the prescribed area of memory 29 in accordance with the instruction of input through "favorite registration 1" button 71 or "favorite registration 2" button 73, operations in the favorite registration mode end.

In the case where the dimming ratio, a color tone, and the like are automatically and continuously changed and cannot be registered at the time when the user's favorite lighting state is achieved, the user has to reproduce the lighting state by operating the remote controller and the like again. Particularly when registration of the lighting state based on combination of two types of the dimming ratio and the color tone is desired, an operation for reproducing the lighting state is troublesome and there is a possibility that the user cannot remember his/her preferred lighting state to desirably be registered, and cannot accurately reproduce the preferred lighting state. According to the present invention, there is no need for the user to reproduce the preferred dimming ratio or color tone by a user's operation of the remote controller or the like. By pressing "favorite registration 1" button 71 or "favorite registration 2" button 73 at the time when the dimming ratio and the color tone to desirably be registered are achieved during the course of automatic and continuous change in lighting state, information on the lighting state at the time point of pressing can be registered. Therefore, it is possible to register the preferred lighting state with ease and with reliability, so that the user's convenience is enhanced.

In the case where the dimming ratio and the color tone have already been written in a corresponding storage area at the time point of acceptance of the instruction of input, the dimming ratio and the color tone may be overwritten in accordance with this instruction. Moreover, a prescribed dimming ratio and a prescribed color tone (for example, favorite 1: daylight color of 50%, light color of 50%; favorite 2: daylight color of 100%, etc.) may be stored in advance as default registration.

Preferably, in the case of the prescribed dimming ratio and color tone, CPU 22 does not register the same, although it accepts such an instruction of input. Examples of the prescribed dimming ratio and color tone include the dimming ratio and a color tone of a night-light, the dimming ratio higher than full lighting (100%) in the brightness turn-up mode, and the like. More preferably, when an instruction of input through "favorite registration 1" button 71 or "favorite registration 2" button 73 is accepted in such a lighting state, CPU 22 causes blinking display for notification of a registration error in such a manner as repeating turn-on for 1 second and turn-off for 0.5 seconds 4 times.

When CPU 22 accepts an input through "favorite 1" button 65 or "favorite 2" button 72, CPU 22 reads and sets the dimming ratio and a color tone which correspond to "favorite 1" or "favorite 2" and are stored in the storage area of memory 29. Thus, as the user presses "favorite 1" button 65 or "favorite 2" button 72 of remote controller 50, the stored dimming ratio and color tone can be set by a one-touch operation. Thus, the user's convenience is enhanced.

As described above, information on a lighting state based on the dimming ratio and a color tone registered in memory 29 in the favorite registration mode is not limited to use in lighting and reproduction by "favorite 1" button 65 or "favorite 2" button 72, and the information may also be used in setting of a lighting state at the time of turn-on in the custom setting in the light environment control mode or in the ON timer mode.

It is noted that, in the example above, the dimming ratio and a color tone registered in "favorite 1" or "favorite 2" are stored in memory 29 of lighting device 1, however, they may be stored in memory 80 of remote controller 50 as CPU 86 of remote controller 50 operates similarly to CPU 22.

<Other Processing>

As other processing, it is possible to perform various functions in accordance with input instructions from remote controller 50.

For example, pressing of "pre-sleep" button 66 of remote controller 50 by the user allows setting of the current dimming ratio in the daylight color or in the light color to the night-time dimming ratio of 30% as time elapses.

Specifically, when an instruction of input through "pre-sleep" button 66 provided in remote controller 50 is received, CPU 22 starts a pre-sleep mode and instructs PWM control circuit 23 to gradually adjust PWM pulse S 1 or S2 such that the dimming ratio of LED module 31 or LED module 32 is set to the night-time dimming ratio of 30%. For example, the time point of pressing of "pre-sleep" button 66 is defined as a start time point, and the night-time dimming ratio of 30% is set 60 minutes later as in the case described with reference to Figs. 15 and 16.

By using such a function, when it is desired to set a bed time earlier in accordance with the user's preference, the dimming ratio can be adjusted to gradually lower, so that human wakefulness is gradually weakened, promoting melatonin secretion relating to human biological rhythms. This helps people to smoothly fall asleep.

As described above, pressing of "time setting" button 68 of remote controller 50 by the user allows setting of the current time in lighting device 1.

One example of the functions of remote controller 50 has been described in the present example, and buttons and the like for executing other functions can naturally be arranged to cause CPU 22 to realize corresponding functions.

<Turn-on/off Control of LED Modules>

Turn-on/off control of LED modules according to the embodiment of the present invention will now be described.

PWM control circuit 23 according to the embodiment of the present invention controls PWM pulses S1 and S2 to be output to LED modules 31 and 32 in accordance with an instruction from CPU 22. More specifically, corresponding to an ON period of PWM pulse S1, FET switch 33 is rendered conductive and LED module 31 is turned on. Corresponding to an OFF period of PWM pulse S1, FET switch 33 is rendered non-conductive and LED module 31 is turned off.

Similarly, for LED module 32, in response to PWM pulse S2 from PWM control circuit 23, FET switch 34 is rendered conductive/non-conductive and LED module 32 is turned on/off.

CPU 22 is connected to crystal oscillator 27 that outputs an oscillation signal at 40 MHz (one period of 25 ns), and in accordance with an instruction issued at the timing synchronized with the oscillation signal, PWM control circuit 23 outputs PWM pulses S 1 and S2.

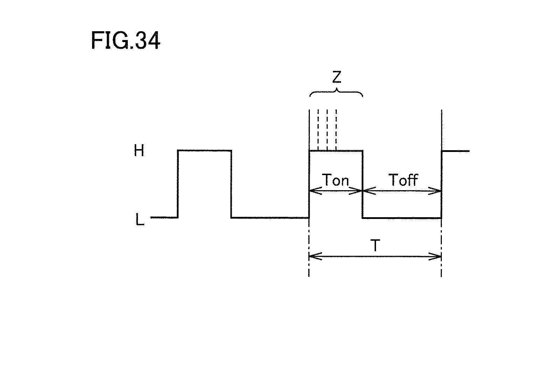

Fig. 34 is a diagram illustrating generation of a PWM pulse output from PWM control circuit 23 according to the embodiment of the present invention.

Referring to Fig. 34, PWM pulses S1 and S2 output from PWM control circuit 23 are set in accordance with the number of periods (here, Z periods) with one period of 25 nm which is the minimum unit of the oscillation signal being defined as the minimum unit. Here, a case where setting for a turn-on period Ton and a turn-off period Toff is made is shown.

Turn-on period Ton with the dimming ratio of 100% is set with some margin such that a current supplied to LED modules 31, 32 and the like does not exceed the rated current of LED modules 31, 32 and the like.

A cycle time T which is the sum of turn-on period Ton and turn-off period Toff is set to slightly be longer than the turn-on period when the dimming ratio is set to 100%. Therefore, for example, it becomes possible to set turn-on period Ton to slightly be longer than the turn-on period when the dimming ratio attains to 100%, and hence by supplying a current having a value close to the rated current to LED modules 31, 32 or the like, the dimming ratio of 100% or higher can also be set (the brightness turn-up mode).

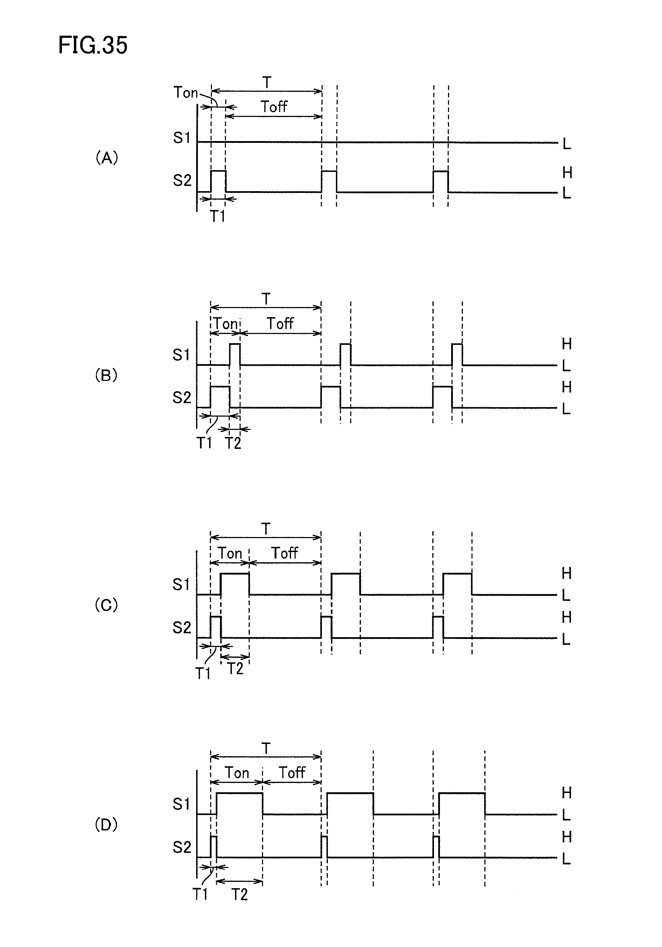

Fig. 35 is a timing chart in the case of adjusting PWM pulses S1 and S2 output from PWM control circuit 23 according to the embodiment of the present invention.

Referring to Fig. 35, PWM control circuit 23 carries out periodic turn-on/turn-off control of LED modules 31 and 32, with cycle time T being set to have turn-on period Ton, in which LED modules 31 and 32 are turned on/off in a complementary manner (namely, so that a total on-duty of the modules is 100%) and turn-off period Toff, in which LED modules 31 and 32 are both turned off. Further, PWM control circuit 23 variably controls a ratio between a turn-on period T1 of LED module 31 and a turn-on period T2 of LED module 32 within turn-on period Ton.

In Fig. 35, (A) to (D) represent adjustment of PWM pulses S 1 and S2 in the early-morning operation (period tA) in light environment control.

In Fig. 35, (A) shows an example in which the dimming ratio is set to 30% based only on turn-on period Ton of PWM pulse S2, in the initial state. It is noted that, in this case, PWM pulse S1 is always set to the "L" level. Namely, LED module 31 is in the turn-off state.

Then, a case where, by adjusting a duty ratio of overfull turn-on period Ton (turn-on periods T1+T2) in cycle time T as shown in (B) to (D) of Fig. 35, the dimming ratio is adjusted linearly is shown.

The dimming ratio of each LED with respect to the overall dimming ratio is calculated based on Equations (6) and (7) described above, and in accordance with the result of calculation, turn-on periods T1 and T2 of respective LED modules during turn-on period Ton are adjusted.

Therefore, by linearly changing the overall dimming ratio in accordance with such adjustment of the PWM pulses as described above, the dimming ratio can be adjusted without causing any feeling of strangeness or discomfort to a human.

<Adjustment of Variations in LED Module Output Characteristics>

In the foregoing, a case has been described in which the overall dimming ratio of LED modules 31 and 32 is linearly changed by adjusting a duty ratio of overfull turn-on period Ton during cycle time T. The overall dimming ratio, however, may possibly be different from an actual overall dimming ratio, because of variations in output characteristics of LED modules 31 and 32.

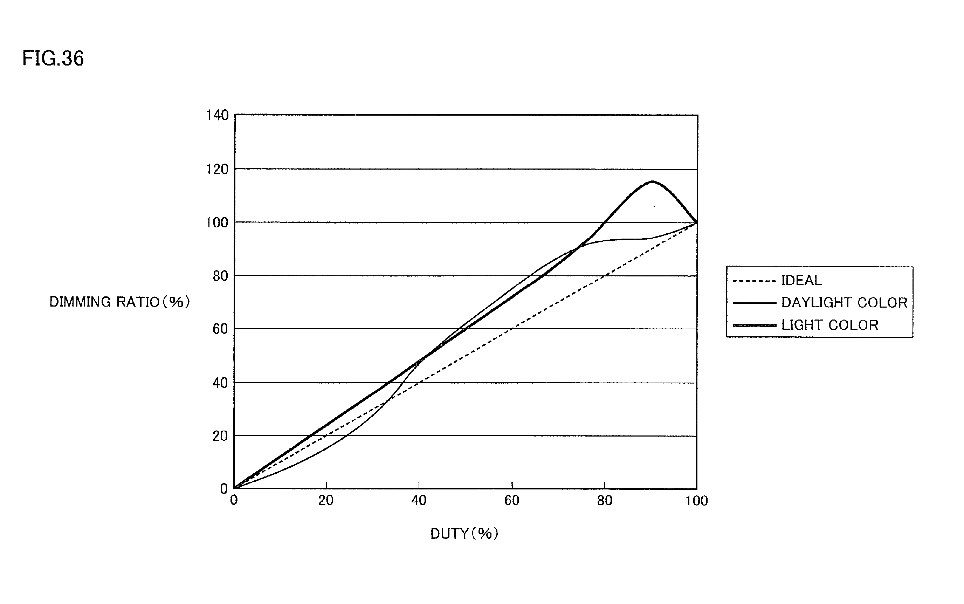

Fig. 36 is a diagram illustrating change in dimming ratio of LED modules 31 and 32 when a duty ratio of turn-on period Ton in cycle time T of a PWM pulse is adjusted according to the embodiment of the present invention.

Referring to Fig. 36, ideally, when a duty ratio during turn-on period Ton in cycle time T of a PWM pulse is linearly changed, the dimming ratio desirably changes linearly. Generally, a duty ratio of a PWM pulse is calculated in accordance with a linear output characteristic line (ideal), with the duty ratio of the PWM pulse set to 100% being defined to correspond to the dimming ratio of 100%.

Actual output characteristic lines of dimming ratios of LED modules 31 and 32, however, are different from the ideal output characteristic line as shown in the figure.

Therefore, in calculating the duty ratio of the PWM pulse in accordance with the dimming ratio, when the duty ratio is set based on the ideal output characteristic line, a set dimming ratio may possibly be different from a desired dimming ratio.

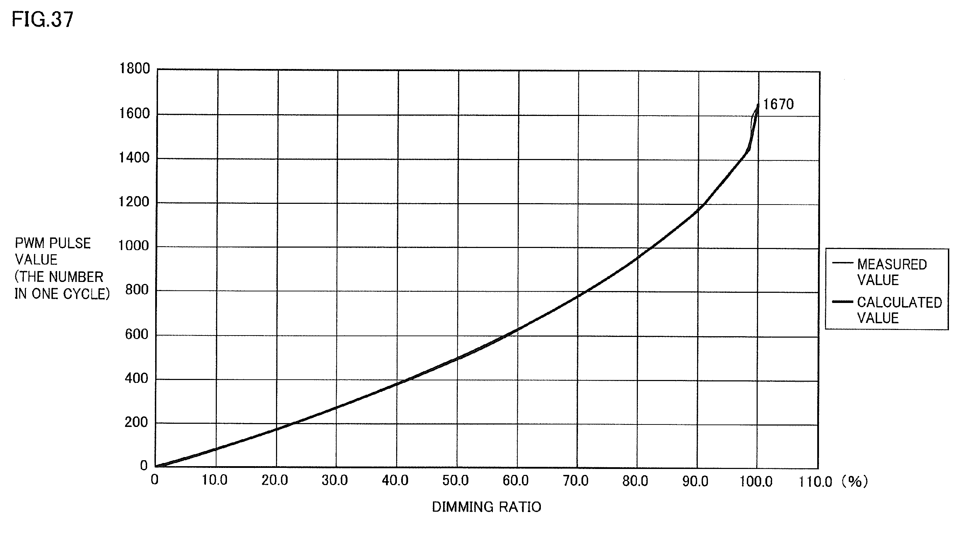

Fig. 37 is a diagram illustrating relation between a PWM pulse value and an actually measured dimming ratio of LED module 31 (a daylight color LED) according to an embodiment of the present invention.

Referring to Fig 37, here, an output characteristic line is shown, with the ordinate indicating a PWM pulse value (the number in one cycle) and the abscissa indicating the dimming ratio (%).

In the present example, it is assumed that the duty ratio during turn-on period Ton is set to 100% when the PWM pulse value is 1670 by way of example.

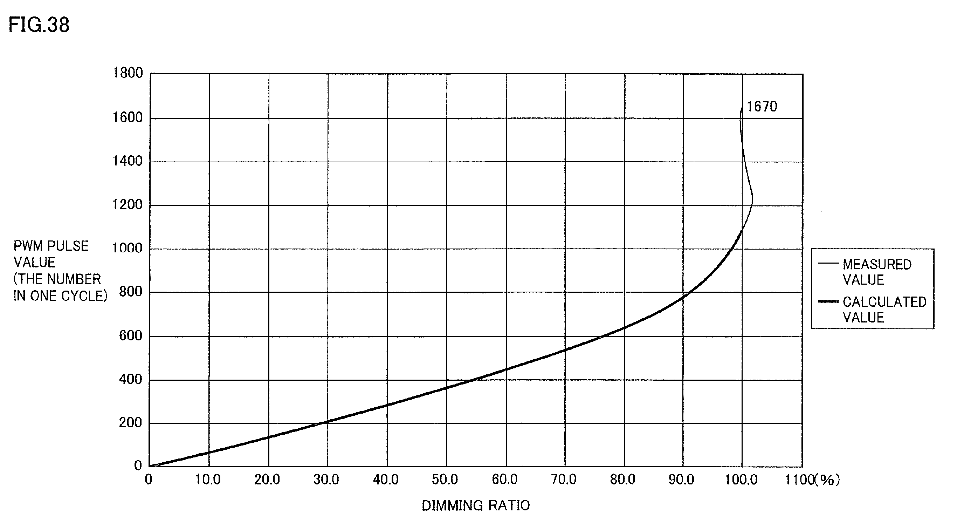

Fig. 38 is a diagram illustrating relation between a PWM pulse value and an actually measured dimming ratio of LED module 32 (a light color LED) according to the embodiment of the present invention.

Referring to Fig. 38, here, an output characteristic line is shown, with the ordinate indicating a PWM pulse value (the number in one cycle) and the abscissa indicating the dimming ratio (%).

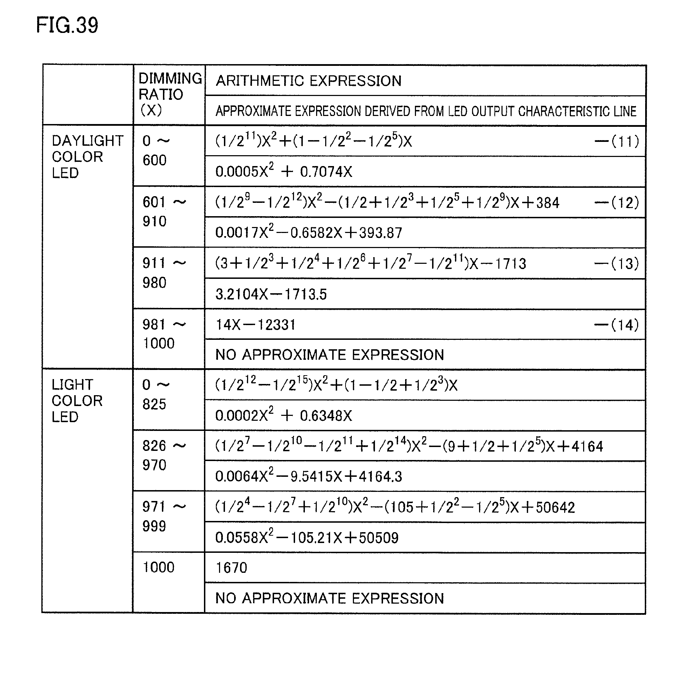

Fig. 39 is a diagram illustrating approximation formulas of the output characteristic lines of LED modules 31 and 32.

Referring to Fig. 39, approximation formulas for the daylight color LED in accordance with the output characteristic line of LED module 31 in Fig. 37 and approximation formulas for the light color LED in accordance with the output characteristic line of LED module 32 in Fig. 38 are shown.

Here, for the approximation formulas for the daylight color LED, a case where dimming ratios in accordance with the output characteristic line shown in Fig. 37 are divided into four regions and an approximation formula for each region is calculated is shown. By way of example, a case where the dimming ratios are divided into "dimming ratio from 0 to 60%," "dimming ratio from 60.1% to 91.0%," "dimming ratio from 91.1% to 98.0%," and "dimming ratio from 98.1% to 100%" is shown. Further, in order to facilitate processing by CPU 22, a case where the approximation formulas are converted to arithmetic expressions is shown. By inputting a desired dimming ratio to a variable in the corresponding arithmetic expression, CPU 22 can calculate a desired PWM pulse value in accordance with the actual output characteristic line of LED module 31.

Similarly, for the approximation formulas for the light color LED, a case where dimming ratios in accordance with the output characteristic line shown in Fig. 38 are divided into four regions and an approximation formula for each region is calculated is shown. By way of example, a case where the dimming ratios are divided into "dimming ratio from 0 to 82.5%," "dimming ratio from 82.6% to 97.0%," "dimming ratio from 97.1% to 99.9%," and "dimming ratio of 100%" is shown. Further, here, in order to further facilitate processing by CPU 22, a case where the approximation formulas are converted to arithmetic expressions is shown. By inputting a desired dimming ratio to a variable in the corresponding arithmetic expression, CPU 22 can calculate a desired PWM pulse value in accordance with the actual output characteristic line of LED module 32. In Figs. 37 and 38, approximated characteristic lines obtained by the arithmetic expressions are shown in bold lines.

Namely, by calculating the PWM pulse value, that is, the duty ratio of the PWM pulse corresponding to the dimming ratio based on the arithmetic expression, it becomes possible to set a desired dimming ratio. Thus, highly accurate dimming becomes possible, and a more comfortable light environment considering variations in output characteristics of LED modules can be realized.

As can be seen from the output characteristic line in Fig. 38, the dimming ratio attains to 100% before the PWM pulse value is set to 1670, that is, before the duty ratio during turn-on period Ton is set to 100%.

Therefore, regarding the approximation formulas in Fig. 39, a case where, for the dimming ratio up to 99.9%, the approximation formulas are calculated in accordance with the output characteristic line until the dimming ratio exceeds 100%, is shown. For the dimming ratio of 100.0%, a case where the PWM pulse value is set to 1670 is shown. Namely, the approximation formulas are calculated by using only a necessary output characteristic line. Accordingly, for example, in the present example, a PWM pulse value does not have to be set to an unnecessarily high value and hence the duty ratio is kept low, so that power consumption can also be reduced.

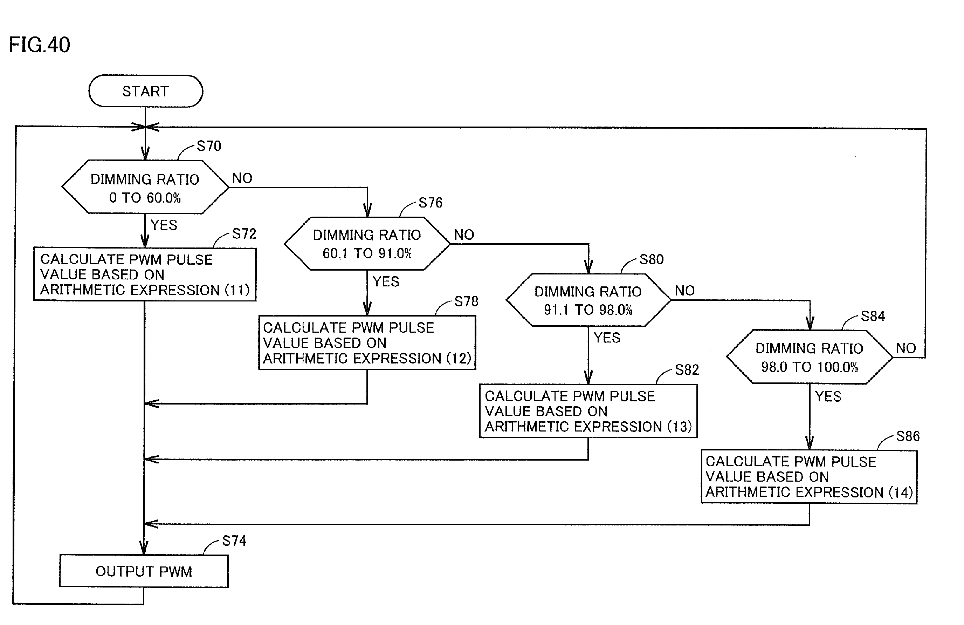

Fig. 40 is a flowchart illustrating PWM pulse output in consideration of variations in output characteristics of LED module 31 according to the embodiment of the present invention.

A flow is executed by CPU 22 reading a program stored in memory 29.

Referring to Fig. 40, CPU 22 determines whether or not the dimming ratio is in a range from 0% to 60.0% (step S70).

Then, when it is determined that the dimming ratio is in the range from 0% to 60.0% (YES in step S70), CPU 22 calculates a PWM pulse value in accordance with Equation (11). Then, based on the calculated PWM pulse value, a PWM pulse is output (step S74). Then, the process returns to step S70.

When it is determined that the dimming ratio is not in the range from 0% to 60.0% (NO in step S70), CPU 22 then determines whether or not the dimming ratio is in a range from 60.1% to 91.0% (step S76). When it is determined that the dimming ratio is in the range from 60.1 % to 91.0% (YES in step S76), CPU 22 calculates a PWM pulse value in accordance with Equation (12) (step S78). Then, based on the calculated PWM pulse value, a PWM pulse is output (step S74). Then, the process returns to step S70.

When it is determined that the dimming ratio is not in the range from 60.1 % to 91.0% (NO in step S76), CPU 22 then determines whether or not the dimming ratio is in a range from 91.1% to 98.0% (step S80). When it is determined in step S80 that the dimming ratio is in the range from 91.1% to 98.0% (YES in step S80), CPU 22 calculates a PWM pulse value in accordance with Equation (13) (step S82). Then, based on the calculated PWM pulse value, a PWM pulse is output (step S74). Then, the process returns to step S70.

When it is determined that the dimming ratio is not in the range from 91.1 % to 98.0% (NO in step S80), CPU 22 then determines whether or not the dimming ratio is in a range from 98.1% to 100.0% (step S84). When it is determined in step S84 that the dimming ratio is in the range from 98.1% to 100.0% (YES in step S84), CPU 22 calculates a PWM pulse value in accordance with Equation (14) (step S86). Then, based on the calculated PWM pulse value, a PWM pulse is output (step S74). Then, the process returns to step S70. When it is determined in step S84 that the dimming ratio is not in the range from 98.1% to 100.0%, the process returns to step S70.

In the present example, output of PWM pulse S1 considering variations in output characteristics of LED module 31 has been described, however, a similar method can be used for output of PWM pulse S2 considering variations in output characteristics of LED module 32.

Through this process, it becomes possible to calculate a PWM pulse value, that is, a duty ratio of a PWM pulse, in accordance with the dimming ratio based on the arithmetic expressions as described above. Thus, it is possible to set a desired dimming ratio and to thereby realize a more comfortable light environment considering variations in output characteristics of LED modules.

Though a case in which PWM pulse output is calculated considering variations in output characteristics of LED modules by calculating approximation formulas has been described in the present example, it is not particularly limiting. For example, a correspondence table storing one-to-one correspondence between a PWM pulse value and the dimming ratio in accordance with the output characteristic line described above may be used.

In the description above, it is assumed that lighting device 1 has crystal oscillator 27, and control in the light environment control mode and the like is realized by CPU 22 accurately keeping time in accordance with oscillation signals from crystal oscillator 27. Crystal oscillator 27, however, outputs the oscillation signal when a voltage is supplied from power source circuit 10. Therefore, when voltage supply should be stopped by an operation of a not-shown power switch included in operation SW 42, time keeping by CPU 22 becomes impossible. In such a situation, when voltage supply is started next time by operating the power switch, the time is calibrated to resume time keeping by CPU 22. Here, lighting device 1 may obtain the current time through command transmission processing from remote controller 50. In the following, the command transmission processing in remote controller 50 will be described.

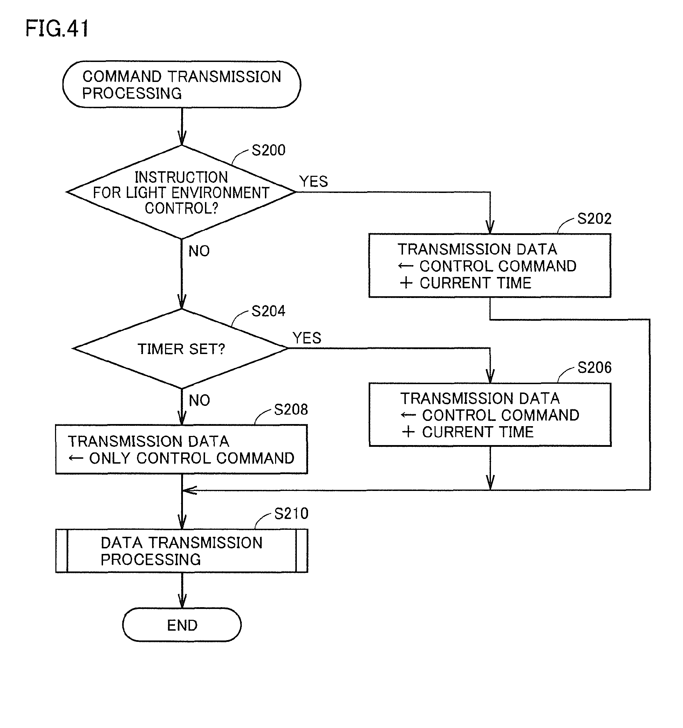

Fig. 41 is a flowchart illustrating the command transmission process in remote controller 50 according to the embodiment of the present invention.

A flow is executed by CPU 86 reading a program stored in memory 80.

Referring to Fig. 41, when an input of an operation signal indicating that "light environment control" button 58 has been pressed is received (YES in step S200), CPU 86 of remote controller 50 causes signal transmission unit 84 to output a transmission signal (command) to indicate the light environment control mode to infrared projection unit 87. Here, CPU 86 keeps time in accordance with the oscillation signal from crystal oscillator 85 and outputs also a signal indicating the current time, together with the command, to infrared projection unit 87 (step S202).

On the other hand, when "light environment control" button 58 has not been pressed (NO in step S200), it is then determined whether or not a timer instruction has been input (step S204).

Specifically, it is determined whether or not an instruction of input through any of "absence timer" button 67, "OFF timer" button 74, and "ON timer" button 75 has been received.

When the timer instruction input, that is, input of an operation signal through any of "absence timer" button 67, "OFF timer" button 74, and "ON timer" button 75, has been received (NO in step S200 and YES in step S204), signal transmission unit 84 is caused to output to infrared projection unit 87 a transmission signal (command) for an instruction to set the timer. The instruction to set the timer herein refers to an instruction for absence timer control in the case of an operation of "absence timer" button 67, and to OFF timer setting information in the case of an operation of "OFF timer" button 74. In the case of an operation of "ON timer" button 75, it indicates ON timer setting information. At the time of the first operation of "OFF timer" button 74, "ON timer" button 75, operations in the OFF timer setting, the ON timer setting are started, respectively, and the OFF timer setting screen, the ON timer setting screen are displayed. The timer instruction input in connection with "OFF timer" button 74, "ON timer" button 75 herein refers to the second operation of "OFF timer" button 74, "ON timer" button 75.

Here, CPU 86 keeps time in accordance with the oscillation signal from crystal oscillator 85, and outputs also a signal indicating the current time, together with the command, to infrared projection unit 87 (step S206).

When the input operation signal does not correspond to an operation of "light environment control" button 58 or the timer instruction input (NO in step S200 and NO in step S204), signal transmission unit 84 is caused to output a transmission signal (command) in accordance with the operation signal to infrared projection unit 87 (step S208). Here, the signal indicating the current time is not output.

Thereafter, signal transmission unit 84 outputs a transmission signal in accordance with an instruction from CPU 86 to infrared projection unit 87, and an infrared signal is output from infrared projection unit 87 to lighting device 1 (step S210).

In the present example, it is assumed that, among the control modes of lighting device 1, the light environment control mode and the timer mode are the control modes in which a state of illumination varies with time. When other control modes in which a state of illumination varies with time are included in the control modes, however, the signal indicating the current time may be output together with the control command also when such a control mode is selected.

Further, in the present example, it is assumed that CPU 86 outputs a signal indicating the current time based on the oscillation signal from crystal oscillator 85. Remote controller 50, however, may not include crystal oscillator 85, and a signal indicating the current time based on the time input accepted by pressing of "time setting" button 68 or "UP" button 57A and/or "DOWN" button 57B, and the like may be output.

With this operation, even if voltage supply is stopped by an operation of the power switch of lighting device 1 and time keeping by CPU 22 of lighting device 1 becomes impossible, and if activation of a mode requiring time information is indicated from remote controller 50, the mode can be activated by using time information from remote controller 50 without necessitating any time adjustment operation of lighting device 1.

Further, in this operation, when activation of a mode requiring time information is indicated, the time information is transmitted, and otherwise, the time information is not transmitted. Therefore, an amount of information output from remote controller 50 can be reduced. Thus, power consumption in remote controller 50 necessary for communication can be reduced.

Further, it is also possible to provide a program causing a computer to function to carry out such control as described with reference to the flow above. Such a program may be recorded on a non-transitory computer readable recording medium such as a flexible disk, a CD-ROM (Compact Disk-Read Only Memory), a ROM (Read Only Memory), a RAM (Random Access Memory), and a memory card to be attached to a computer, and provided as a program product. Alternatively, the program can also be provided as recorded on a recording medium such as a hard disk built in a computer. Further, the program can also be provided by downloading through a network.

The program may call necessary ones of programming modules provided as a part of an operating system (OS) of a computer in a prescribed sequence at prescribed timing, to thereby perform processing. In that case, the modules are not included in the program itself, but processing is performed by cooperation with the OS. The program not including such modules may also be encompassed in the program according to the present invention.

The program according to the present invention may be provided as incorporated as a part of another program. In that case as well, the program itself may not include modules of aforementioned another program, and processing is performed by cooperation with another program. The program incorporated in such another program may also be encompassed in the program according to the present invention.

The program product thus provided is executed as installed in a program storage such as a hard disk. Further, the program product includes the program itself and the recording medium on which the program is recorded.

Although the embodiments of the present invention have been described, it should be understood that the embodiments disclosed herein are illustrative and non-restrictive in every respect. The scope of the present invention is defined by the terms of the claims, and is intended to include any modifications within the scope and meaning equivalent to the terms of the claims.

REFERENCE SIGNS LIST

1 lighting device; 2 chassis; 8, 9 cover; 10, 59 power source circuit; 20 illumination control unit; 21, 81 control power supply circuit; 22, 86 CPU; 23 PWM control circuit; 25 signal reception unit; 26, 83 SW input unit; 27, 85 crystal oscillator; 28 illuminance sensor; 29, 80 memory; 30 illumination unit; 31, 32 LED module; 33, 34 FET switch; 40, 56 interface unit; 41 infrared reception unit; 42, 88 operation SW; 50 remote controller; 52 liquid crystal panel; 76 remote controller control unit; 82 liquid crystal drive circuit; 84 signal transmission unit; 87 infrared projection unit.

**Claims**

1. A lighting device, comprising:

an illumination unit (30);
a control unit (22) for controlling said illumination unit;
a time keeping unit (27) for keeping time or hours; and
an operation portion (40, 50) for accepting an instruction for processing by said control unit,
said operation portion including
first instruction means (67) for accepting an instruction about setting/termination of processing for carrying out turn-on and turn-off control of said illumination unit in accordance with the set time, by using said time keeping unit and
second instruction means for accepting an instruction about different processing for controlling said illumination unit, wherein
when the instruction from said second instruction means is accepted after the processing for carrying out turn-on and turn-off control of said illumination unit in accordance with said set time is started based on the instruction about the setting from said first instruction means, said control unit terminates the processing for carrying out turn-on and turn-off control of said illumination unit in accordance with said set time.

2. The lighting device according to claim 1, wherein
when the instruction from said second instruction means is accepted after the processing for carrying out turn-on and turn-off control of said illumination unit in accordance with said set time is started, said control unit performs processing in accordance with said second instruction means.

3. The lighting device according to claim 1, wherein
when the instruction from said second instruction means is accepted before the processing for carrying out turn-on and turn-off control of said illumination unit in accordance with said set time is started, said control unit does not terminate the processing for carrying out turn-on and turn-off control of said illumination unit in accordance with said set time.

4. The lighting device according to claim 3, wherein
when the instruction from said second instruction means is accepted before the processing for carrying out turn-on and turn-off control of said illumination unit in accordance with said set time is started, said control unit performs processing in accordance with said second instruction means.

5. The lighting device according to claim 1, wherein
said first instruction means accepts the instruction about setting/termination of the processing for carrying out turn-on and turn-off control of said illumination unit in accordance with said set time in a set time zone during a period in which a user is away.

FIG.1

## FIG.2

FIG.3

FIG.4

FIG.5

# FIG.6

# FIG.7

# FIG.8

EP 2 608 639 A1

## FIG.9

LIGHTING ADJUSTMENT MODE

S100
INSTRUCTION OF INPUT THROUGH DIMMER BUTTON RECEIVED?
NO
YES

S102
INSTRUCTION OF INPUT THROUGH BRIGHT BUTTON RECEIVED?
NO
YES

S104
INCREASE DIMMING RATIO BY PRESCRIBED AMOUNT

S106
DECREASE DIMMING RATIO BY PRESCRIBED AMOUNT

S112
INPUT THROUGH WARM COLOR BUTTON RECEIVED?
NO
YES

S116
INCREASE COLOR TONE OF DAYLIGHT COLOR BY PRESCRIBED AMOUNT

S114
INCREASE COLOR TONE OF LIGHT COLOR BY PRESCRIBED AMOUNT

RETURN

FIG.10

EP 2 608 639 A1

← DAYLIGHT COLOR                                                       LIGHT COLOR →

| LEVEL | 10 | 9 | 8 | 7 | 6 | 5 | 4 | 3 | 2 | 1 |
|---|---|---|---|---|---|---|---|---|---|---|
| DAYLIGHT COLOR | 100% | 86.2% | 72.9% | 60.5% | 48.9% | 38.1% | 28.1% | 18.8% | 10.0% | 0% |
| LIGHT COLOR | 0% | 13.8% | 27.1% | 39.5% | 51.1% | 61.9% | 71.9% | 81.2% | 90.0% | 100% |
| COLOR TEMPERATURE | 5605 | 5224 | 4869 | 4538 | 4229 | 3941 | 3673 | 3424 | 3191 | 2974 |

381 ≒1.073  355 ≒1.073  331 ≒1.073  309 ≒1.073  288 ≒1.073  268 ≒1.073  249 ≒1.073  233 ≒1.073  217 ≒1.073

FIG.11

FIG.12

| DESIGNATIONS | HOURS | TIME | DETAILS※ |
|---|---|---|---|
| EARLY-MORNING OPERATION (PERIOD tA) | FOR ONE HOUR BEFORE WAKE-UP TIME | 5:30 ～6:30 | BRIGHTNESS:CHANGE FROM NIGHT-TIME DIMMING RATIO OF 30% TO DIMMING RATIO OF 100% COLOR:CHANGE FROM LIGHT COLOR TO DAYTIME COLOR |
| DAY-TIME OPERATION (PERIOD tB) | FROM WAKE-UP TIME UNTIL ONE HOUR BEFORE DINNER TIME | 6:30 ～18:00 | BRIGHTNESS:DIMMING RATIO OF 100% (NO CHANGE) COLOR:DAYLIGHT COLOR (NO CHANGE) |
| SUNSET-TIME OPERATION (PERIOD tC) | FOR ONE HOUR BEFORE DINNER TIME | 18:00 ～19:00 | BRIGHTNESS:DIMMING RATIO OF 100% (NO CHANGE) COLOR:CHANGE FROM DAYLIGHT COLOR TO LIGHT COLOR |
| DINNER-TIME OPERATION (PERIOD tD) | FROM DINNER TIME UNTIL TWO HOURS BEFORE BED TIME | 19:00 ～21:00 | BRIGHTNESS:DIMMING RATIO OF 100% (NO CHANGE) COLOR:LIGHT COLOR (NO CHANGE) |
| BED-TIME OPERATION (PERIOD tE) | FOR TWO HOURS BEFORE BED TIME | 21:00 ～23:00 | BRIGHTNESS:CHANGE TO NIGHT-TIME DIMMING RATIO OF 30% COLOR:LIGHT COLOR (NO CHANGE) |
| NIGHT-TIME OPERATION (PERIOD tF) | FROM BED TIME UNTIL ONE HOUR BEFORE WAKE-UP TIME | 23:00 ～5:30 | BRIGHTNESS:NIGHT-TIME DIMMING RATIO OF 30% (NO CHANGE) COLOR:LIGHT COLOR (NO CHANGE) |

FIG.13

WHOLE

DAYLIGHT
COLOR

LIGHT
COLOR

DIMMING
RATIO %

LAPSE OF TIME

FIG.14

DAYLIGHT
COLOR          WHOLE          LIGHT
COLOR

DIMMING
RATIO %

LAPSE OF TIME

FIG.15

FIG.16

(0.1%)

(A) DIMMING RATIO

1000

100

10

0

0          10          60 100  (MINUTE)

TIME

(0.1%)

(B) DIMMING RATIO

1200

1000

800

600

400

200

0

0                    30                    60  (MINUTE)

TIME

FIG.17

FIG.18

| ITEMS TO BE SET | RANGE OF SETTING |
|---|---|
| WAKE-UP TIME | SETTABLE FROM 0:00 TO 23:59 ※<br>HOWEVER, TIME SETTING WITHIN 1 HOUR AND<br>59 MINUTES AFTER BED TIME IS NOT ACCEPTED |
| DINNER TIME | SETTABLE FROM 0:00 TO 23:59 ※<br>HOWEVER, TIME SETTING WITHIN 59 MINUTES<br>AFTER WAKE-UP TIME IS NOT ACCEPTED |
| BED TIME | SETTABLE FROM 0:00 TO 23:59 ※ |

## FIG.19

(A)

```
┌─────────────────────────────────┐
│         CUSTOM SETTING          │
├─────────────────────────────────┤
│      PLEASE SET WAKE-UP TIME    │
│                                 │
│             7:00                │
│                                 │
│   IF THE SETTING IS OK, PLEASE PRESS │
│   "CUSTOM" SETTING BUTTON       │
└─────────────────────────────────┘
```

(B)

```
┌─────────────────────────────────┐
│         CUSTOM SETTING          │
├─────────────────────────────────┤
│       PLEASE SET DINNER TIME    │
│                                 │
│            19:30                │
│                                 │
│   IF THE SETTING IS OK, PLEASE PRESS │
│   "CUSTOM" SETTING BUTTON       │
└─────────────────────────────────┘
```

(C)

```
┌─────────────────────────────────┐
│         CUSTOM SETTING          │
├─────────────────────────────────┤
│        PLEASE SET BED TIME      │
│                                 │
│            23:30                │
│                                 │
│   IF THE SETTING IS OK, PLEASE PRESS │
│   "CUSTOM" SETTING BUTTON       │
└─────────────────────────────────┘
```

(D)

```
┌─────────────────────────────────┐
│         CUSTOM SETTING          │
├─────────────────────────────────┤
│ PLEASE SET NIGHT-TIME DIMMING RATIO │
│                                 │
│             30%                 │
│                                 │
│   IF THE SETTING IS OK, PLEASE PRESS │
│   "CUSTOM" SETTING BUTTON       │
└─────────────────────────────────┘
```

FIG.20

CUSTOM SETTING MODE

S120 WAKE-UP TIME INFORMATION INPUT? — NO

YES → S122 SET WAKE-UP TIME

S124 DINNER TIME INFORMATION INPUT? — NO

YES → S126 SET DINNER TIME

S128 BED TIME INFORMATION INPUT? — NO

YES → S130 SET BED TIME → S132 SET DIMMING RATIO TO 30%

S134 INSTRUCTION THROUGH UP BUTTON OR DOWN BUTTON INPUT? — NO

YES → S136 ADJUST DIMMING RATIO IN RESPONSE TO UP BUTTON OR DOWN BUTTON

S138 NIGHT-TIME DIMMING RATIO INFORMATION INPUT?

YES → S140 SET NIGHT-TIME DIMMING RATIO

NO → RETURN

EP 2 608 639 A1

FIG.21

(0.1%)

(A) DIMMING
RATIO

1000

100

1          10          100          1000 (SECOND)
TIME

(0.1%)

(B) DIMMING
RATIO

1200
1000
800
600
400
200
0

0     100    200    300    400    500    600    700
TIME                              (SECOND)

FIG.22

```
        ECO-LIGHTING MODE
  (ONE-SECOND INTERRUPT PROCESSING)
```

S160

LIGHTING STARTED? —NO→

YES

S162

LIGHTING AT 100%

S164

DIMMING TIMER ← 600
DIMMING TARGET ← 80%

S166

DIMMING TIMER ≠ 0? —NO→

YES

S168

DIMMING
PROCESSING

RETURN

FIG.23

```
      LIGHT EMISSION
   REDUCTION PROCESSING
```

S180

DOWN VALUE ← LIGHT EMISSION
REDUCTION CONSTANT
[LIGHT EMISSION REDUCTION TIMER VALUE]

S182

LED OUTPUT VALUE = LED OUTPUT VALUE − DOWN VALUE

S184

LIGHT EMISSION REDUCTION TIMER − 1

RETURN

FIG.24

- HIGH LEVEL OF ILLUMINANCE LEVEL 3
- LOW LEVEL OF ILLUMINANCE LEVEL 3
- HIGH LEVEL OF ILLUMINANCE LEVEL 2
- LOW LEVEL OF ILLUMINANCE LEVEL 2
- HIGH LEVEL OF ILLUMINANCE LEVEL 1 (ENVIRONMENT REGISTRATION)
- LOW LEVEL OF ILLUMINANCE LEVEL 1
- DARK CRITERION VALUE

EP 2 608 639 A1

FIG.25

| BRIGHTNESS LEVEL | BRIGHTNESS (lx) |
|---|---|
| 1 | 1～133 |
| 2 | 134～143 |
| 3 | 144～154 |
| 4 | 155～166 |
| 5 | 167～179 |
| 6 | 180～193 |
| 7 | 194～208 |
| 8 | 209～224 |
| 9 | 225～242 |
| 10 | 243～261 |
| 11 | 262～281 |
| 12 | 282～303 |
| 13 | 304～326 |
| 14 | 327～351 |
| 15 | 352～379 |
| 16 | 380～408 |
| 17 | 409～440 |
| 18 | 441～474 |
| 19 | 475～510 |
| 20 | 511～550 |
| 21 | 551～593 |
| 22 | 594～639 |
| 23 | 640～688 |
| 24 | 689～742 |
| 25 | 743～799 |
| 26 | 800～861 |
| 27 | 862～928 |
| 28 | 929～1000 |

FIG.26

```
                    ( ILLUMINANCE
                      SENSOR MODE )
                           │
┌──────────────────────────┼───────────────────────────────┐
│                          ╳                CONTROL AT THE   │
│  ┌─────────────────────┐ │    ┌─S220      TIME OF START    │
│  │                      ▼ │                                │
│  │         ┌──────────────────────┐                        │
│  │         │ MEASURE ILLUMINANCE  │                        │
│  │         └──────────────────────┘                        │
│  │                     │  ┌─S222                           │
│  │                     ▼                                    │
│  │               ╱ MEASURED VALUE ╲                        │
│  │              ╱ M2 FOR ONE MEASUREMENT ╲────── NO         │
│  │              ╲   OBAINTED?   ╱                           │
│  │               ╲            ╱                             │
│  │                  │ YES                                   │
│  │                  ▼    ┌─S224                             │
│  │          YES  ╱ M2>HIGH ╲   NO                          │
│  │        ┌─────╱  LEVEL?    ╲────────┐                     │
│  │        │     ╲           ╱         │                     │
│  │        │      ╲         ╱          ▼   ┌─S228            │
│  │        │                     ╱ M2<LOW ╲   NO            │
│  │        │                    ╱  LEVEL?   ╲──────┐         │
│  │        │                    ╲          ╱       │         │
│  │        │                     ╲        ╱        │         │
│  │        ▼   ┌─S226              │ YES  ┌─S230    │         │
│  │ ┌──────────────────┐    ┌──────────────────────────┐     │
│  │ │ DOWN BRIGHTNESS  │    │ UP BRIGHTNESS LEVEL BY ONE│     │
│  │ │ LEVEL BY ONE     │    └──────────────────────────┘     │
│  │ └──────────────────┘           │                  │      │
│  │        │                                                 │
└──┼────────┼─────────────────────────────────────────┼──────┘
   │        │                                          │
┌──┼────────┼─────────────────────────────────────────┼──────┐
│  │        │                           NORMAL CONTROL  │     │
│  │        ╳                                                 │
│  │        │      ┌─S232                               ▲     │
│  │        ▼                                                 │
│  │  ┌──────────────────────┐                               │
│  │  │ MEASURE ILLUMINANCE  │                               │
│  │  └──────────────────────┘                               │
│  │            │   ┌─S234                                    │
│  │            ▼                                             │
│  │      ╱ BRIGHTNESS ╲   YES                                │
│  │     ╱ LEVEL BEING   ╲──────────────────────────┘         │
│  │     ╲  CHANGED?    ╱                                     │
│  │      ╲           ╱                                       │
│  │         │ NO                                             │
│  │         ▼     ┌─S236                                     │
│  │  YES ╱ M2>HIGH         ╲   NO                            │
│  │ ┌───╱ LEVEL SUCCESSIVELY ╲──────┐                        │
│  │ │   ╲      TWICE?       ╱       │                        │
│  │ │    ╲                 ╱        ▼    ┌─S240              │
│  │ │                        ╱ M2<LOW      ╲   NO           │
│  │ │                       ╱ LEVEL SUCCESSIVELY ╲───┐       │
│  │ │                       ╲      TWICE?      ╱     │       │
│  │ │                        ╲               ╱       │       │
│  │ ▼   ┌─S238                    │ YES ┌─S242        │       │
│  │ ┌──────────────────┐   ┌──────────────────┐      │       │
│  │ │ DOWN BRIGHTNESS  │   │ UP BRIGHTNESS     │      │       │
│  │ │ LEVEL BY ONE     │   │ LEVEL BY ONE      │      │       │
│  │ └──────────────────┘   └──────────────────┘      │       │
│  │        │                                                 │
└───────────┼─────────────────────────────────────────────────┘
```

FIG.27

| CALCULATE MEASURED VALUE M2 | CALCULATE MEASURED VALUE M2 | CALCULATE MEASURED VALUE M2 | CALCULATE MEASURED VALUE M2 |
|---|---|---|---|

DETERMINATION (M2<L)

DETERMINATION (M2<L)

DETERMINATION (L<M2<H)

CHANGE IN DIMMING RATIO (TURN-UP BRIGHTNESS LEVEL)

CHANGE IN DIMMING RATIO (TURN-UP BRIGHTNESS LEVEL)

END OF CONTROL AT THE TIME OF START

FIG.28

| CALCULATE MEASURED VALUE M2 | CALCULATE MEASURED VALUE M2 | CALCULATE MEASURED VALUE M2 | CALCULATE MEASURED VALUE M2 |
|---|---|---|---|

DETERMINATION (M2<L)

DETERMINATION (M2<L)

SKIP DETERMINATION

CHANGE IN DIMMING RATIO (TURN-UP BRIGHTNESS LEVEL)

FIG.29

```
        ┌─────────────────┐
        │   TIMER MODE    │
        └─────────────────┘
                 │
                 ▼
                              S20
            ◇─────────────────◇
           INSTRUCTION OF        NO
           INPUT THROUGH ABSENCE ──────────┐
           TIMER BUTTON                     │
           RECEIVED?                        │
            ◇─────────────────◇            │
                 │                          ▼
                YES                                S22
                 │  S21                  ◇─────────────◇
        ┌─────────────────────┐          ON TIMER        NO
        │ ABSENCE TIMER MODE  │         SETTING INFORMATION ─────┐
        └─────────────────────┘          INPUT?                   │
                 │                 ◇─────────────◇               │
                 │                        │                       │
                 │                       YES    S23              S24
                 │                        ▼                       ▼
                 │              ┌──────────────────┐   ┌──────────────────┐
                 │              │ SET TURN-ON TIME │   │ SET TURN-OFF TIME│
                 │              └──────────────────┘   └──────────────────┘
                 │                        │                       │
                 │◄───────────────────────┴───────────────────────┘
                 ▼
        ┌─────────────────┐
        │     RETURN      │
        └─────────────────┘
```

59

# FIG.30

(A)

| ON-TIMER SETTING |
|---|
| SET TURN-ON TIME |
| **7 : 00** |
| PRESS "ON TIMER" SETTING BUTTON IF OK |

(B)

| OFF TIMER SETTING |
|---|
| SET TURN-OFF TIME |
| **23 : 30** |
| PRESS "OFF TIMER" SETTING BUTTON IF OK |

# FIG.31

```
            ┌─────────────────────────┐
            │   ABSENCE TIMER MODE    │
            └─────────────────────────┘
                         │
                         ▼          S90
            ┌─────────────────────────┐
            │ SET ABSENCE TIMER TABLE │
            └─────────────────────────┘
                         │
                         ▼          S91
            ┌─────────────────────────┐
            │   CHECK CURRENT TIME    │
            └─────────────────────────┘
                         │
                         ▼          S92
                    ◇ IS CURRENT
                 TIME ABSENCE TIMER      NO
                   CONTROL START ──────────────────┐
                      TIME?                        │
                         │ YES                     │
                         ▼          S93            ▼          S95
            ┌─────────────────────┐         ◇ INSTRUCTION       NO
            │  START ABSENCE      │            INPUT?     ─────────────┐
            │  TIMER CONTROL      │               │                    │
            └─────────────────────┘               │ YES                │
                         │                         ▼          S96       │
                         ▼          S94     ◇ INPUT THROUGH            │
         NO      ◇ INSTRUCTION         YES  ABSENCE TIMER BUTTON       │
        ◀─────────   INPUT?      ◀────────     RECEIVED?               │
                         │                         │ NO                 │
                         │ YES                     ▼          S97       │
                         ▼          S98     ┌──────────────────┐       │
            ┌─────────────────────┐         │ PERFORM NORMAL   │       │
            │ CANCEL ABSENCE      │         │ PROCESSING       │       │
            │ TIMER MODE SETTING  │         └──────────────────┘       │
            └─────────────────────┘                  │                 │
                         │                            └─────────────────┘
                         ▼
                  ┌──────────┐
                  │  RETURN  │
                  └──────────┘
```

FIG.32

| FIRST DAY | |
|---|---|
| 18:30 | BRIGHTNESS:<br>DIMMING RATIO OF 50%<br>COLOR:DAYLIGHT COLOR |
| 21:00 | BRIGHTNESS:<br>DIMMING RATIO OF 50%<br>COLOR:LIGHT COLOR |
| 23:30 | TURN-OFF |
| SECOND DAY | |
| 18:00 | BRIGHTNESS:<br>DIMMING RATIO OF 50%<br>COLOR:DAYLIGHT COLOR |
| 20:30 | BRIGHTNESS:<br>DIMMING RATIO OF 50%<br>COLOR:LIGHT COLOR |
| 23:00 | TURN-OFF |

FIG.33

```
            ┌─────────────────────────────┐
            │  BRIGHTNESS TURN-UP MODE    │
            └─────────────────────────────┘
                          │
                          ▼              S270
                  ╱───────────────╲
           NO    ╱                 ╲   YES
        ┌───────   KEEPING TIME?    ───────┐
        │        ╲                 ╱        │
        │         ╲───────────────╱         │
        ▼  S272                             │
  ┌──────────────┐                          │
  │  SET TIMER   │                          │
  └──────────────┘                          │
        │                                   │
        ▼  S274                             ▼  S276
  ┌──────────────────┐          ┌──────────────────┐
  │ TURN ON FOR TIME │          │ TURN ON FOR TIME │
  │ PERIOD T1 AT 125%│          │ PERIOD T2 AT 125%│
  └──────────────────┘          └──────────────────┘
        │                                   │
        └─────────────┬─────────────────────┘
                      ▼  S278
            ┌──────────────────────┐
            │ REDUCE LIGHT EMISSION│
            │ TO 104%              │
            └──────────────────────┘
```

FIG.34

# FIG.35

FIG.36

EP 2 608 639 A1

FIG.37

PWM PULSE
VALUE
(THE NUMBER
IN ONE CYCLE)

DIMMING RATIO

—— MEASURED
VALUE
—— CALCULATED
VALUE

1670

FIG.38

FIG.39

| | DIMMING RATIO (X) | ARITHMETIC EXPRESSION |
|---|---|---|
| | | APPROXIMATE EXPRESSION DERIVED FROM LED OUTPUT CHARACTERISTIC LINE |
| DAYLIGHT COLOR LED | 0 ~ 600 | $(1/2^{11})X^2+(1-1/2^2-1/2^5)X$ —(11) |
| | | $0.0005X^2 + 0.7074X$ |
| | 601 ~ 910 | $(1/2^9-1/2^{12})X^2-(1/2+1/2^3+1/2^5+1/2^9)X+384$ —(12) |
| | | $0.0017X^2-0.6582X+393.87$ |
| | 911 ~ 980 | $(3+1/2^3+1/2^4+1/2^6+1/2^7-1/2^{11})X-1713$ —(13) |
| | | $3.2104X-1713.5$ |
| | 981 ~ 1000 | $14X-12331$ —(14) |
| | | NO APPROXIMATE EXPRESSION |
| LIGHT COLOR LED | 0 ~ 825 | $(1/2^{12}-1/2^{15})X^2+(1-1/2+1/2^3)X$ |
| | | $0.0002X^2 + 0.6348X$ |
| | 826 ~ 970 | $(1/2^7-1/2^{10}-1/2^{11}+1/2^{14})X^2-(9+1/2+1/2^5)X+4164$ |
| | | $0.0064X^2-9.5415X+4164.3$ |
| | 971 ~ 999 | $(1/2^4-1/2^7+1/2^{10})X^2-(105+1/2^2-1/2^5)X+50642$ |
| | | $0.0558X^2-105.21X+50509$ |
| | 1000 | 1670 |
| | | NO APPROXIMATE EXPRESSION |

FIG.40

START

DIMMING RATIO 0 TO 60.0% — S70

NO → DIMMING RATIO 60.1 TO 91.0% — S76

NO → DIMMING RATIO 91.1 TO 98.0% — S80

NO → DIMMING RATIO 98.0 TO 100.0% — S84 → NO

YES → CALCULATE PWM PULSE VALUE BASED ON ARITHMETIC EXPRESSION (11) — S72

YES → CALCULATE PWM PULSE VALUE BASED ON ARITHMETIC EXPRESSION (12) — S78

YES → CALCULATE PWM PULSE VALUE BASED ON ARITHMETIC EXPRESSION (13) — S82

YES → CALCULATE PWM PULSE VALUE BASED ON ARITHMETIC EXPRESSION (14) — S86

OUTPUT PWM — S74

## FIG.41

```
        ┌─────────────────────────────┐
        │  COMMAND TRANSMISSION       │
        │  PROCESSING                 │
        └─────────────────────────────┘
                      │
                      ▼           ⌐S200
                  ╱─────────╲
                 ╱ INSTRUCTION ╲      YES
                ╱ FOR LIGHT      ╲─────────────────────┐
                ╲ ENVIRONMENT    ╱                     │
                 ╲ CONTROL?     ╱                      ▼        ⌐S202
                  ╲─────────╱              ┌──────────────────────────┐
                      │ NO                 │ TRANSMISSION DATA        │
                      │                    │ ← CONTROL COMMAND        │
                      ▼           ⌐S204    │ + CURRENT TIME           │
                  ╱─────────╲              └──────────────────────────┘
                 ╱           ╲      YES                 │
                ╱ TIMER SET?  ╲─────────────┐           │
                ╲             ╱             ▼   ⌐S206   │
                 ╲─────────╱      ┌──────────────────────┐
                      │ NO        │ TRANSMISSION DATA    │
          ⌐S208       │           │ ← CONTROL COMMAND    │
                      ▼           │ + CURRENT TIME       │
        ┌─────────────────────┐  └──────────────────────┘
        │ TRANSMISSION DATA   │             │           │
        │ ← ONLY CONTROL      │             │           │
        │   COMMAND           │             │           │
        └─────────────────────┘             │           │
                      │◄────────────────────┴───────────┘
                      ▼           ⌐S210
        ┌─────────────────────┐
        ║ DATA TRANSMISSION   ║
        ║ PROCESSING          ║
        └─────────────────────┘
                      │
                      ▼
                ┌──────────┐
                │   END    │
                └──────────┘
```

## INTERNATIONAL SEARCH REPORT

| International application No. |
| --- |
| PCT/JP2011/068362 |

| A. CLASSIFICATION OF SUBJECT MATTER |
| --- |
| *H05B37/02*(2006.01)i |

According to International Patent Classification (IPC) or to both national classification and IPC

| B. FIELDS SEARCHED |
| --- |

Minimum documentation searched (classification system followed by classification symbols)
H05B37/02

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

| C. DOCUMENTS CONSIDERED TO BE RELEVANT |
| --- |

| Category* | Citation of document, with indication, where appropriate, of the relevant passages | Relevant to claim No. |
| --- | --- | --- |
| X<br>A | JP 2005-78882 A (Asahi Matsushita Electric Works Co., Ltd.),<br>24 March 2005 (24.03.2005),<br>entire text; all drawings<br>(Family: none) | 1,2,5<br>3,4 |
| A | JP 2009-224199 A (Seiko Epson Corp.),<br>01 October 2009 (01.10.2009),<br>(Family: none) | 1-5 |

☐ Further documents are listed in the continuation of Box C.  ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 02 November, 2011 (02.11.11) | 15 November, 2011 (15.11.11) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005078834 A